(19) 

**Europäisches Patentamt**
**European Patent Office**
**Office européen des brevets**

(11) **EP 4 691 614 A1**

(12) **EUROPEAN PATENT APPLICATION**
published in accordance with Art. 153(4) EPC

(43) Date of publication:
**11.02.2026 Bulletin 2026/07**

(21) Application number: **24780944.5**

(22) Date of filing: **01.04.2024**

(51) International Patent Classification (IPC):
$B01D\ 71/02^{(2006.01)}$    $B01D\ 69/00^{(2006.01)}$
$B01D\ 69/02^{(2006.01)}$    $B01D\ 69/10^{(2006.01)}$
$B01D\ 69/12^{(2006.01)}$    $C01B\ 39/04^{(2006.01)}$
$C01B\ 39/48^{(2006.01)}$

(52) Cooperative Patent Classification (CPC):
**B01D 69/00; B01D 69/02; B01D 69/10;**
**B01D 69/12; B01D 71/02; C01B 39/04; C01B 39/48**

(86) International application number:
**PCT/JP2024/013530**

(87) International publication number:
**WO 2024/204852 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.03.2023 JP 2023059392**
            **31.03.2023 JP 2023059393**

(71) Applicant: **Mitsubishi Chemical Corporation**
**Tokyo 100-8251 (JP)**

(72) Inventors:
• **HARADA, Naoki**
 **Tokyo 100-8251 (JP)**
• **HAYASHI, Mikio**
 **Tokyo 100-8251 (JP)**
• **IKEDA, Sunao**
 **Tokyo 100-8251 (JP)**
• **MORI, Kiyofumi**
 **Tokyo 100-8251 (JP)**
• **HISADA, Yuki**
 **Tokyo 100-8251 (JP)**

(74) Representative: **Hoffmann Eitle**
**Patent- und Rechtsanwälte PartmbB**
**Arabellastraße 30**
**81925 München (DE)**

(54) **POROUS SUPPORT-ZEOLITE FILM COMPOSITE, METHOD FOR PRODUCING PURIFIED COMPONENT, AND METHOD FOR PRODUCING PURIFIED ORGANIC COMPOUND**

(57) An object of an aspect of the present invention is to provide a porous support-zeolite membrane composite having excellent separation performance. A porous support-zeolite membrane composite in accordance with an aspect of the present invention has a $CF_4$ permeance of not more than $5.0 \times 10^{-9}$ mol/(m²·s·Pa), and the zeolite membrane has a thickness of not more than 15 μm.

EP 4 691 614 A1

## Description

Technical Field

The present invention relates to a porous support-zeolite membrane composite, a purified component production method, and a purified organic compound production method.

Background Art

In order to separate water from water-containing organic compounds, which are mixtures of water and organic compounds such as organic solvents, to concentrate the organic compounds, methods such as membrane separation, distillation, azeotropic distillation, solvent extraction/distillation, and adsorbent-based separation are employed. Among these, membrane separation using zeolite membranes has advantages in that, besides a low energy usage as compared with the other methods, the ranges of applicable substances and temperatures for separation and concentration are wide as compared with membrane separation using polymer membranes. Furthermore, in gas separation such as separating carbon dioxide from a mixed gas of carbon dioxide and methane to concentrate the methane, separation methods such as membrane separation, adsorption separation, absorption separation, distillation, and cryogenic separation are used. Even in gas separation, membrane separation using zeolite membranes enables energy-efficient separation as compared to other separation methods, and provides a broad applicability as compared to polymer membranes.

As a separation method for mixtures of organic substance-containing gases or liquids, a concentration method carried out via membrane separation using inorganic material membranes such as zeolite membranes. Typically, zeolite membranes are used in such separation method in the form of zeolite membrane composites in which a zeolite membrane is formed on a porous support. As such zeolite membrane composites, a CHA-type zeolite separation membrane with a high degree of specific crystal orientation intensity defined by an X-ray diffraction (XRD) pattern (e.g., Patent Document 1) and a zeolite separation membrane with high uniformity in the silica/alumina ratio (SAR) in the thickness direction of the membrane (e.g., Patent Document 2) are known.

Patent Literature 1 discloses an inorganic porous support-zeolite membrane composite, characterized in that the inorganic porous support contains a ceramic sintered body, and the composite has, on a surface of the inorganic porous support, a CHA-type zeolite crystal layer as the zeolite membrane.

Citation List

[Patent Literature]

> [Patent Literature 1]
> International Publication No. WO 2010/098473
> [Patent Literature 2]
> International Publication No. WO 2015/159986

Summary of Invention

Technical Problem

Although providing high separation selectivity in the membrane separation of water-containing organic compounds, the technique disclosed in Patent Literature 1 is susceptible to further improvement in the selectivity.

An object of an aspect of the present invention is to provide a porous support-zeolite membrane composite having excellent separation performance.

The zeolite membrane composite disclosed in Patent Literature 1 can achieve both processing capacity and separation performance that are practically sufficient in the separation and concentration carried out via inorganic material separation membranes. The zeolite membrane composite disclosed in Patent Literature 2 can have excellent acid resistance and water resistance and also have a sufficient permeation flux. Thus, the zeolite membrane composite disclosed in Patent Literature 2 is suitable for the separation of alcohols with a low number of carbon atoms or substances reactive with an acid site of a zeolite, such as electrophilic molecules.

Zeolite membrane composites are required to have both high separation characteristic and durability such as acid resistance, as a matter of course. However, typically, providing a zeolite membrane which has desired characteristics is not achieved by a mere combination of techniques, and is therefore actually difficult.

An aspect of the present invention is to provide an inorganic porous support-zeolite membrane composite which has excellent separation characteristic and excellent acid resistance.

Solution to Problem

In order for the above problem to be solved, the spirit of the present invention is as follows.

Aspect 1: a porous support-zeolite membrane composite, the porous support-zeolite membrane composite having a $CF_4$ permeance of not more than $5.0 \times 10^{-9}$ mol/($m^2 \cdot s \cdot Pa$), the zeolite membrane having a thickness of not more than 15 $\mu$m.

Aspect 2: a porous support-zeolite membrane composite which has a porous support and a zeolite membrane formed on the porous support, the porous support-zeolite membrane composite having an $SF_6$ permeability of not more than $4.5 \times 10^{-8}$ mol$\cdot\mu$m/($m^2 \cdot s \cdot Pa$), the zeolite membrane having a surface $SiO_2/Al_2O_3$ molar ratio of not less than 25.

Aspect 3: a porous support-zeolite membrane composite which has a porous support and a zeolite membrane formed on the porous support, the porous support-zeolite membrane composite having a $CF_4$ permeance of not more than $1.0 \times 10^{-9}$ mol/ ($m^2 \cdot s \cdot Pa$).

Aspect 4: the porous support-zeolite membrane composite described in any one of Aspects 1 to 3, in an X-ray diffraction pattern obtained by irradiating a surface of the zeolite membrane with X-rays at a minimum incident angle that allows the X-rays to pass through the zeolite membrane, an integrated intensity of a peak at around $2\theta=9.6°$ is not less than 6.0 times an integrated intensity of a peak at around $2\theta=20.8°$.

Aspect 5: the porous support-zeolite membrane composite described in Aspect 1 or 3, in which a surface $SiO_2/Al_2O_3$ molar ratio in a surface portion of the zeolite membrane is not less than 25.

Aspect 6: the porous support-zeolite membrane composite described in Aspect 2 or 3, in which the zeolite membrane has a thickness of not more than 15 $\mu$m.

Aspect 7: the porous support-zeolite membrane composite described in any one of Aspects 1 to 6, in which in an X-ray diffraction pattern obtained by irradiating a surface of the zeolite membrane with X-rays, a peak intensity $I_{111}$ at around $2\theta=17.9°$ is not less than 0.3 times but less than 1.0 times a peak intensity $I_{20-1}$ at around $2\theta=20.8°$.

Aspect 8: the porous support-zeolite membrane composite described in any one of Aspects 1 to 7, in which in an X-ray diffraction pattern obtained by irradiating a surface of the zeolite membrane with X-rays, a ratio $I_{100}/I_{20-1}$ of a peak intensity $I_{100}$ at around $2\theta=9.6°$ to a peak intensity $I_{20-1}$ at around $2\theta=20.8°$ is not less than 0.7 times.

Aspect 9: the porous support-zeolite membrane composite described in any one of Aspects 1 to 8, in which a ratio C/D of an $SiO_2/Al_2O_3$ molar ratio C in a surface portion of the zeolite membrane to an $SiO_2/Al_2O_3$ molar ratio D in a center portion of the zeolite membrane in a membrane thickness direction is less than 1.5.

Aspect 10: the porous support-zeolite membrane composite described in any one of Aspects 1 to 9, in which the zeolite membrane has a thickness of not less than 3 $\mu$m.

Aspect 11: the porous support-zeolite membrane composite described in any one of Aspects 1 to 10, in which the zeolite membrane has a thickness which has a minimum value of not less than 5 $\mu$m.

Aspect 12: the porous support-zeolite membrane composite described in any one of Aspects 1 to 11, in which the zeolite membrane is composed of CHA-type zeolite.

Aspect 13: a purified component production method, including: bringing a mixture of a first component and a second component into contact with the porous support-zeolite membrane composite described in any one of Aspects 1 to 12, to obtain a first purified component, a second purified component, or both, in which the first component permeates through the zeolite membrane of the porous support-zeolite membrane composite, the second component does not permeate through the zeolite membrane of the porous support-zeolite membrane composite, the first purified component is the first component that has permeated through the zeolite membrane, and the second purified component is the second component that has not permeated through the zeolite membrane.

Aspect 14: the purified component production method described in Aspect 13, in which both the first component and the second component are liquids.

Aspect 15: the purified component production method described in Aspect 13, in which both the first component and the second component are gases.

Aspect 16; the purified component production method described in Aspect 13, in which one of the first component and the second component is water, and the other is an organic compound.

Aspect 17: the purified component production method described in Aspect 13, in which one of the first component and the second component is water, and the other contains acid.

Aspect 18: a purified organic compound production method, including using a porous support-zeolite membrane composite which has a porous support and a zeolite membrane formed on the porous support, to obtain a purified organic compound from a mixture that contains an organic compound, in which said porous support-zeolite membrane composite is the porous support-zeolite membrane composite described in any one of Aspects 1 to 3.

Advantageous Effects of Invention

With an aspect of the present invention, it is possible to provide a porous support-zeolite membrane composite which has excellent separation performance.

Further, with an aspect of the present invention, it is possible to provide an inorganic porous support-zeolite membrane composite which has excellent separation characteristic and excellent acid resistance.

Brief Description of Drawings

Fig. 1 is a diagram for explaining a portion of a zeolite membrane of the present invention in the thickness direction.

Fig. 2 is a schematic view of the configuration of a device used in a gas permeability test in Examples.

Fig. 3 is a schematic view of the configuration of a device used in a pervaporation method in Examples.

Fig. 4 is a diagram illustrating an X-ray diffraction pattern of a membrane composite 1.

Fig. 5 is a diagram illustrating an X-ray diffraction pattern of a zeolite membrane of a membrane composite 2.

Fig. 6 is a diagram illustrating an X-ray diffraction pattern of a zeolite membrane of a membrane composite 3.

Fig. 7 is a schematic view of the configuration of a pervaporation measurement device.

Fig. 8 is a representation of a scanning electron micrograph of a surface of the zeolite membrane of the membrane composite 1 before acid immersion.

Fig. 9 is a representation of a scanning electron micrograph of the surface of the zeolite membrane of the membrane composite 1 after the acid immersion.

Fig. 10 is a representation of a scanning electron micrograph of a surface of the zeolite membrane of the membrane composite 2 before acid immersion.

Fig. 11 is a representation of a scanning electron micrograph of the surface of the zeolite membrane of the membrane composite 2 after the acid immersion.

Description of Embodiments

Embodiment 1

The following description will discuss Embodiment 1 of the present invention in detail.

In order to solve the above problem, the inventors of the present invention conducted diligent studies. As a result, the inventors found that a porous support-zeolite membrane composite that has an index which indicates the amount of defects present in a zeolite membrane and which is in a specific range exhibits excellent separation performance, thereby completing the present invention. The index is $CF_4$ permeance or $SF_6$ permeance, or a permeability, which is the product of the thickness of the zeolite membrane and the $CF_4$ permeance or the $SF_6$ permeance.

Hereinafter, embodiments of the present invention will be described in detail. Descriptions of constituent features described below are an example of an aspect of the present invention. The present invention is not limited to the descriptions, and can be implemented in various alterations within the scope of the spirit thereof. For a measurement device described in this specification, another measurement device capable of equivalent measurement and processing may be used instead.

[Porous support-zeolite membrane composite]

A porous support-zeolite membrane composite in accordance with an aspect of the present invention is a porous support-zeolite membrane composite which has a porous support and a zeolite membrane formed on the porous support, in which the $CF_4$ permeance or $SF_6$ permeance of the porous support-zeolite membrane composite is not more than $5.0 \times 10^{-9}$ mol/(m$^2$·s·Pa).

Instead of the $CF_4$ or $SF_6$ permeance being not more than $5.0 \times 10^{-9}$ mol/(m$^2$·s·Pa), the $CF_4$ or $SF_6$ permeability may be not more than $4.5 \times 10^{-8}$ mol·$\mu$m/(m$^2$·s·Pa).

Instead of the $CF_4$ or $SF_6$ permeance being not more than $5.0 \times 10^{-9}$ mol/(m$^2$·s·Pa), the $CF_4$ or $SF_6$ permeance may be not more than $1.0 \times 10^{-9}$ mol/(m$^2$·s·Pa).

A porous support-zeolite membrane composite in accordance with an aspect of the present invention provides a porous support-zeolite membrane composite having excellent separation performance. A porous support-zeolite membrane composite in accordance with an aspect of the present invention exhibits excellent separation performance as compared with those of conventional techniques, in particular in a case of separating and concentrating a water-containing organic mixture that has a low water content (e.g., not more than 5% by mass).

In the present specification, a "porous support-zeolite membrane composite" in accordance with an aspect of the present invention may be abbreviated simply as a "membrane composite".

The membrane composite has a porous support and a zeolite membrane formed on the porous support. Here are descriptions of non-limiting features of the porous support and the zeolite membrane.

(Porous support)

In an aspect of the present invention, a porous support is a member for supporting a zeolite membrane on its surface. In addition, the porous support may be a member for allowing a fluid such as a water-containing organic mixture, which is a mixture of water and an organic compound, to permeate into the porous structure thereof.

As the porous support, any object (inorganic porous support) that has the chemical stability to allow zeolite to crystallize in membrane form on a surface, etc. thereof and that has an inorganic porous structure can be used. Examples of the porous support include: ceramic sintered bodies (ceramic support) such as silica, $\alpha$-alumina, $\gamma$-alumina, mullite, zirconia, titania, yttria, silicon nitride, and silicon carbide; sintered metals such as iron, bronze, and stainless; other porous support such as glass and a carbon molded body; and any combination thereof.

Among there porous supports, an inorganic porous support including a ceramic sintered body obtained by sintering a ceramic, which is a solid material composed essentially or primarily of an inorganic non-metal substance is preferably employed. Such an inorganic porous support is preferable because the inorganic porous support partially undergoes zeolitization during zeolite membrane synthesis, thereby exerting an effect of enhancing the adhesion of the interface between the inorganic porous support and the zeolite membrane.

Examples of the ceramic sintered body include a ceramic sintered body which includes at least one selected from the group consisting of silica, $\alpha$-alumina, $\gamma$-alumina, mullite, zirconia, titania, yttria, silicon nitride, and silicon carbide. Among these ceramic sintered bodies, a ceramic sintered body which includes at least one selected from the group consisting of $\alpha$-alumina, $\gamma$-alumina, silica, and mullite is preferable. In particular, $\alpha$-alumina is most preferable from the perspective of being particularly chemically stable and inexpensive. Because such a ceramic sintered body easily partially undergoes zeolitization, the porous support is firmly coupled to the zeolite, and a membrane composite with high dense and high separation performance is easily formed.

The shape of the porous support is not particularly limited, provided that the shape makes it possible to effectively separate the mixture of liquids or the mixture of gases. Examples of the shape of the porous support include the shapes of: a flat plate; a tube; a column; a pipe; a cylinder; a honeycomb in which there are many circular columnar pores or angular columnar pores; and a monolith. From the perspective of increasing the effective area, the shapes of a cylinder, a honeycomb, and a monolith are preferable, and the shape of a cylinder is more preferable.

In an aspect of the present invention, a membrane composite is formed by the formation of a zeolite membrane on a surface, etc. of a porous support. Among the surfaces of the porous support, the zeolite membrane may be formed on any surface, or may be formed on more than one surface, depending on the shape of the porous support. For example, in a case where the porous support is cylindrical, the zeolite membrane may be formed on either a cylinder outer surface or a cylinder inner surface, or may be formed on both the cylinder outer surface and the cylinder inner surface. From the perspective of the permeation resistance of the membrane and ease of synthesis, formation on the outer surface is more preferable.

The average thickness (wall thickness) of the porous support is typically not less than 0.1 mm, preferably not less than 0.3 mm, and more preferably not less than 0.5 mm. When the average thickness of the porous support falls within such a numerical range, the membrane composite can have high mechanical strength. The average thickness of the porous support is typically not more than 7 mm, preferably not more than 5 mm, and more preferably not more than 3 mm. When the average thickness of the porous support falls within such a numerical range, the diffusion of a substance that has permeated through the membrane composite is promoted, and the permeation flow rate is improved.

The porous support has a porosity which is typically not less than 20%, preferably not less than 25%, and more preferably not less than 30%. When the porosity of the porous support falls within such a numerical range, the diffusion of a substance that has permeated through the membrane composite is promoted, and the permeation flow rate is improved. The porosity of the porous support is typically not more than 70%, preferably not more than 60%, and more preferably not more than 50%. When the porosity of the porous support falls within such a numerical range, the membrane composite can have high mechanical strength.

(Zeolite membrane)

In an aspect of the present invention, the zeolite membrane is a member for, in separating and concentrating a fluid mixture that contains a plurality of components, allowing some of the components contained in the mixture to permeate and preventing the remaining components from permeating to concentrate the remaining components.

The zeolite membrane is formed as zeolite membranous crystals on a surface of the porous support. The zeolite membranous crystals may be formed as a uniform single layer, or may be formed as a heterogeneous layer which is composed of a plurality of zeolite crystal grains and which has grain boundaries in the membrane.

The zeolite membrane is mainly present on the surface of the porous support, but may partially be drawn into the surface layer of the porous support to be present in the surface layer.

The zeolite membrane contains zeolite as a component thereof, and is formed by crystallization of the zeolite in membrane form. In addition to the zeolite, the zeolite membrane may include, as necessary, an inorganic binder, such as silica or alumina; an organic compound, such as a polymer; a Si atom-containing material (silylation agent) that modifies a zeolite surface, or a reaction product thereof; and any other substance. The zeolite membrane may also partially include an amorphous component. The zeolite membrane may also include a metal that is given on the surface thereof.

<SAR>

In the center portion of the zeolite membrane, the $SiO_2/Al_2O_3$ molar ratio (hereinafter, also referred to as "SAR") is typically not less than 5, preferably not less than 10, more preferably not less than 15, even more preferably not less than 18, particularly preferably not less than 20, and even more particularly preferably not less than 25, and typically not more than 70, preferably not more than 60, and more preferably not more than 50. When the $SiO_2/Al_2O_3$ molar ratio of the zeolite membrane is equal to or greater than the above-described lower limit, the zeolite membrane has good acid resistance. When the $SiO_2/Al_2O_3$ molar ratio of the zeolite membrane is equal to or smaller than the above-described upper limit, the zeolite membrane has good hydrophilicity, and exhibits a good permeation property with respect to water and carbon dioxide.

The $SiO_2/Al_2O_3$ molar ratio when measured from a surface of the zeolite membrane (hereinafter, also referred to as "surface SAR") is typically not less than 5, preferably not less than 10, more preferably not less than 15, even more preferably not less than 18, particularly preferably not less than 20, and even more particularly preferably not less than 25, and typically not more than 70, preferably not more than 60, and more preferably not more than 50. When the $SiO_2/Al_2O_3$ molar ratio of the zeolite membrane is equal to or greater than the above-described lower limit, the zeolite membrane has good acid resistance. When the $SiO_2/Al_2O_3$ molar ratio of the zeolite membrane is equal to or smaller than the above-described upper limit, the zeolite membrane has good hydrophilicity, and exhibits a good permeation property with respect to water and carbon dioxide.

In a membrane composite in accordance with an aspect of the present invention, the $SiO_2/Al_2O_3$ molar ratio of the zeolite membrane may be in a relatively low range, among the zeolites having an $SiO_2/Al_2O_3$ molar ratio of not less than 5, which are collectively referred to as high-silica. Typically, it has been considered that a low $SiO_2/Al_2O_3$ molar ratio leads to a fast crystallization speed and facilitates growth in a random orientation, and defects are therefore easily generated in the zeolite membrane. However, even in a case of having a relatively low $SiO_2/Al_2O_3$ molar ratio, the zeolite membrane included in a membrane composite in accordance with an aspect of the present invention has fewer defects, as indicated by, for example, the $CF_4$ permeance and $SF_6$ permeance, or the $CF_4$ or $SF_6$ permeability, which is an index of the amount of defects. Furthermore, as a result of having fewer defects, the amount of defects through which organic compounds permeate is reduced. However, because the pores of the zeolite that has a low $SiO_2/Al_2O_3$ molar ratio has high hydrophilicity, $H_2O$ molecules can easily permeate through the pores. Thus, a membrane composite in accordance with an aspect of the present invention exhibits excellent separation performance.

In particular, when the $SF_6$ or $CF_4$ permeability of the porous support-zeolite membrane composite is not more than $4.5 \times 10^{-8}$ mol·$\mu$m/(m$^2$·s·Pa), and the surface $SiO_2/Al_2O_3$ molar ratio of the zeolite membrane is not less than 25, it is possible to achieve both good permeation performance and good separation performance.

The $SiO_2/Al_2O_3$ molar ratio of the zeolite membrane described herein can be measured by scanning electron microscope-energy dispersive X-ray spectroscopy (SEM-EDX). In SEM-EDX, measurement is carried out with the acceleration voltage of an electron beam set at approximately 6 kV. With such a measurement, it is possible to determine the $SiO_2/Al_2O_3$ molar ratio of the zeolite membrane.

In the present specification, in a case of simply using the phrase "the $SiO_2/Al_2O_3$ molar ratio of the zeolite membrane", this phrase refers to the $SiO_2/Al_2O_3$ molar ratio in a center portion of a zeolite membrane. The "center portion of a zeolite membrane" will be described later in Embodiment 2.

<Framework structure>

The zeolite forming the zeolite membrane preferably has the pore structure of a not more than 12-membered oxygen ring, more preferably has the pore structure of a not more than 10-membered oxygen ring, even more preferably has the pore structure of a not more than 8-membered oxygen ring, and particularly preferably has the pore structure of a 6 to 8-membered oxygen ring. In the present specification, the value of n of the "n-membered oxygen ring" indicates the number of oxygen atoms in the pore that has the largest number of oxygen atoms among the pores composed of an oxygen and T-elements (elements other than oxygen, which form the framework) that form a zeolite framework. For example, in a case where there are pores of a 12-membered oxygen ring and pores of an 8-membered oxygen ring, such as an MOR-type zeolite, the zeolite is regarded as a zeolite with a 12-membered oxygen ring.

Examples of the zeolite having the pore structure of a not more than 12-membered oxygen ring include AEI, AEL, AFI, AFG, AFX, ANA, ATO, BEA, BRE, CAS, CDO, CHA, CON, DDR, DOH, EAB, EPI, ERI, ESV, EUO, FAR, FAU, FER, FRA, HEU, GIS, GIU, GME, GOO, ITE, KFI, LEV, LIO, LOS, LTA, LTL, LTN, MAR, MEP, MER, MEL, MON, MOR, MSO, MTF, MTN, MTW, MWF, MWW, NON, NES, OFF, PAU, PHI, RHO, RTE, RTH, RUT, SGT, SOD, STI, STT, TOL, TON, TSC, UFI, VNI, WEI, and YUG.

Examples of the zeolite having the pore structure of a not more than 10-membered oxygen ring include AEI, AEL, AFG, AFX, ANA, BRE, CAS, CDO, CHA, DDR, DOH, EAB, EPI, ERI, ESV, EUO, FAR, FER, FRA, HEU, GIS, GIU, GOO, ITE, KFI, LEV, LIO, LOS, LTA, LTN, MAR, MEP, MER, MEL, MON, MSO, MTF, MTN, MWF, MWW, NON, NES, PAU, PHI, RHO, RTE, RTH, RUT, SGT, SOD, STI, STT, TOL, TON, TSC, UFI, VNI, WEI, and YUG.

Examples of the zeolite having the pore structure of a not more than 8-membered oxygen ring include AEI, AFG, AFX, ANA, BRE, CAS, CDO, CHA, DDR, DOH, EAB, EPI, ERI, ESV, FAR, FRA, GIS, GIU, GOO, ITE, KFI, LEV, LIO, LOS, LTA, LTN, MAR, MEP, MER, MON, MSO, MTF, MTN, MWF, NON, PAU, PHI, RHO, RTE, RTH, RUT, SGT, SOD, TOL, TSC, UFI, VNI, and YUG.

Examples of the zeolite having the structure of a 6 to 8-membered oxygen ring include AEI, AFG, AFX, ANA, CHA, DDR, EAB, ERI, ESV, FAR, FRA, GIS, ITE, KFI, LEV, LIO, LOS, LTA, LTN, MAR, MWF, PAU, RHO, RTH, SOD, TOL, and UFI.

From the perspective of adjusting the zeolite pore size such that in the membrane composite, carbon dioxide can easily diffuse into the zeolite pores and hydrocarbon does not easily enter the pores, the structure which has a 6 to 8-membered oxygen ring structure and in which the pores are three-dimensionally connected with each other is preferable. Specifically, the structure of the principal zeolite forming the zeolite membrane is preferably AEI, AFG, AFX, CHA, DDR, EAB, ERI, ESV, FAR, FRA, GIS, ITE, KFI, LEV, LIO, LOS, LTN, MAR, PAU, RHO, RTH, SOD, TOL, and UFI, more preferably AEI, AFX, CHA, DDR, ERI, KFI, LEV, PAU, RHO, RTH, and UFI, even more preferably AFX, CHA, DDR, RHO, and MWF, particularly preferably AFX, CHA, DDR, or RHO, and most preferably CHA. In other words, the zeolite membrane is most preferably composed of CHA-type zeolite.

In the present specification, a zeolite membrane being composed of CHA-type zeolite does not exclude the zeolite membrane including a component other than zeolite or the zeolite membrane including any of zeolites except CHA, and typically means that the principal component of the zeolite membrane is CHA-type zeolite. For example, a zeolite membrane being composed of CHA-type zeolite means that the CHA-type zeolite content in the zeolite membrane is typically not less than 90% by mass, and preferably not less than 95% by mass. The CHA-type zeolite content in the zeolite membranes can be measured by the ratio of the integrated values of the peaks of XRD.

The pore structure of the zeolite can be selected from the pore structures specifically listed above, as appropriate, depending on the intended use of the membrane composite.

In the present specification, the structure of a zeolite is indicated by a code which specifies the structure of a zeolite and which is provided by the International Zeolite Association (IZA). For the attribution of X-ray diffraction patterns, COLLECTION OF SIMULATED XRD POWDER PATTERNS FOR ZEOLITE, Third Revised Edition, 2001 is employed.

<Orientation characteristics>

In a case where the zeolite membrane is composed of CHA-type zeolite, in an X-ray diffraction pattern obtained by irradiating a surface of the zeolite membrane with X-rays, the peak intensity $I_{111}$ at around $2\theta=17.9°$ may be typically not less than 0.30 times, preferably not less than 0.35 times, and more preferably not less than 0.40 times the peak intensity $I_{20-1}$ at around $2\theta=20.8°$, but typically less than 1.00 times, preferably less than 0.80 times, and more preferably less than 0.70 times the peak intensity $I_{20-1}$ at around $2\theta=20.8°$. When the peak intensity $I_{111}$ satisfies the above-described range, during the production of the membrane composite, defects generated in the zeolite membrane due to, for example, the thermal expansion during calcination is more reduced, and the membrane composite exhibits more excellent separation performance, accordingly. In the present specification the expression "at around" refers to the range of $\pm0.6°$ that centered on the numerical value put immediately after the expression.

In a case where the zeolite membrane is composed of CHA-type zeolite, in an X-ray diffraction pattern obtained by irradiating a surface of the zeolite membrane with X-rays, the peak intensity $I_{100}$ of $2\theta=9.6°\pm0.6°$ may be typically not less than 0.80 times, preferably not less than 0.90 times, more preferably not less than 1.00 times, and particularly preferably not less than 1.10 times the peak intensity $I_{20-1}$ of $2\theta=20.8°\pm0.6°$, and typically less than 4.00 times, preferably not more than 3.90 times, more preferably not more than 3.70 times, and particularly preferably not more than 3.50 times the peak intensity $I_{20-1}$ of $2\theta=20.8°\pm0.6°$. When the peak intensity $I_{100}$ satisfies the above-described range, during the production of the membrane composite, defects generated in the zeolite membrane due to, for example, the thermal expansion during calcination is reduced, and the membrane composite has more excellent separation performance, accordingly.

In a case where the zeolite membrane is composed of CHA-type zeolite, in an X-ray diffraction pattern obtained by irradiating a surface of the zeolite membrane with X-rays, the peak intensity $I_{100}$ at $2\theta=9.6°\pm0.6°$ may be typically not less than 0.70 times, preferably not less than 1.00 times, and more preferably not less than 1.50 times the peak intensity $I_{111}$ at $2\theta=17.9°\pm0.6°$, and typically not more than 10.0 times, preferably not more than 9.50 times, and more preferably not more than 9.00 times the peak intensity $I_{111}$ at $2\theta=17.9°\pm0.6°$. When the peak intensity $I_{111}$ satisfies the above-described range, during the production of the membrane composite, defects generated in the zeolite membrane due to, for example, the thermal expansion during calcination is reduced, and the membrane composite has more excellent separation performance, accordingly. When the membrane thickness is not less than 5 $\mu$m, not more than 5.00 times is preferable, not more than 4.50 times is more preferable, and not more than 4.00 times is even more preferable.

In the present embodiment, in a case where the zeolite membrane is composed of CHA-type zeolite, in an X-ray diffraction pattern obtained by irradiating a surface of the zeolite membrane with X-rays, the integrated intensity at around $2\theta=17.9°$ may be typically not less than 0.20 times, preferably not less than 0.30 times, and more preferably not less than 0.40 times the integrated intensity at around $2\theta=20.8°$, but typically less than 1.00 times, preferably less than 0.80 times, and more preferably less than 0.70 times the integrated intensity at around $2\theta=20.8°$.

In a case where the zeolite membrane is composed of CHA-type zeolite, in an X-ray diffraction pattern obtained by irradiating a surface of the zeolite membrane with X-rays, the integrated intensity at $2\theta=9.6°\pm0.6°$ may be typically not less than 1.50 times, preferably not less than 2.50 times, more preferably not less than 3.00 times, particularly preferably not less than 3.50 times, and most preferably not less than 5.00 times the integrated intensity at $2\theta=20.8°\pm0.6°$, and typically not more than 10.0 times, preferably not more than 9.00 times, more preferably not more than 8.00 times, and particularly preferably not more than 7.50 times the integrated intensity at $2\theta=20.8°\pm0.6°$.

In a case where the zeolite membrane is composed of CHA-type zeolite, in an X-ray diffraction pattern obtained by irradiating a surface of the zeolite membrane with X-rays, the integrated intensity at $2\theta=9.6°\pm0.6°$ may be typically not less than 3.00 times, preferably not less than 3.50 times, more preferably not less than 4.00 times, even more preferably not less than 5.00 times, particularly preferably not less than 6.50 times, and most preferably not less than 10.00 times the peak intensity at $2\theta=17.9°\pm0.6°$, and typically not more than 40.00 times, preferably not more than 30.00 times, and more preferably not more than 25.00 times the peak intensity at $2\theta=17.9°\pm0.6°$. When the integrated intensity ratio satisfies the above-described range, during the production of the membrane composite, defects generated in the zeolite membrane due to, for example, the thermal expansion during calcination is reduced, and the membrane composite has more excellent separation performance, accordingly. In particular, when the thickness is not more than 15 $\mu$m, the integrated intensity ratio is preferably not less than 3.00 and not more than 6.00 times.

In the present embodiment, in a case where the zeolite membrane is composed of CHA-type zeolite, in an X-ray diffraction pattern obtained by irradiating a surface of the zeolite membrane with X-rays, the peak intensity of the peak at around $2\theta=17.9°$ may be less than 0.50 times the peak intensity of the peak at around $2\theta=20.8°$ and the peak intensity of the peak at around $2\theta=9.6°$ may be not less than 2.0 times but less than 4.0 times the peak intensity of the peak at around $2\theta=20.8°$.

In a case where the zeolite membrane is composed of CHA-type zeolite, when in an X-ray diffraction pattern obtained by irradiating a surface of the zeolite membrane with X-rays, the peak intensity of the peak at around $2\theta=17.9°$ is less than 0.50 times the peak intensity of the peak at around $2\theta=20.8°$ and the peak intensity of the peak at around $2\theta=9.6°$ is not less than 2.0 times but less than 4.00 times the peak intensity of the peak at around $2\theta=20.8°$, in the X-ray diffraction pattern obtained by the irradiation with X-rays that reach the support, the above-described ratio of the peak intensity of the peak at around $2\theta=17.9°$ to the peak intensity of the peak at around $2\theta=20.8°$ indicates that zeolite crystals in the zeolite membrane grow with a sufficient degree of orientation, and a dense zeolite membrane having high separation performance is formed. From the perspective of formation of a dense zeolite membrane having high separation performance, in the X-ray diffraction pattern obtained by irradiation with the X-rays that reach the support, the ratio of the peak intensity of the peak at around $2\theta=17.9°$ to the peak intensity of the peak at around $2\theta=20.8°$ is more preferably not more than 0.49. The lower limit of the said ratio can be determined, as appropriate, from the perspective of sufficiently achieving the effect in the above perspective, and may be, for example, not less than 0.001.

In a case where the zeolite membrane is composed of CHA-type zeolite, when in an X-ray diffraction pattern obtained by irradiating a surface of the zeolite membrane with X-rays, the peak intensity of a peak at around $2\theta=17.9°$ is less than 0.50 times the peak intensity of a peak at around $2\theta=20.8°$, and the peak intensity of a peak at around $2\theta=9.6°$ is not less than 2.0 times but less than 4.00 times the peak intensity of a peak at around $2\theta=20.8°$, in the X-ray diffraction pattern obtained by irradiation with the X-rays that reach the inorganic porous support, the ratio of the peak intensity of a peak at around $2\theta=9.6°$ to the peak intensity of a peak at around $2\theta=20.8°$ preferably has a higher lower limit and a lower upper limit, from the perspective of formation of a dense zeolite membrane having high separation performance. For example, from the above perspective, in the X-ray diffraction pattern obtained by the irradiation with the X-rays that reach the support, the ratio of the peak intensity of the peak at around $2\theta=9.6°$ to the peak intensity of the peak at around $2\theta=20.8°$ is more preferably not less than 2.10, even more preferably not less than 2.30, and still more preferably not less than 2.50. From the above perspective, the said ratio is more preferably not more than 3.90, even more preferably not more than 3.80, and still more preferably not more than 3.70.

In the present embodiment, in a case where the zeolite membrane is composed of CHA-type zeolite, in an X-ray diffraction pattern obtained by irradiating a surface of the zeolite membrane with X-rays, the integrated intensity of a peak at around $2\theta=17.9°$ may be less than 0.50 times the integrated intensity of a peak at around $2\theta=20.8°$ and the integrated intensity of a peak at around $2\theta=9.6°$ may be not less than 2.0 times but less than 8.00 times the integrated intensity of a peak at around $2\theta=20.8°$.

In a case where the zeolite membrane is composed of CHA-type zeolite, when in an X-ray diffraction pattern obtained by irradiating a surface of the zeolite membrane with X-rays, the integrated intensity of a peak at around $2\theta=17.9°$ is less than 0.50 times the integrated intensity of a peak at around $2\theta=20.8°$, and the integrated intensity of a peak at around $2\theta=9.6°$ is not less than 2.00 times but less than 8.00 times the integrated intensity of a peak at around $2\theta=20.8°$, in a case where the zeolite membrane is composed of CHA-type zeolite, in the X-ray diffraction pattern obtained by irradiating a surface of the zeolite membrane with X-rays, the said ratio of the integrated intensity of a peak at around $2\theta=17.9°$ to the integrated intensity of a peak at around $2\theta=20.8°$ indicates zeolite crystals in the zeolite membrane grow with a sufficient degree of orientation, and a dense zeolite membrane having high separation performance is formed. From the perspective of formation of a dense zeolite membrane having high separation performance, in a case where the zeolite membrane is composed of CHA-type zeolite, in an X-ray diffraction pattern obtained by irradiating a surface of the zeolite membrane with X-rays, the ratio of the integrated intensity of a peak at around $2\theta=17.9°$ to the integrated intensity of a peak at around $2\theta=20.8°$ is more preferably not more than 0.49. The lower limit of the said ratio can be determined, as appropriate, from the perspective of sufficiently achieving the effect in the above perspective, and may be, for example, not less than 0.001.

In the present embodiment, in a case where the zeolite membrane is composed of CHA-type zeolite, when in an X-ray diffraction pattern obtained by irradiating a surface of the zeolite membrane with X-rays, the integrated intensity of a peak at around $2\theta=17.9°$ is less than 0.50 times the integrated intensity of a peak at around $2\theta=20.8°$, and the integrated intensity of a peak at around $2\theta=9.6°$ is not less than 2.00 times but less than 8.00 times the integrated intensity of a peak at around $2\theta=20.8°$, in a case where the zeolite membrane is composed of CHA-type zeolite, in an X-ray diffraction pattern obtained by irradiating a surface of the zeolite membrane with X-rays, the ratio of the integrated intensity of a peak at around $2\theta=9.6°$ to the integrated intensity of a peak at around $2\theta=20.8°$ preferably has a higher lower limit and a lower upper limit, from the perspective of formation of a dense zeolite membrane having high separation performance. For example, in a case where the zeolite membrane is composed of CHA-type zeolite, in an X-ray diffraction pattern obtained by irradiating a surface of the zeolite membrane with X-rays, the ratio of the integrated intensity of a peak at around $2\theta=9.6°$ to the integrated intensity of a peak at around $2\theta=20.8°$ is more preferably not less than 2.1, even more preferably not less than 2.3, and still more preferably not less than 2.5, from the above perspective. Furthermore, from the above perspective, the ratio is more preferably not more than 7.50, and even more preferably not more than 7.00.

In the present specification, the X-ray diffraction (XRD) pattern refers to a diffraction pattern obtained by irradiating, via the parallel beam method, a surface of the zeolite membrane of a membrane composite with X-rays using CuK$\alpha$ as a radiation source, with the scanning axis set at $\theta/2\theta$. The shape of a sample to be measured is not particularly limited, but as the shape that represents the characteristics of a membrane composite well, the shape of the membrane composite as produced, or the shape obtained by cutting to an appropriate size that is limited by a measurement device is preferable.

In the present specification, a peak intensity refers to a value obtained by subtracting the value of background from the measurement value of intensity. The peak intensity $I_{100}$ at around $2\theta=9.6°$ refers to the largest peak intensity among the peaks present in the range of $9.6°\pm0.6°$, and is the intensity of the peak that mainly originates from the (1,0,0) index plane in the zeolite structure. The peak intensity $I_{111}$ at around $2\theta=17.9°$ refers to the largest peak intensity among the peaks present in the range of $17.9°\pm0.6°$, and is the intensity of the peak that mainly originates from the (1,1,1) index plane in the zeolite structure. The peak intensity $I_{20-1}$ at around $2\theta=20.8°$ refers to the largest peak intensity among the peaks present in the range of $20.8°\pm0.6°$, and is the intensity of the peak that mainly originates from the (2,0,-1) index plane in the zeolite structure.

In the present specification, an integrated intensity refers to a value calculated by subtracting the value of background from the measurement value of intensity. The integrated intensity $I_{100}$ of a peak at around $2\theta=9.6°$ refers to the largest integrated peak intensity among the peaks present in the range of $9.6°\pm0.6°$, and is the integrated intensity of the peak that mainly originates from the (1,0,0) index plane in the zeolite structure. The integrated intensity $I_{111}$ of a peak at around $2\theta=17.9°$ refers to the largest integrated peak intensity among the peaks present in the range of $17.9°\pm0.6°$, and is the integrated intensity of the peak that mainly originates from the (1,1,1) index plane in the zeolite structure. The integrated intensity $I_{20-1}$ of a peak at around $2\theta=20.8°$ refers to the largest integrated peak intensity among the peaks present in the range of $20.8°\pm0.6°$, and is the intensity of the peak that mainly originates from the (2,0,-1) index plane in the zeolite structure.

<Orientation characteristics on outer side of support>

In the present embodiment, in an X-ray diffraction pattern obtained by irradiating a surface of the zeolite membrane with X-rays at the minimum incident angle that allows the X-rays to pass through the zeolite membrane, the integrated intensity of a peak at around $2\theta=9.6°$ may be not less than 6.0 times the integrated intensity of a peak at around $2\theta=20.8°$.

The "minimum incident angle that allows the X-rays to pass through the zeolite membrane" is the irradiation angle of the X-rays at which peaks specific to the zeolite membrane are detected when the X-ray irradiation angle with respect to the zeolite membrane is varied, and is the X-ray irradiation angle at one of the following timings:

· when a peak specific to the support is no longer detected; and
· when a peak specific to the support is detected for the first time.
That is, in this case, measurement is carried out under narrow conditions where the support is not detected, it is possible to know the orientation of only a portion of the membrane which is on the outer side of the support.

In the X-ray diffraction pattern obtained by the irradiation with the X-rays at the minimum incident angle, a high ratio of the integrated intensity of a peak at around $2\theta=9.6°$ to the integrated intensity of a peak at around $2\theta=20.8°$ is considered to mean that, for example, a larger number of zeolite crystals are oriented and grow such that when the CHA structure is in the rhombohedral setting, the (1,0,0) plane is oriented approximately parallel to a surface of the membrane composite. From the perspective of increasing separation performance of a zeolite membrane and obtaining a dense zeolite membrane, it is advantageous for zeolite crystals to be oriented and grow in the membrane composite. From such perspectives, the above ratio is preferably higher, typically not less than 6.0 times, preferably not less than 6.3 times, more preferably not less than 6.5 times, even more preferably not less than 6.7 times, and particularly preferably not less than 7.0 times. In particular, not less than 10 times is more preferable, not less than 12 times is even more preferable, not less than 15 times is particularly preferable, and not less than 20 is most preferable. The upper limit of the above ratio can be determined, as appropriate, from the perspective of sufficient achievement of the effects in the above perspectives, and may be, for example, not more than 100 times.

In the X-ray diffraction pattern obtained by the irradiation with the X-rays at the minimum incident angle, a high ratio of the integrated intensity of a peak at around $2\theta=9.6°$ to the integrated intensity of a peak at the $2\theta=16.2°$ is considered to mean that, for example, a larger number of zeolite crystals are oriented and grow such that when the CHA structure is in the rhombohedral setting, the (1,0,0) plane is oriented approximately parallel to a surface of the membrane composite. From the perspective of increasing separation performance of a zeolite membrane and obtaining a dense zeolite membrane, it is advantageous for zeolite crystals to be oriented and grow in the membrane composite. From such perspectives, the above ratio is preferably higher, typically not less than 6.0 times, preferably not less than 6.5 times, more preferably not less than 7.0 times, even more preferably not less than 7.5 times, particularly preferably not less than 8.0 times, and most preferably not less than 10.0 times. The upper limit of the above ratio can be determined, as appropriate, from the perspective of sufficient achievement of the effects in the above perspectives, and may be, for example, not more than 100 times.

The integrated intensities at the peaks in the X-ray diffraction pattern obtained by the irradiation with the X-rays at the minimum incident angle can be measured by grazing incidence X-ray diffraction (GIXD). The integrated peak intensities can be adjusted by changing a condition for forming the zeolite membrane, and can be adjusted, for example, by changing the amount of seed crystals adhered during formation of the zeolite membrane through hydrothermal synthesis.

Note that the integrated intensities at the peaks in the X-ray diffraction pattern obtained by the irradiation with the X-rays at the minimum incident angle are values obtained from measurement carried out at least one location on the membrane.

<Membrane thickness>

The thickness of the zeolite membrane is typically not less than 2 $\mu$m, preferably not less than 3 $\mu$m, more preferably not less than 5 $\mu$m, even more preferably not less than 7 $\mu$m, and particularly preferably not less than 9 $\mu$m. When the thickness of the zeolite membrane falls within such a numerical range, the membrane composite has high strength and permeation selectivity, and can suitably be used for separation and concentration for a mixture. There is no particular upper limit for the thickness of the zeolite membrane, but the thickness of the zeolite membrane is typically not more than 30 $\mu$m, preferably not more than 25 $\mu$m, more preferably not more than 20 $\mu$m, and even more preferably not more than 15 $\mu$m. When the thickness of the zeolite membrane falls within such a numerical range, the membrane in the membrane composite is sufficiently formed so that high separation performance is exhibited, and in addition, the membrane composite exhibits high permeation flux. Thus, the membrane composite can suitably be used for separation and concentration for a mixture. In a case of use in the separation of gases in a mixture, the membrane thickness is preferably not more than 5.0 $\mu$m, more preferably not more than 4.0 $\mu$m, even more preferably not more than 3.5 $\mu$m, and particularly preferably not more than 3.0 $\mu$m.

When the thickness of the zeolite membrane is thick, a component of an aqueous reaction mixture that has a high reaction rate is preferentially consumed during the growth of the membrane. Thus, the composition of the aqueous reaction mixture changes over time, and the SAR in the thickness direction of the zeolite membrane can change. It is therefore necessary to select an appropriate membrane thickness based on the structure of a desired zeolite membrane.

In a case where the $CF_4$ permeance of the porous support-zeolite membrane composite is not more than $5.0 \times 10^{-9}$ mol/(m$^2$·s·Pa), and the thickness of the zeolite membrane is not more than 15 $\mu$m, the porous support-zeolite membrane composite has, in particular, good permeation performance and separation performance.

In a membrane composite in accordance with an aspect of the present invention, the thickness of the zeolite membrane may be relatively thicker than those of conventional techniques. Generally, it has been considered that when the thickness of the membrane is thick, defects in the zeolite membrane are likely to occur. However, despite having a relatively thick membrane, a zeolite membrane composite in accordance with an aspect of the present invention, which has a certain orientation characteristic, is prevented from cracking during calcination, and has fewer defects, as indicated by the index of the amount of defects, which is, for example, the $CF_4$ permeance or $SF_6$ permeance, or the permeability, which is the product of the $CF_4$ permeance or the $SF_6$ permeance and a membrane thickness. On the other hand, in a membrane composite in accordance with an aspect of the present invention, even in a case of a zeolite membrane which has a relatively small thickness, by designing the membrane to have a certain orientation characteristic, the membrane can be formed so as to be dense, and has fewer defects, as indicated by the index of the amount of defects, which is, for example, the $CF_4$ permeance or $SF_6$ permeance, or the $CF_4$ or $SF_6$ permeability, which is the product of the $CF_4$ permeance or the $SF_6$ permeance and a membrane thickness.

<Permeability characteristics of porous support-zeolite membrane composite>

The performance of a membrane composite in accordance with an aspect of the present invention can be expressed by using, as an index, a permeability characteristic of the membrane composite with respect to a liquid and gas.

When the measurement temperature is 50°C and the difference between pressures inside and outside the membrane of a membrane composite is 0.3 MPa, the $CF_4$ permeance of the membrane composite is typically not more than $5.0 \times 10^{-9}$ mol/(m$^2$·s·Pa), preferably not more than $3.5 \times 10^{-9}$ mol/(m$^2$·s·Pa), more preferably not more than $3.0 \times 10^{-9}$ mol/(m$^2$·s·Pa), even more preferably not more than $1.5 \times 10^{-9}$ mol/(m$^2$·s·Pa), particularly preferably not more than $1.0 \times 10^{-9}$ mol/(m$^2$·s·Pa), and most preferably not more than $5.0 \times 10^{-10}$ mol/(m$^2$·s·Pa). In particular, the $CF_4$ permeance is not more than $1 \times 10^{-10}$ mol/(m$^2$·s·Pa), more preferably not more than $5.0 \times 10^{-11}$ mol/(m$^2$·s·Pa), and more preferably not more than $3.0 \times 10^{-11}$ mol/(m$^2$·s·Pa). When the $CF_4$ permeance of the membrane composite falls within such a numerical range, defects which are present in the membrane composite and through which organic compound molecules permeate are reduced. Thus, the membrane composite has more excellent separation performance.

The $CO_2$ permeance of the membrane composite may be not more than $3.0 \times 10^{-4}$ mol/(m$^2$·s·Pa). Regarding the lower limit of the $CO_2$ permeance of the membrane composite, the said $CO_2$ permeance may be, for example, not less than $1.0 \times 10^{-9}$ mol/(m$^2$·s·Pa), not less than $1.0 \times 10^{-8}$ mol/(m$^2$·s·Pa), or not less than $1.0 \times 10^{-7}$ mol/(m$^2$·s·Pa). When the $CO_2$ permeance of the membrane composite is between such upper and lower limits, the membrane composite exhibits a suitable permeation flux in gas separation.

The $CH_4$ permeance of the membrane composite may be typically not more than $1.0 \times 10^{-8}$ mol/(m$^2$·s·Pa), preferably not more than $5.0 \times 10^{-9}$ mol/(m$^2$·s·Pa), more preferably not more than $2.5 \times 10^{-9}$ mol/(m$^2$·s·Pa), and even more preferably not more than $2.0 \times 10^{-9}$ mol/(m$^2$·s·Pa). When the $CH_4$ permeance of the membrane composite falls within such a numerical range, the defects present in the membrane composite are reduced. Thus, the membrane composite can have more excellent separation performance.

The lower limit of the $N_2$ permeance of the membrane composite is not particularly limited, but the $N_2$ permeance may be, for example, typically not less than $1.0 \times 10^{-9}$ mol/(m$^2$·s·Pa), preferably not less than $1.0 \times 10^{-8}$ mol/(m$^2$·s·Pa), and more preferably not less than $1.0 \times 10^{-7}$ mol/(m$^2$·s·Pa). When the $N_2$ permeance of the membrane composite is between such an upper and lower limit, the membrane composite exhibits a suitable permeation flux in gas separation.

The lower limit of the He permeance of the membrane composite is not particularly limited, but the He permeance may be, for example, preferably not less than $5.0 \times 10^{-9}$ mol/(m$^2$·s·Pa), more preferably not less than $5.0 \times 10^{-8}$ mol/(m$^2$·s·Pa), and even more preferably not less than $1.0 \times 10^{-7}$ mol/(m$^2$·s·Pa). When the He permeance of the membrane composite is between such upper and lower limits, the membrane composite exhibits a suitable permeation flux in gas separation.

The lower limit of the $H_2$ permeance of the membrane composite is not particularly limited, but the $H_2$ permeance may be, for example, preferably not less than $1.0 \times 10^{-9}$ mol/(m$^2$·s·Pa), more preferably not less than $1.0 \times 10^{-8}$ mol/(m$^2$·s·Pa), even more preferably not less than $1.0 \times 10^{-7}$ mol/(m$^2$·s·Pa), and particularly preferably not less than

$1.2 \times 10^{-7}$ mol/(m$^2$·s·Pa). When the H$_2$ permeance of the membrane composite is between such an upper and lower limit, the membrane composite exhibits a suitable permeation flux in gas separation.

When the measurement temperature is 50°C and the difference between pressures inside and outside the membrane of a membrane composite is 0.3 MPa, the SF$_6$ permeance of the membrane composite is typically not more than $5.0 \times 10^{-9}$ mol/(m$^2$·s·Pa), preferably not more than $3.5 \times 10^{-9}$ mol/(m$^2$·s·Pa), more preferably not more than $3.0 \times 10^{-9}$ mol/(m$^2$·s·Pa), even more preferably not more than $1.5 \times 10^{-9}$ mol/(m$^2$·s·Pa), particularly preferably not more than $1.0 \times 10^{-9}$ mol/(m$^2$·s·Pa), and most preferably not more than $5.0 \times 10^{-10}$ mol/(m$^2$·s·Pa). In particular, the CF$_4$ permeance is not more than $1 \times 10^{-10}$ mol/(m$^2$·s·Pa), more preferably not more than $5.0 \times 10^{-11}$ mol/(m$^2$·s·Pa), and more preferably not more than $3.0 \times 10^{-11}$ mol/(m$^2$·s·Pa). When the SF$_6$ permeance of the membrane composite falls within such a numerical range, the defective permeation of the organic compound molecules present in the membrane composite is reduced. Thus, the membrane composite has more excellent separation performance.

In the present specification, the gas A permeance (the degree to which the membrane composite allows permeation) of the membrane composite refers to a value $n_A / (p_1 - p_2)$ obtained by dividing The molar number $n_A$ (mol/(m$^2$·s)), per unit area of a membrane composite and per unit time, of gas A that permeates through the membrane composite, by the difference (Pa) between a partial pressure $p_1$ on the gas A supply side and a partial pressure $p_2$ on the gas A permeation side. In the present specification, unless otherwise stated, the value of the gas A permeance refers to a value measured under the condition where the temperature is 50°C, and the partial pressure on the gas A supply side is 0.1 MPaG.

[Permeability coefficient]

While the CF$_4$ permeance or the SF$_6$ permeance of the membrane composite can be regarded as an index of the amount of defects, it is further preferable to in a case where the performance of the entire membrane composite is considered, additionally take into account a membrane thickness, which is related to the permeation resistance. Thus, in the present embodiment, a permeability, which is the product of the CF$_4$ permeance or the SF$_6$ permeance of the membrane composite and the thickness of the zeolite membrane, may be employed as the measure of the amount of defects in the membrane composite. In a case where the type of zeolite forming the zeolite membrane is CHA-type zeolite (described later), when the measurement temperature is 50°C and the difference between pressures inside and outside the membrane is 0.3 MPa, the CF$_4$ permeability of the membrane composite may be typically not more than $4.5 \times 10^{-8}$ (mol·μm)/(m$^2$·s·Pa), preferably not more than $3.5 \times 10^{-8}$ (mol·μm)/(m$^2$·s·Pa), and more preferably not more than $3.0 \times 10^{-8}$ (mol·μm)/(m$^2$·s·Pa), and may be even more preferably not more than $2.0 \times 10^{-8}$ (mol·μm)/(m$^2$·s·Pa), particularly preferably not more than $1.0 \times 10^{-8}$ (mol·μm)/(m$^2$·s·Pa), and most preferably $5.0 \times 10^{-9}$ (mol·μm)/(m$^2$·s·Pa).

In a case where the type of zeolite forming the zeolite membrane is CHA-type zeolite (described later), when the measurement temperature is 50°C and the difference between pressures inside and outside the membrane is 0.3 MPa, the SF$_6$ permeability of the membrane composite may be typically not more than $4.5 \times 10^{-8}$ (mol·μm)/(m$^2$·s·Pa), preferably not more than $3.5 \times 10^{-8}$ (mol·μm)/(m$^2$·s·Pa), and more preferably not more than $3.0 \times 10^{-8}$ (mol·μm)/(m$^2$·s·Pa), and may be even more preferably not more than $2.0 \times 10^{-8}$ (mol·μm)/(m$^2$·s·Pa), particularly preferably not more than $1.0 \times 10^{-8}$ (mol·μm)/(m$^2$·s·Pa), and most preferably $5.0 \times 10^{-9}$ (mol·μm)/(m$^2$·s·Pa).

When the permeability of the membrane composite falls within such a numerical range, the defects present in the membrane composite are reduced. Thus, the membrane composite has more excellent separation performance. Note that the above values may be values with respect to the membrane composite before modifications to the membrane composite, such as ion exchange treatment and silylation treatment to the membrane composite, are carried out after the removal of an organic template in a case where the membrane composite was synthesized in the presence of the organic template, or after synthesis in a case where the membrane composite was synthesized in the absence of an organic template.

[Method for producing porous support-zeolite membrane composite]

In the present specification, the "method for producing a porous support-zeolite membrane composite" in accordance with an aspect of the present invention may be shortened as "method for producing a membrane composite." Here are descriptions of the members and functions of a method for producing a membrane composite in accordance with an aspect of the present invention. Items different from those of the membrane composite in accordance with an aspect of the present invention are described, and the items already described with respect to the membrane composite in accordance with an aspect of the present invention are not repeated here.

A method for producing a membrane composite in accordance with an aspect of the present invention involves a support step and a hydrothermal synthesis step.

(Support step)

A support step is the step of causing zeolite seed crystals to be supported on a porous support. With the support step, the zeolite seed crystals, which serve as a seed for zeolite crystal growth in the subsequent hydrothermal synthesis step, are supported on a porous support in a suitable supported amount.

As the porous support, a porous support having characteristics identical to those of the porous support described above with respect to the membrane composite can be used. As an example, an inorganic porous support can be used as the porous support.

The average pore size of the porous support is preferably not less than 0.70 $\mu$m and not more than 1.70 $\mu$m. By using such a porous support, it is possible to produce a membrane composite which has excellent separation performance. The average pore size of the porous support is not particularly limited, but is typically not less than 0.70 $\mu$m, preferably not less than 1.00 $\mu$m, and more preferably not less than 1.20 $\mu$m, and typically not more than 1.70 $\mu$m, preferably not more than 1.50 $\mu$m, and more preferably not more than 1.30 $\mu$m. When the average pore size of the porous support falls within such a numerical range, during the production of the membrane composite, defects generated in the zeolite membrane due to, for example, the thermal expansion during hydrothermal synthesis step is reduced, and the membrane composite has more excellent separation performance, accordingly.

In the present specification, the average pore size of the porous support is a median diameter obtained by measurement carried out via the mercury intrusion porosimetry. The porosity of the porous support can also be measured via the mercury intrusion porosimetry.

As the zeolite seed crystals, zeolite grains having components and a pore structure identical to the components and the pore structure described above with respect to the zeolite membrane can be used. For example, the zeolite seed crystals preferably have an $SiO_2/Al_2O_3$ molar ratio of not less than 5 and not more than 70, and are preferably composed of CHA-type zeolite. By using such zeolite seed crystals, a membrane composite having excellent separation performance can be produced.

The average grain size of the zeolite seed crystals is typically not less than 0.50 $\mu$m, preferably not less than 0.60 $\mu$m, and more preferably not less than 0.70 $\mu$m. When the average grain size of the zeolite seed crystals falls within such a numerical range, the growth of the zeolite crystals in the subsequent hydrothermal synthesis step is more promoted, and a zeolite membrane having a preferable thickness is obtained. The average grain size of the zeolite seed crystals is typically not more than 1.60 $\mu$m, preferably not more than 1.40 $\mu$m, and more preferably not more than 1.20 $\mu$m. When the average grain size of the zeolite seed crystals falls within such a numerical range, pores in the surface layer of the porous support are more filled with the zeolite seed crystals. Thus, a membrane composite in which the zeolite membrane and the porous support more closely adhere to each other is obtained in the subsequent hydrothermal synthesis step.

In the present specification, the average grain size of the zeolite seed crystals refers to the grain size ($D_{50}$) corresponding to the cumulative 50% in a volume-based grain size distribution as determined via the laser diffraction scattering method.

The amount of zeolite seed crystals supported per unit area of the porous support is typically not less than 0.10 $g/m^2$, preferably not less than 0.30 $g/m^2$, and more preferably not less than 0.50 $g/m^2$. When the supported amount falls within such a numerical range, a sufficient amount of zeolite seed crystals are supported, and a zeolite membrane can be formed so as to sufficiently cover a surface of the porous support in the subsequent hydrothermal synthesis step. The amount of zeolite seed crystals supported per unit area of the porous support is typically not more than 3.0 $g/m^2$, preferably not more than 2.0 $g/m^2$, more preferably not more than 1.5 $g/m^2$, and even more preferably not more than 1.0 $g/m^2$. When the supported amount falls within such a numerical range, the grain boundaries which are formed in the subsequent hydrothermal synthesis step and which are present in the zeolite membrane is reduced, and defects generated at the grain boundaries are reduced, accordingly. Further, when the supported amount falls within such a numerical range, the orientation of the index (1,1,1) of the zeolite membrane formed in the subsequent hydrothermal synthesis step decreases, and defects in the zeolite membrane caused by the thermal expansion of the porous support, i.e., membrane cracking, are reduced.

A method for causing zeolite seed crystals to be supported on a porous support is not particularly limited, but examples thereof include: a dipping method of dispersing zeolite seed crystals in a solvent such as water and immersing a porous support in the dispersion, to adhere the zeolite seed crystals to the surface of the porous support; and a rubbing method of rubbing, on a surface of the porous support, a slurry obtained by mixing zeolite seed crystals with a solvent such as water. In particular, the dipping method is preferable because it is possible to suitably control the amount of zeolite seed crystals supported, and produce the membrane composites with high reproducibility.

The solvent in which to disperse the zeolite seed crystals is not particularly limited, but can be water or any of various organic solvents, and is preferably water. The dispersion may be adjusted in terms of its pH, by the addition of acid or alkali.

The amount of zeolite seed crystals to be dispersed is not particularly limited, but is typically not less than 0.01% by mass, preferably not less than 0.05% by mass, and more preferably not less than 0.1% by mass, and is typically not more than 3% by mass, preferably not more than 2.5% by mass, more preferably not more than 2.0% by mass, even more preferably not more than 1.5% by mass, and particularly preferably not more than 1% by mass, relative to the total mass of the dispersion. When the amount of zeolite seed crystals to be dispersed falls within such a numerical range, it is possible to easily cause the above described amount of zeolite seed crystals to be supported on the porous support.

(Hydrothermal synthesis step)

The hydrothermal synthesis step is the step of hydrothermal synthesis of a zeolite membrane on the porous support on which zeolite seed crystals are supported. With the hydrothermal synthesis step, a membrane composite which has a porous support and a zeolite membrane formed on the porous support is obtained.

A method for the hydrothermal synthesis is not particularly limited, but examples thereof include the method of sealing, in a heat-resistant container such as an autoclave, a porous support and a uniform aqueous reaction mixture that has adjusted composition and heating the same. The aqueous reaction mixture contains an Si element source, an Al element source, and water.

The Si element source and the Al element sources are not particularly limited. Examples of the Si element source include amorphous silica, colloidal silica, silica gel, sodium silicate, amorphous aluminosilicate gel, tetraethoxysilane (TEOS), and trimethylethoxysilane. From the perspective of dispersibility, solubility, and reactivity during mixing and crystal growth control during synthesis, the Si element source is preferably colloidal silica. Examples of the Al element include aluminum nitrate, aluminum oxide, and amorphous aluminosilicate gel. From a perspective similar to that for the Si element source, the Al element source is preferably aluminum hydroxide.

The ratio between the Si element source and the Al element source in the aqueous reaction mixture is typically expressed using the molar ratio between the oxides of the respective elements, i.e., the $SiO_2/Al_2O_3$ molar ratio.

The ratio between water and the Si element source in the aqueous reaction mixture is typically expressed using the molar ratio of water to $SiO_2$, i.e., the $H_2O/SiO_2$ molar ratio. The $H_2O/SiO_2$ molar ratio in the aqueous reaction mixture is typically not less than 10 and not more than 1,000, preferably not less than 30 and not more than 500, even more preferably not less than 40 and not more than 200, and particularly preferably not less than 50 and not more than 150. When the $H_2O/SiO_2$ molar ratio in the aqueous reaction mixture falls within such a numerical range, a formed zeolite membrane is a dense membrane and has excellent separation performance.

The aqueous reaction mixture may further contain an organic template (structure directing agent). When the aqueous reaction mixture contains an organic template, the structural selectivity with respect to a formed zeolite membrane is improved, and it is therefore possible to easily obtain a zeolite membrane having a desired pore structure. The organic template can be selected, as appropriate, according to the desired pore structure. Examples of the organic template are disclosed in the specification of US Patent No. 4544538 and the specification of US Patent Application Publication No. 2008/0075656 A1.

The aqueous reaction mixture may further contain an alkali source. Examples of the alkali source include: hydroxide ions, which are the counter anions of the organic template; alkali metal hydroxides, such as NaOH and KOH; and alkaline-earth metal hydroxides such as $Ca(OH)_2$. The type of alkali is not particularly limited, but can typically be selected from Na, K, Li, Rb, Cs, Ca, Mg, Sr, Ba, and any combination thereof, and is preferably Na or K, and more preferably K. The alkali may be a combination of Na and K.

The heating temperature in the hydrothermal synthesis step is not particularly limited, but is typically not less than 100°C, preferably not less than 120°C, and even more preferably not less than 150°C. When the heating temperature falls within such a numerical range, a more suitably crystallized zeolite membrane is obtained. The heating temperature is typically not more than 200°C, preferably not more than 190°C, and even more preferably not more than 180°C. When the heating temperature falls within such a numerical range, a zeolite membrane having a pore structure formed with higher structural selectivity is obtained.

The heating time in the hydrothermal synthesis step is not particularly limited, but is typically not less than 1 hour, preferably not less than 5 hours, and even more preferably not less than 10 hours. When the heating time falls within such a numerical range, a zeolite membrane having the crystals sufficiently grown is obtained. The heating time is typically not more than 10 days, preferably not more than 5 days, more preferably not more than 3 days, and even more preferably not more than 2 days. When the heating time falls within such a numerical range, a zeolite membrane having a pore structure formed with higher structural selectivity is obtained.

The combination of the heating temperature and the heating time in crystallizing the zeolite is preferably such that the heating temperature is between 170°C and 190°C and the heating time is 16 hours to 20 hours. When the combination of the heating temperature and the heating time for the crystallization falls within the above range, it is possible to achieve both high permeation performance and high separation performance. When the heating time falls within the above range, the crystals are sufficiently grown so as to be oriented in a direction approximately parallel to the surface of the membrane composite, a dense membrane is formed, and high separation performance is obtained. When the heating time falls within the above range, the intensity of the (1,1,1) orientation is in an appropriate range, and it is possible to enhance the separation performance. The (1,1,1) orientation is the orientation in which the direction of edges of the trigonal CHA-type zeolite grains in the zeolite membrane is perpendicular to the support, and also between the zeolite grains, the edges thereof face each other. When the intensity of the (1,1,1) orientation is high, the grains become intricate and dense. However, it is considered that in a case where the coefficients of thermal expansion of the support and the zeolite membrane differ during calcination, cracking occurs due to failure to alleviate the thermal expansion, and the separation performance deteriorates. It is therefore considered that by setting the intensity of the (1,1,1) orientation in an appropriate range, it is possible to reduce the cracking of the zeolite membrane and increase the separation performance.

When the heating time is less than 16 hours, crystal growth is insufficient, a dense membrane is not formed. This makes it less likely that high separation performance is obtained. By setting the heating time to more than 16 hours, it is possible to sufficiently grow the crystals, and form a dense membrane This makes it likely that high separation performance is obtained.

Furthermore, by setting the $H_2O/SiO_2$ molar ratio of the aqueous reaction mixture at less than 100, the reaction rate is increased, the orientation structure of the membrane is developed, and the separation performance is improved. The $H_2O/SiO_2$ molar ratio is preferably not more than 98, even more preferably not more than 96, and particularly preferably not more than 95.

The $SiO_2/Al_2O_3$ molar ratio of the seed crystals is not particularly limited, but is typically not less than 20, preferably not less than 25, more preferably not less than 28, and even more preferably not less than 30. The SAR of the seed crystals is typically not more than 100, preferably not more than 80, more preferably not more than 70, and even more preferably not more than 60. When the $SiO_2/Al_2O_3$ molar ratio of the seed crystals falls within such a range, the seed crystals partially dissolve, and are likely to be the starting points for the growth of the membrane.

The $(Na + K)/Al$ molar ratio in the aqueous reaction mixture is not particularly limited, but is typically not less than 2.0, preferably not less than 4.0, and even more preferably not less than 7.0. The upper limit is not particularly limited, but is not more than 40, preferably not more than 36, and even more preferably not more than 30. When the $(Na + K)/Al$ molar ratio fall within such a range, there is a sufficient amount of Na and K, which are introduced as counter cations of Al, and the growth of the zeolite sufficiently occurs. This makes it easier to form a dense membrane. Furthermore, when the $(Na + K)/Al$ molar ratio is not more than the above upper limit, the Si element source tends to be less soluble in the aqueous reaction mixture, and crystallization easily proceeds. This makes it easier to form a dense membrane.

The Na/K molar ratio of the aqueous reaction mixture is not particularly limited, but is typically not less than 0.05, preferably not less than 0.10, and even more preferably not less than 0.20, and typically not more than 0.80, preferably not more than 0.70, and even more preferably not more than 0.60. When this numerical value falls within such a range, the growth of the membrane is less likely to be in a random direction, and a dense membrane is easily obtained.

When the $SiO_2/Al_2O_3$ molar ratio of the aqueous reaction mixture is 5 to 40, the $(Na + K)/Al$ molar ratio is typically not less than 4.0, preferably not less than 6.0, and even more preferably not less than 7.0. The upper limit is not particularly limited, but is not more than 16.0, preferably not more than 15.0, and even more preferably not more than 14.0. The Na/K molar ratio of the aqueous reaction mixture is typically not less than 0.10, preferably not less than 0.12, even more preferably not less than 0.15, and the upper limit thereof is typically not more than 0.50, preferably not more than 0.45, and even more preferably not more than 0.40.

The amount of zeolite seed crystals supported per unit area of the porous support is typically not less than 0.10 $g/m^2$, preferably not less than 0.30 $g/m^2$, and more preferably not less than 0.50 $g/m^2$. In a case where the supported amount is within such a numerical range, a zeolite membrane can be formed such that a sufficient amount of zeolite seed crystals are supported in the $SiO_2/Al_2O_3$ molar ratio range, the $(Na + K)/Al$ molar ratio range, and the Na/K molar ratio range of the aqueous reaction mixture, and that sufficiently covers the surface of the porous support in a subsequent hydrothermal synthesis step. The amount of zeolite seed crystals supported per unit area of the porous support is typically not more than 3.0 $g/m^2$, preferably not more than 2.0 $g/m^2$, more preferably not more than 1.5 $g/m^2$, and even more preferably not more than 1.0 $g/m^2$.

In a case where the $SiO_2/Al_2O_3$ molar ratio of the aqueous reaction mixture is 40 to 150, the $(Na + K)/Al$ of the aqueous reaction mixture is typically not less than 2.0, preferably not less than 2.0, and even more preferably not less than 5.0. The upper limit is not particularly limited, but is not more than 14.0, preferably not more than 13.0, and even more preferably not more than 12.0. The Na/K molar ratio of the aqueous reaction mixture is typically not less than 0.25, preferably not less than 0.30, even more preferably not less than 0.35, and the upper limit thereof is typically not more than 0.70, preferably not more than 0.65, and even more preferably not more than 0.60.

The amount of the zeolite seed crystals supported per unit area of the porous support is typically not less than 0.10 $g/m^2$, preferably not less than 0.40 $g/m^2$, and more preferably not less than 0.60 $g/m^2$. When the supported amount falls within such a numerical range, a sufficient amount of zeolite seed crystals are supported in the ranges of the above $SiO_2/Al_2O_3$ molar ratio, $(Na + K)/Al$ molar ratio, and Na/K molar ratio. This makes it possible to form a zeolite membrane in a subsequent hydrothermal synthesis step such that the surface of the porous support is sufficiently covered. The amount of the zeolite seed crystals supported per unit area of the porous support is typically not more than 3.0 $g/m^2$, preferably not more than 2.5 $g/m^2$, more preferably not more than 2.0 $g/m^2$, and even more preferably not more than 1.5 $g/m^2$.

In the hydrothermal synthesis step, the reaction pressure is not particularly limited, but may be an autogenous pressure generated when the porous support and the aqueous reaction mixture sealed in a heat-resistant container are heated to the heating temperature described above, or may be a pressure applied by the addition of inert gas, such as nitrogen.

(Removal step)

A method for producing a membrane composite in accordance with an aspect of the present invention may further include a removal step after the hydrothermal synthesis step. The removal step is the step of removing impurities contained in a membrane composite. With the removal step, impurities including the organic template which can be contained in the membrane composite after the hydrothermal synthesis and which block the pores of the zeolite are removed, and membrane composites having more excellent permeance is obtained.

A method for the removal is not particularly limited, but examples thereof include a method of washing the membrane composite with water, and then carrying out calcination or extraction. The heating temperature and the heating time during the calcination can be set as appropriate.

The removal step may further include carrying out ion exchange after the removal of impurities.

[Purified organic compound production method]

A purified organic compound production method in accordance with an aspect of the present invention is a purified organic compound production method, including using a porous support-zeolite membrane composite which has a porous support and a zeolite membrane formed on the porous support, to obtain a purified organic compound from a mixture that contains an organic compound, and the $CF_4$ permeance or $SF_6$ permeance of the porous support-zeolite membrane composite is not more than $5.0 \times 10^{-9}$ mol/(m$^2$·s·Pa), or the $CF_4$ permeability or the $SF_6$ permeability of the porous support-zeolite membrane composite is not more than $4.5 \times 10^{-8}$ mol·$\mu$m/(m$^2$·s·Pa). In this case, the zeolite membrane may have a thickness of not more than 15 $\mu$m. With a purified organic compound production method in accordance with an aspect of the present invention, it is possible to separate, with high separation efficiency, a specific component from a fluid mixture containing a plurality of components at least one of which is an organic compound, and obtain, as one of the components included in the above-described fluid, it is possible to obtain a purified organic compound as one of the components that are contained in the fluid. A purified organic compound production method in accordance with an aspect of the present invention exhibits a high separation efficiency as compared to those of conventional techniques, particularly in a case of separating and concentrating a water-containing organic compound that has a low water content. Instead of the porous support-zeolite membrane composite having a $CF_4$ permeance of not more than $5.0 \times 10^{-9}$ mol/(m$^2$·s·Pa), the porous support-zeolite membrane composite may be such that the $SF_6$ or $CF_4$ permeability is not more than $4.5 \times 10^{-8}$ mol·$\mu$m/(m$^2$·s·Pa) and the zeolite membrane has an $SiO_2/Al_2O_3$ molar ratio of not less than 25. The characteristics of the zeolite membrane may include the features described above.

Here is a description of a purified organic compound production method in accordance with an aspect of the present invention. Items different from those of the membrane composite in accordance with an aspect of the present invention are described, and the items already described with respect to the membrane composite in accordance with an aspect of the present invention are not repeated here.

A purified organic compound production method in accordance with an aspect of the present invention is a method of bringing a fluid containing a plurality of components into contact with the membrane composite on one surface side thereof, and providing a difference in pressure between both surfaces of the membrane composite to selectively cause a substance having a higher ability to permeate through the zeolite membrane to permeate through the membrane composite toward another side of the membrane composite and to cause a substance having a lower ability to permeate through the zeolite membrane to concentrate on the contact side.

One of the separation mechanisms of the membrane composite is separation as molecular sieving. With a purified organic compound production method in accordance with an aspect of the present invention, it is possible to efficiently separate a component larger than the effective pore size of a molecular sieve from a component smaller than the said effective pore size. For example, in a case where the zeolite membrane is composed of CHA-type zeolite, an organic compound having a kinetic molecular diameter greater than the effective pore size 3.8 Å of the molecular sieve is efficiently separated from a water having a small kinetic molecular diameter.

One of the separation mechanisms of the membrane composite is separation using the difference in hydrophilicity between water and organic compounds. The membrane composite used in a purified organic compound production method in accordance with an aspect of the present invention exhibits high hydrophilicity due to its relatively low $SiO_2/Al_2O_3$ molar ratio, i.e., high $Al_2O_3$ content, and is highly permeable to water and carbon dioxide. Thus, with a purified organic compound production method in accordance with an aspect of the present invention, it is possible to efficiently separate water and an organic compound having higher hydrophobicity than water that are contained in a mixture.

Examples of an organic compound which is contained in a fluid and which is to be concentrated include: carboxylic acids such as acetic acid, propionic acid, formic acid, lactic acid, oxalic acid, tartaric acid, and benzoic acid; organic acids such as sulfonic acid, sulfinic acid, barbituric acid, uric acid, phenol, enol, diketone-type compounds, thiophenol, imides, oximes, aromatic sulfonamides, and primary and secondary nitro-compounds; alcohols such as methanol, ethanol, and isopropanol; ketones such as acetone and methyl isobutyl ketone; aldehydes such as acetaldehyde; ethers such as dioxane and tetrahydrofuran; organic compounds (N-containing organic compound) containing nitrogen of amides or the like such as dimethylformamide and N-methylpyrrolidone; and esters such as acetate ester. From the perspective of separating water with higher separation efficiency and obtaining purified organic compounds of higher purity, the organic compound is preferably at least one selected from the alcohols, and more preferably at least one selected from alcohols having not more than 3 carbon atoms (having carbon number of not more than 3).

In a case where the fluid is a water-containing organic mixture, the water content of the water-containing organic mixture is not particularly limited, but is typically not more than 30% by mass, preferably not more than 25% by mass, and more preferably not more than 20% by mass. The lower limit of the water content is not particularly limited, but may be, for example, not less than 1% by mass. In conventional techniques, when the water-containing organic mixture has a lower water content, i.e., the water-containing organic mixture has a higher organic compound content, a greater amount of the organic compound easily permeates through the membrane composite. However, in a purified organic compound production method in accordance with an aspect of the present invention, even in a case where the water content of a mixture is low as in the above-described numerical range, the permeation amount of the organic compound is reduced. It is therefore possible to achieve separation and concentration for the mixture with high separation efficiency, and obtain a purified organic compound of high purity.

[Purified gas production method]

In a case where the fluid is mixed gas, the membrane separation for the mixed gas are, for example, the separation of a gaseous resource or the separation of gas discharged from thermal power plants and petrochemical plants, and examples thereof include separations between carbon dioxide and nitrogen, between carbon dioxide and methane, between hydrogen and hydrocarbons, between hydrogen and oxygen, between hydrogen and carbon dioxide, between nitrogen and oxygen, between paraffin and olefin, and between helium and methane. The proportion of a separation target gas in the mixed gas is not particularly limited, but is typically not more than 99% by mass, preferably not more than 95% by mass, and more preferably not more than 90% by mass. The lower limit of the said proportion is not particularly limited, but may be, for example, not less than 1% by mass.

[Main points of Embodiment 1]

As understood from the above description, the present embodiment encompasses the following aspects.

Aspect 1-1: a porous support-zeolite membrane composite having a porous support and a zeolite membrane formed on the porous support, the zeolite membrane having an $SiO_2/Al_2O_3$ molar ratio of not less than 5 and not more than 70, the porous support-zeolite membrane composite having a CF4 permeance of not more than $1.0 \times 10^{-9}$ mol/(m²·s·Pa).

Aspect 1-2: the porous support-zeolite membrane composite of Aspect 1-1, in which the zeolite membrane composite has a thickness of not less than 3 µm.

Aspect 1-3: the porous support-zeolite membrane composite of Aspect 1-1 or 1-2, in which the porous support-zeolite membrane composite has a $CO_2$ permeance of not more than $1.0 \times 10^{-6}$ mol/(m²·s·Pa).

Aspect 1-4: the porous support-zeolite membrane composite of any one of Aspects 1-1 to 1-3, in which the zeolite membrane is composed of CHA-type zeolite.

Aspect 1-5: the porous support-zeolite membrane composite of any one of Aspects 1-1 to 1-4, in which in an X-ray diffraction pattern obtained by irradiating a surface of the zeolite membrane with X-rays, a peak intensity at around $2\theta=17.9°$ is not less than 0.3 times but less than 1.0 times a peak intensity at around $2\theta=20.8°$.

Aspect 1-6: a purified organic compound production method, including using a porous support-zeolite membrane composite which has a porous support and a zeolite membrane formed on the porous support, to obtain a purified organic compound from a mixture that contains an organic compound, in which the zeolite membrane has an $SiO_2/Al_2O_3$ molar ratio of not less than 5 and not more than 70, and the porous support-zeolite membrane composite has a CF4 permeance of not more than $1.0 \times 10^{-9}$ mol/(m²·s·Pa).

Embodiment 2

The following description will discuss Embodiment 2 of the present invention in detail.

[Inorganic porous support-zeolite membrane composite]

An inorganic porous support-zeolite membrane composite (hereinafter, also referred to simply as the "membrane composite") in accordance with an embodiment of the present invention has an inorganic porous support (which is hereinafter, also referred to simply as the "support", and can be referred to as the "porous support" in the present specification), and a zeolite membrane supported on a surface of the inorganic porous support. The zeolite only needs to be fixed to the surface layer of the inorganic porous support in membrane form, but a portion thereof may be fixed even to the interior of the inorganic porous support.

The position of the zeolite membrane on the surface of the inorganic porous support is not limited. For example, in a case where a tubular inorganic porous support is used, the zeolite membrane may be on the outer surface of the inorganic porous support, may be on the inner surface of the inorganic porous support, or may be on both of the surfaces. The zeolite membrane may be laminated on a surface of an inorganic porous support, and may be crystallized such that the pores in the surface layer of an inorganic porous support are filled.

From the perspective of increasing the separation characteristic of the membrane composite, it is preferable that the zeolite membrane in the membrane composite be a dense membrane, for example, cracks or continuous micropores be substantially absent in the interior of the zeolite membrane formed from crystallization.

[Zeolite membrane]

A zeolite membrane in the present embodiment is a membranous material composed of zeolite. The zeolite membrane is preferably a membrane in which zeolite is crystallized in the surface layer of an inorganic porous support. The components constituting the membrane include zeolite, and in addition to zeolite, may include, as necessary, inorganic binders such as silica and alumina, organic substances such as a polymer, silylation agents that modify the zeolite surface, or the like.

The zeolite membrane may partially contain an amorphous component or the like, and is preferably substantially composed only of zeolite. The zeolite membrane in accordance with the present embodiment is preferably substantially composed only of CHA-type zeolite. The zeolite membrane may partially contain zeolite of another structure, such as mordenite-type zeolite or MFI-type zeolite, or may contain an amorphous component, etc.

CHA-type zeolite indicates zeolite of the CHA structure, with use of the code defining the structure of zeolite defined by the International Zeolite Association (IZA). CHA-type zeolite is zeolite having a crystal structure equivalent to that of naturally occurring chabazite. CHA-type zeolite has a structure characterized by having three-dimensional pores which are constituted by 8-membered oxygen rings and which has a size of $3.8\,Å \times 3.8\,Å$, and the structure is characterized via X-ray diffraction data.

In the present embodiment, the framework density of the CHA-type zeolite is 14.5 T/1,000 Å. The framework density means the number of elements constituting a framework other than oxygen per 1,000 Å$^3$ of the zeolite. This value is determined by the structure of the zeolite. Note that the relationship between the framework density and the structure of zeolite is shown in ATLAS OF ZEOLITE FRAMEWORK TYPES, Fifth Revised Edition 2001, ELSEVIER.

In the present embodiment, the $SiO_2/Al_2O_3$ molar ratio of CHA-type zeolite is not particularly limited, but is typically not less than 10, preferably not less than 15, more preferably not less than 18, even more preferably not less than 20, and particularly preferably not less than 25. The upper limit of the said molar ratio is typically not more than 70, preferably not more than 60, and more preferably not more than 50. This is the same as the $SiO_2/Al_2O_3$ molar ratio of the zeolite membrane described later.

<Orientation characteristics>

In an X-ray diffraction pattern obtained by irradiating a surface of the zeolite membrane in accordance with the present embodiment with X-rays, the ratio A/B of the intensity A of a (1,0,0) orientation to the intensity B of a (2,0,-1) orientation is not less than 0.7 times.

The "X-ray diffraction pattern" in the present embodiment is obtained by the irradiation with X-rays using CuKα as a radiation source, with the scanning axis set at 0/20. The shape of a sample to be measured may be any shape that allows irradiation of the surface of the zeolite membrane of the membrane composite with the X-rays. From the perspective of representing the characteristics of the membrane composite well, the sample is preferably the membrane composite as produced. Alternatively, in a case of being constrained by a device, the sample is preferably a cutout obtained by cutting the membrane composite to an appropriate size. In a case where the surface of the membrane composite is a curved surface, the X-ray diffraction pattern may be measured with the irradiation width fixed using an automatic variable slit. The X-ray diffraction pattern obtained using the automatic variable slit is the pattern that has undergone a variable-to-fixed slit correction.

The intensity A (which can be referred to as the "peak intensity $I_{100}$" in the present specification) of the (1,0,0) orientation is the peak at around $2\theta=9.6°$ in an X-ray diffraction pattern, and is the largest among the peaks present in the range of $9.6°\pm0.6°$ among the peaks that do not originate from the substrate (inorganic porous support). A peak intensity is obtained by processing an actual measured intensity. The intensity B (which can be referred to as the "peak intensity $I_{20-1}$" in the present specification) of the (2,0,-1) orientation is the peak at around $2\theta=20.8°$ in an X-ray diffraction pattern, and is the largest among the peaks present in the range of $20.8°\pm0.6°$ among the peaks that do not originate from the substrate (inorganic porous support).

The ratio A/B of the intensity A of the (1,0,0) orientation to the intensity B of the (2,0,-1) orientation being not less than 0.7 is considered to mean that during the growth of zeolite crystals on an inorganic porous support, the crystals grow to also be oriented approximately parallel to the surface of the membrane composite in moderation, so that a dense membrane having high separation performance is formed. From this perspective, the intensity ratio A/B is preferably not less than 0.7, more preferably not less than 0.9, and even more preferably not less than 1.0. From the perspective of forming a dense membrane having high permeation performance and high separation performance, the intensity ratio A/B is preferably not more than 100.

The ratio G/B of the intensity G of the (1,1,1) orientation to the intensity B of the (2,0,-1) orientation is preferably not less than 0.3 from the perspective of increasing separation performance of a zeolite membrane and forming a dense zeolite membrane, and is more preferably not less than 0.35, and even more preferably not less than 0.4. The intensity G (which can be referred to as the "peak intensity $I_{111}$" in the present specification) of the (1,1,1) orientation is the peak at around $2\theta=17.9°$ in an X-ray diffraction pattern, and is the largest among the peaks present in the range of $17.9°\pm0.6°$ among the peaks that do not originate from the substrate (inorganic porous support). From the above perspective, the intensity ratio G/B is preferably not more than 1.0, more preferably not more than 0.9, and even more preferably not more than 0.8.

By setting the intensity of the (1,1,1) orientation in the above range, it is possible to increase the separation performance. The (1,1,1) orientation is the orientation in which the direction of edges (corners) of the trigonal CHA-type zeolite grains in the zeolite membrane is perpendicular to the support, and also between the zeolite grains, the edges thereof face each other. When the intensity of the (1,1,1) orientation is high, the grains become intricate and dense. However, it is considered that in a case where the coefficients of thermal expansion of the support and the zeolite membrane differ during calcination, cracking occurs in the zeolite membrane due to failure to alleviate the thermal expansion, and the separation performance can deteriorate. It is therefore considered that by setting the intensity of the (1,1,1) orientation in the above range, it is possible to reduce the cracking of the zeolite membrane, and the separation performance increases accordingly.

Other orientation characteristics are preferably similar to those described in Embodiment 1. The descriptions of these respects are not repeated.

According to COLLECTION OF SIMULATED XRD POWDER PATTERNS FOR ZEOLITE, Fourth Revised Edition 2001, ELSEVIER, when the space group is taken as (No. 166) in the rhombohedral setting, the peak at around $2\theta=9.6°$ ($9.6°\pm0.6°$) in an X-ray diffraction pattern originates from the (1,0,0) index plane in the CHA structure. Further, according to COLLECTION OF SIMULATED XRD POWDER PATTERNS FOR ZEOLITE, Fourth Revised Edition 2001, ELSEVIER, when the space group is taken as (No. 166) in the rhombohedral setting, the peak at around $2\theta=20.8°$ ($20.8°\pm0.6°$) in an X-ray diffraction pattern originates from the (2,0,-1) index plane in the CHA structure.

<SAR>

In the present embodiment, the $SiO_2/Al_2O_3$ molar ratio in the surface portion of the zeolite membrane (hereinafter, also referred to as a "surface portion SAR") is not less than 25. The zeolite membrane in accordance with the present embodiment which exhibits such an SAR exhibits high acid resistance. From the perspective of enhancing the acid resistance, the SAR in the surface portion of the zeolite membrane is typically not less than 25, preferably not less than 26, more preferably not less than 27, and even more preferably not less than 28. However, when the SAR of the zeolite membrane is excessively high, the permeation flux tends to be small. From this perspective, the SAR in the surface portion of the zeolite membrane is typically not more than 70, preferably not more than 60, and more preferably not more than 50.

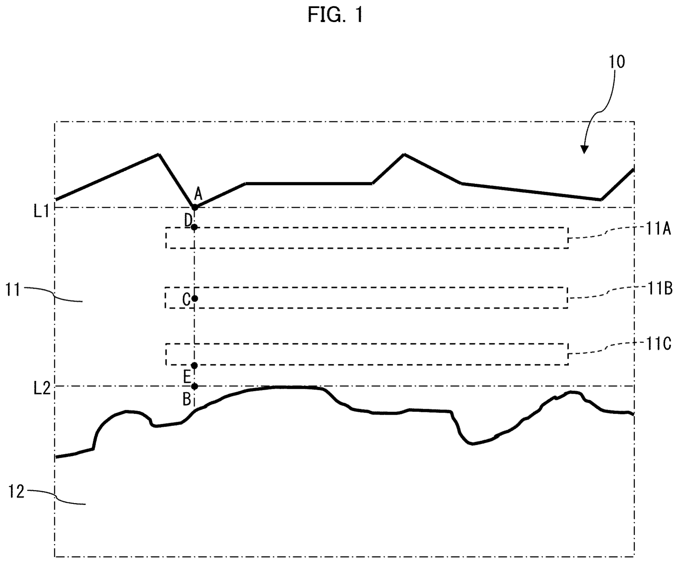

The "surface portion of the zeolite membrane" is a portion of the zeolite membrane on the surface side in the thickness direction. The portion of the zeolite membrane in the thickness direction in the present embodiment is described using Fig. 1.

Fig. 1 is a diagram for explaining a portion of a zeolite membrane of the present invention in the thickness direction. A membrane composite 10 is composed of a zeolite membrane 11 and an inorganic porous support 12. The zeolite membrane 11 is formed on a surface of the inorganic porous support 12. The horizontal direction of the image in Fig. 1 is set such that the interface between the support and the membrane is horizontal.

In Fig. 1, a point A is the location where the surface of the zeolite membrane is most recessed in the image of a cross section of the zeolite membrane. A point B is the intersection of the inorganic porous support and a straight line that passes through the point A and that extends along the thickness direction of the membrane, and a point C is the midpoint of a line segment AB. In Fig. 1, L1 is a line that passes through point A and that extends along a direction perpendicular to the thickness direction of the membrane, and L2 is a line that extends along a direction perpendicular to the thickness direction of the membrane, and is the tangent at the location where the inorganic porous support is most recessed in the image of the cross section of the zeolite membrane. A point D represents the position 1 $\mu$m deeper the point A (line L1) along the thickness direction of the membrane, and a point E represents the position 1 $\mu$m shallower than the line L2 along the thickness direction of the membrane.

A surface portion 11A of the zeolite membrane is the region that contains the point D in the cross section of the zeolite membrane and extends in the direction perpendicular to the thickness direction, and that has a depth of 1 $\mu$m on the inorganic porous support relative to the point D and has a width of 24 $\mu$m. A center portion 11B of the zeolite membrane is the region that contains the point C in the cross section of the zeolite membrane and extends in the direction perpendicular to the thickness direction, and that has a depth of $\pm$0.5 $\mu$m from the point C and has a width of 24 $\mu$m. An area 11C is a bottom portion of the zeolite membrane, and is the region that contains the point E in the cross section of the zeolite membrane and extends in the direction perpendicular to the thickness direction, and that has a depth of 1 $\mu$m on the surface side relative to the point E and has a width of 24 $\mu$m.

Regarding the SAR of the zeolite membrane, when the uniformity is higher in the membrane thickness direction, the separation characteristic tends to be more excellent. From the perspective of increasing separation characteristic, the ratio (SAR ratio) C/D of the $SiO_2/Al_2O_3$ molar ratio C in the surface portion of the zeolite membrane to the $SiO_2/Al_2O_3$ molar ratio D in the center portion of the zeolite membrane in the thickness direction is preferably less than 1.5, more preferably not more than 1.4, and even more preferably not more than 1.3. The SAR ratio C/D is preferably as low as possible in a feasible range, and may be not less than 1.0 from the perspective of, for example, the feasibility in the production method described later.

Alternatively, from the perspective of increasing separation characteristic, the difference (C-D) between the $SiO_2/Al_2O_3$ molar ratio C in the surface portion and the $SiO_2/Al_2O_3$ molar ratio D in the center portion of the zeolite membrane in the thickness direction is preferably less than 10, more preferably not more than 8, and even more preferably not more than 6. The above difference C-D of the SARs is preferably as low as possible in a feasible range, and may be not less than 0.1 from the perspective of, for example, the feasibility in the production method described later.

The SAR is obtained via scanning electron microscopeenergy dispersive X-ray spectroscopy (SEM-EDX). In order to obtain information only on a membrane which is a few microns thick, measurement is typically carried out with the acceleration voltage of X-rays set at 6 kV.

In the above-described bottom part 11C, silica and alumina in the inorganic porous support can be detected, in a case where a cross section which is substantially perpendicular to the support is not obtained during crosssectioning of the zeolite membrane, or depending on the thickness of the support. However, the above-described SAR ratio C/D and the SAR difference C-D are both derived based on the detection results for the surface portion 11A and the center portion 11B. Typically, silica and alumina in the inorganic porous support cannot be detected in the surface portion 11A and the center portion 11B. Thus, both the SAR ratio C/D and the SAR difference C-D are derived based on the SARs of portions that are not substantially affected by the inorganic porous support, and represent the characteristics of the zeolite membrane itself in the thickness direction.

In the present embodiment, the $SiO_2/Al_2O_3$ molar ratio (hereinafter, also referred to as "surface SAR") measured from the surface of the zeolite membrane is not less than 20. The zeolite membrane in accordance with the present embodiment which exhibits such an SAR exhibits high acid resistance. From the perspective of enhancing the acid resistance, the SAR in the surface portion of the zeolite membrane is typically not less than 22, preferably not less than 23, more preferably not less than 24, and even more preferably not less than 25. However, when the SAR of the zeolite membrane is excessively high, the permeation flux tends to be small. From this perspective, the SAR in the surface portion of the zeolite membrane is typically not more than 70, preferably not more than 60, and more preferably not more than 50.

"Measurement from the surface of the zeolite membrane" refers to measuring the $SiO_2/Al_2O_3$ molar ratio regarding the outer surface of the zeolite membrane. Specifically, three differing surface images at 5,000x magnification are used to measure the $SiO_2/Al_2O_3$ molar ratios for not less than 9 regions having a size of $(2\pm0.5\,\mu m) \times (2\pm0.5\,\mu m)$, and the average of these ratios is used as the surface SAR.

<Membrane thickness>

The thickness of a zeolite membrane in accordance with the present embodiment can be determined as appropriate, to the extent that desired characteristics can be obtained. From this perspective, the thickness of the zeolite membrane may be not less than 2 $\mu$m, or may be not less than 3 $\mu$m. Furthermore, from the above perspective, the thickness of the zeolite membrane may be not more than 100 $\mu$m, preferably not more than 60 $\mu$m, more preferably not more than 40 $\mu$m, even more preferably not more than 30 $\mu$m, particularly preferably not more than 20 $\mu$m, and most preferably not more than 15 $\mu$m. In a case of using the zeolite membrane of the present embodiment in the separation of gases in a mixture, the membrane thickness is preferably not more than 5.0 $\mu$m, more preferably not more than 4.0 $\mu$m,

even more preferably not more than 3.5 $\mu$m, and particularly preferably not more than 3.0 $\mu$m.

From the perspective of accurately determining the uniformity of the SAR in the zeolite membrane, the minimum value of the thickness of the zeolite membrane is preferably not less than 2 $\mu$m, and more preferably not less than 2.5 $\mu$m. In a case where the zeolite membrane in accordance with the present embodiment is used in the pervaporation method or the vapor permeation method, the minimum value of the thickness of the zeolite membrane may be not less than 5 $\mu$m. The "minimum value of the thickness of the zeolite membrane" is the minimum value in the image of a cross section of the zeolite membrane.

<Grain size>

In a case where the grain size of the zeolite forming the zeolite membrane is excessively small, the permeation selectivity of the zeolite membrane tend to decrease due to increase in grain boundary. From this perspective, the grain size of the zeolite may be not less than 30 nm, preferably not less than 50 nm, and more preferably not less than 100 nm. The upper limit of the grain size is equal to or smaller than the thickness of the zeolite membrane. From the above perspective, the grain boundary of the zeolite is preferably small in the zeolite membrane. Thus, the grain size of the zeolite is preferably the same as the thickness of the zeolite membrane. A zeolite membrane obtained by hydrothermal synthesis is preferable because the grain size of zeolite can be the same as the thickness of the zeolite membrane. The "grain size of zeolite" is determined from the TEM image of a cross section of a zeolite membrane.

[Inorganic porous support (porous support)]

In the present embodiment, the inorganic porous support disclosed in Patent Literature 1 or Patent Literature 2 may suitably be adopted for the inorganic porous support.

It is preferable that the inorganic porous support be porous, and have the chemical stability to allow zeolite to crystallize in membrane form on a surface thereof. Examples of the inorganic porous support include ceramic sintered bodies, sintered metals, glass molded bodies and carbon molded bodies. Examples of ceramics of the ceramic sintered bodies include silica, $\alpha$-alumina, $\gamma$-alumina, mullite, zirconia, titania, yttria, silicon nitride, and silicon carbide. Examples of the sintered metals include iron, bronze, and stainless steel.

From the perspective of increasing adhesion to the zeolite membrane during synthesis of the zeolite membrane, ceramic sintered bodies are preferable. In particular, at least one ceramic sintered body selected from the group consisting of alumina, silica, and mullite is preferable because when the zeolite membrane is CHA-type zeolite membrane, the separation performance tends to be increased.

The shape of the inorganic porous support can be determined as appropriate, to the extent the shape is applicable to the intended use of the membrane composite. Examples of the shape of the inorganic porous support include the shapes of a flat plate, a tube, a cylinder, a honeycomb in which there are many circular columnar pores and angular columnar pores, and a monolith.

When the average thickness (wall thickness) of the inorganic porous support is excessively small, the strength of the membrane composite tends to be low and cause problems in practical use. When the wall thickness of the inorganic porous support is excessively thick, a component that permeates through the inorganic porous support tends to be less diffusive, and the permeation flux of the permeating component tends to be lower. From the perspective of achieving appropriate diffusion of the permeating component and sufficient strength of the inorganic porous support, the wall thickness of the inorganic porous support is preferably not less than 0.1 mm, more preferably not less than 0.3 mm, even more preferably not less than 0.5 mm, and preferably not more than 7 mm, more preferably not more than 5 mm, and even more preferably not more than 3 mm.

In a case where a zeolite membrane is formed on a surface of an inorganic porous support, zeolite is crystallized in the surface layer of an inorganic porous support, and a membrane is formed. From the perspective of the supported state of the seed crystals on the substrate or the influence on permeation performance, the average pore size in the surface layer is preferably not less than 0.02 $\mu$m, more preferably not less than 0.05 $\mu$m, and even more preferably not less than 0.1 $\mu$m. Furthermore, from the perspective of the supported state of the seed crystals on the substrate or the influence on permeation performance, the said average pore size is preferably not more than 20 $\mu$m, more preferably not more than 10 $\mu$m, and even more preferably not more than 5 $\mu$m.

From the perspective of making the supported state of the seed crystals uniform regardless of the location, the surface of the inorganic porous support is preferably smooth. A smooth surface can be achieved by polishing with file or the like, as necessary.

Note that the surface layer of an inorganic porous support refers to a surface of the inorganic porous support on which to crystallize zeolite, such as CHA-type zeolite, and a portion in the vicinity of the surface in the thickness direction. The shape of the surface layer in plan view and the position of the surface in the inorganic porous support (such as the principal surface) are not limited. The surface layer may be present on a plurality of surfaces of the inorganic porous support. For example, in a case where the shape of the inorganic porous support is cylindrical, the above-described surface layer may be on the outer circumferential surface side, or may be on the inner circumferential surface side, and may be on both of the circumferential surface sides.

The pore size in a portion of the inorganic porous support that is other than the surface layer is not limited.

The porosity of a portion of the inorganic porous support that is other than the surface layer affects the permeation flux during the separation of gas or liquid. When the porosity is excessively low, the diffusion of a permeating substance tends to be inhibited, and when the porosity is excessively high, the strength of the inorganic porous support tends to decrease. From the perspective of achieving appropriate diffusion of a permeating substance and sufficient strength of the inorganic porous support, the porosity of a portion of the inorganic porous support that is other than the surface layer is preferably not less than 20% and not more than 60%.

<Permeability characteristics of membrane composite>

The $CF_4$ permeance in the membrane composite in accordance with the present embodiment is preferably not more than $5.0 \times 10^{-9}$ mol/(m$^2$·s·Pa). The $CF_4$ permeance refers to the presence of defects in the zeolite membrane for allowing water to permeate therethrough and separating the water from an aqueous solution of an organic compound, such as alcohol. From the perspective of having fewer defects and having more excellent separation performance, when the measurement temperature is 50°C and the difference between pressures inside and outside the membrane is 0.3 MPa, the $CF_4$ permeance is preferably not more than $3.5 \times 10^{-9}$ mol/(m$^2$·s·Pa), more preferably not more than $3.0 \times 10^{-9}$ mol/(m$^2$·s·Pa), even more preferably not more than $1.5 \times 10^{-9}$ mol/(m$^2$·s·Pa), particularly preferably $1.0 \times 10^{-9}$ mol/(m$^2$·s·Pa), and most preferably not more than $5.0 \times 10^{-10}$ mol/(m$^2$·s·Pa). In particular, it is more preferable that the $CF_4$ permeance be not more than $1 \times 10^{-10}$ mol/(m$^2$·s·Pa), more preferably not more than $5.0 \times 10^{-11}$ mol/(m$^2$·s·Pa), and more preferably not more than $3.0 \times 10^{-11}$ mol/(m$^2$·s·Pa).

The $CO_2$ permeance in the membrane composite in accordance with the present embodiment is preferably not more than $1 \times 10^{-6}$ mol/(m$^2$·s·Pa). Typically, the $CO_2$ permeance of a zeolite membrane having a high SAR tends to be high. This is because the thickness of a zeolite membrane having a high SAR is likely to be small, and $CO_2$ therefore easily permeates through such a zeolite membrane. In the present embodiment, the SAR of the zeolite membrane tends to not only be high in the surface portion but also be uniform in the thickness direction. Thus, it is preferable for the membrane composite in accordance with the present embodiment to have the above $CO_2$ permeance, from the perspective of the zeolite membrane with a high SAR having fewer defects and having more excellent separation characteristic.

The gas permeance of the membrane composite of the present embodiment is expressed by a value $n / (p_1 - p_2)$ obtained by dividing the molar number n (mol/(m$^2$·s)), per unit area of the membrane composite and per unit time, of gas that permeates through the membrane composite, by the difference (Pa) between a partial pressure $p_1$ on the gas supply side and a partial pressure $p_2$ on the gas permeation side. The above gas permeance can be measured under the condition where the temperature is 50°C and the partial pressure on the gas supply side is 0.3 MPaG. However, unless otherwise noted, the partial pressure on the gas supply side is 0.1 MPaG.

[Method for producing membrane composite]

A method for producing the membrane composite in accordance with the present embodiment can be implemented using a known method whereby it is possible to produce the membrane composite, to the extent that the characteristics described above can be exhibited as appropriate. Examples of such a known method include a method of formation by crystallizing zeolite in membrane form on an inorganic porous support, a method of fixing zeolite to an inorganic porous support via an inorganic binder, an organic binder, or the like, a method of fixing a polymer in which zeolite is dispersed, and a method of impregnating an inorganic porous support with zeolite slurry, and optionally causing the zeolite slurry to be suctioned, to fix zeolite to an inorganic porous support.

A preferred aspect of the method for producing the membrane composite in accordance with the present embodiment is a method of crystallizing a zeolite in membrane form in the surface layer of an inorganic porous support. More specifically, the method for producing the membrane composite in accordance with the present embodiment is preferably a method of crystallizing CHA-type zeolite in membrane form in the surface layer of an inorganic porous support, typically by hydrothermal synthesis. To such a production method, the production method described in Patent Literature 1 can be applied.

In crystallizing CHA-type zeolite in membrane form in the surface layer of an inorganic porous support, it is not necessary for seed crystals to be present. However, from the perspective of promoting the crystallization of CHA-type zeolite, it is preferable to add seed crystals in the reaction system. Examples of a method for adding seed crystals include: a method of adding seed crystals to a reaction mixture for synthesizing a membrane of CHA-type zeolite; and a method of keeping seed crystals adhered to a surface of an inorganic porous support. From the perspective of ease of formation of a zeolite membrane which is dense and which has good separation performance, the method for adding seed crystals is preferably a method of keeping seed crystals adhered to a surface of an inorganic porous support.

The seed crystals may be a zeolite which promotes crystallization. From the perspective of efficient crystallization, the seed crystals are preferably CHA-type zeolite. The grain size of CHA-type zeolite used as seed crystals is preferably small, and the CHA-type zeolite may be pulverized as necessary to be used as seed crystals. The grain size is typically not less than 0.5 nm, preferably not less than 1 nm, more preferably not less than 2 nm, and typically not more than 5 μm, preferably not more than 3 μm, and even more preferably not more than 2 μm, in terms of the average grain size. The average grain size of the zeolite seed crystals is the grain size ($D_{50}$) corresponding to the cumulative 50% in a volume-based grain size distribution as determined via the laser diffraction scattering method.

Examples of a method for adhering seed crystals to a surface of an inorganic porous support include: a dipping method of dispersing seed crystals in a solvent such as water and dipping an inorganic porous support in the dispersion, to adhere the seed crystals to the surface of the inorganic porous support; and a method of rubbing, on a surface of an inorganic porous support, a slurry obtained by mixing seed crystals with a solvent such as water. From the perspective of controlling the amount of seed crystals adhered and producing membrane composites with good reproducibility, the method for adhering seed crystals is preferably the dipping method.

A solvent in which to disperse the seed crystals is preferably water. When the amount of seed crystals dispersed is excessively small, the amount of seed crystals adhered to the inorganic porous support is small, and a portion in which CHA-type zeolite is not formed can therefore be generated on the surface of the inorganic porous support during hydrothermal synthesis. This could cause the formed zeolite membrane to have a defect. Furthermore, when the amount of seed crystals dispersed is excessively large, the amount of seed crystals adhered to a surface of an inorganic porous support remains almost constant, and a significant amount of the seed crystals is therefore wasted. This is disadvantageous in terms of cost. From the perspective of preventing defect generation in the zeolite membrane and the perspective of cost, the amount of seed crystals in the dispersion is preferably not less than 0.01% by mass, more preferably not less than 0.1% by mass, and even more preferably not less than 0.5% by mass. Furthermore, from the above perspectives, the amount of seed crystals in the dispersion is preferably not more than 20% by mass, more preferably not more than 10% by mass, even more preferably not more than 5% by mass, and still more preferably not more than 3% by mass.

In the production of the membrane composite, it is preferable to carry out synthesis of a zeolite membrane after adhering the seed crystals to a surface of an inorganic porous support by the dipping method or by the slurry rubbing, and then carrying out drying.

When the amount of seed crystals adhered to a surface of an inorganic porous support is excessively small, the formation of zeolite crystals is hindered. This can lead to insufficient growth of a zeolite membrane, or non-uniform growth of the zeolite membrane. Thus, the formation of a dense zeolite membrane can be hindered. Regarding the amount of seed crystals adhered, surface asperities of an inorganic porous support are augmented by the seed crystals, or spontaneous nuclei are likely to grow due to the seed crystals which have dropped from the surface of the support. This can inhibit the growth of a membrane on the inorganic porous support. Thus, the formation of a dense zeolite membrane can be hindered. From the perspective of facilitating the formation of a dense zeolite membrane, the amount of seed crystals adhered is preferably not less than 0.01 g, more preferably not less than 0.05 g, and even more preferably not less than 0.1 g, in terms of the mass per 1 $m^2$ of the inorganic porous support. Furthermore, from the above perspective, the amount of seed crystals adhered is preferably not more than 100 g, more preferably not more than 50 g, even more preferably not more than 10 g, and still more preferably not more than 8 g, in terms of the mass per 1 $m^2$ of the inorganic porous support.

As a form in which an inorganic porous support is immobilized to crystallize zeolite by hydrothermal synthesis, any form can be adopted from among various forms such as vertical placement and horizontal placement. In this case, the crystallization may be carried out by a static method, or may be carried out by stirring a reaction mixture.

When the temperature during the crystallization of zeolite is excessively low, the CHA-type zeolite does not crystallize in some cases. When the temperature is excessively high, zeolite of a type different from the CHA-type can be formed. From the perspective of crystallizing CHA-type zeolite, the temperature during the crystallization is preferably not less than 100°C, more preferably not less than 120°C, and even more preferably not less than 150°C. Furthermore, from the above perspective, the temperature during the crystallization is preferably not more than 200°C, more preferably not more than 190°C, and even more preferably not more than 180°C.

When the heating time for crystallization of zeolite is excessively short, the CHA-type zeolite does not crystallize in some cases. When the heating time is excessively long, zeolite of a type different from the CHA-type can be formed. From the perspective of crystallizing CHA-type zeolite, the heating time is preferably not less than 1 hour, more preferably not less than 5 hours, and even more preferably not less than 10 hours. Furthermore, from the above perspective, the heating time is preferably not more than 10 days, more preferably not more than 5 days, even more preferably not more than 3 days, particularly preferably not more than 2 days, and most preferably less than 24 hours.

The combination of the heating temperature and the heating time in crystallizing the zeolite is preferably such that the temperature is between 170°C and 190°C and the time is 16 hours to 20 hours. When the combination of the heating temperature and the heating time for the crystallization falls within the above range, it is possible to achieve both high permeation performance and high separation performance. When the heating time falls within the above range, the crystals are sufficiently grown so as to be oriented in a direction approximately parallel to the membrane composite, a dense membrane is formed, and high separation performance is obtained. When the heating time falls within the above range, the intensity of the (1,1,1) orientation is in an appropriate range, and it is possible to enhance the separation performance. The (1,1,1) orientation is the orientation in which the direction of edges of the trigonal CHA-type zeolite grains in the zeolite membrane is perpendicular to the support, and also between the zeolite grains, the edges thereof face each other. When the intensity of the (1,1,1) orientation is high, the grains become intricate and dense. However, it is considered that in a case where the coefficients of thermal expansion of the support and the zeolite membrane differ during calcination, cracking occurs due to failure to alleviate the thermal expansion, and the separation performance can deteriorate. It is therefore considered that by setting the intensity of the (1,1,1) orientation in an appropriate range, it is possible to reduce the cracking of the zeolite membrane and increase the separation performance. Other matters are similar to those described in Embodiment 1.

For the pressure during the crystallization, the autogenous pressure generated when a reaction mixture put in a sealed container is heated to the above-described temperature range is sufficient. The pressure may be adjusted by adding an inert gas such as nitrogen.

It is preferable that the organic template in the zeolite membrane of a membrane composite obtained by hydrothermal synthesis be removed after the membrane composite is washed with water. Examples of a method for removing the organic template include calcination or extraction, and calcination is preferable.

When the calcination temperature during the removal of the organic template is excessively low, a large proportion of the organic template remains, and the pores in the zeolite membrane are reduced. This could lead to a reduction in the permeation flux during separation and concentration. When the calcination temperature is excessively high, the difference in the thermal expansion between the inorganic porous support and the zeolite membrane increases. This could make it easier for the crack to occur in the zeolite membrane. As a result, the denseness of the zeolite membrane may be lost, and the separation performance can decline, accordingly. From the perspective of suppressing the decline in the permeation flux and separation performance during separation and concentration, the calcination temperature is preferably not less than 350°C, more preferably not less than 400°C, even more preferably not less than 430°C, and still more preferably not less than 480°C. Furthermore, from the above perspective, the calcination temperature is preferably not more than 900°C, more preferably not more than 850°C, even more preferably not more than 800°C, and still more preferably not more than 750°C.

The calcination time for the removal of the organic template can be determined as appropriate, to the extent that the organic template is removed sufficiently. For example, the calcination time is preferably not less than 1 hour, and more preferably not less than 5 hours. The calcination time may be within 24 hours, although the upper limit thereof is not limited. The calcination may be carried out in an air atmosphere, or may be carried out in an oxygen-containing atmosphere.

A temperature increase rate during the calcination is preferably smaller from the perspective of suppressing the occurrence of a crack in the zeolite membrane caused by the difference in the thermal expansion between the inorganic porous support and the zeolite membrane. From this perspective, the temperature increase rate is preferably not more than 5°C/min, more preferably not more than 2°C/min, even more preferably not more than 1°C/min, and still more preferably not more than 0.5°C/min. The temperature increase rate may be not less than 0.1°C/min from the perspective of workability.

From the perspective of avoiding the occurrence of a crack in the zeolite membrane, it is preferable that the temperature decrease rate after the calcination is smaller, similar to the temperature increase rate. From this perspective, the temperature decrease rate is preferably not more than 5°C/min, more preferably not more than 2°C/min, even more preferably not more than 1°C/min, and still more preferably not more than 0.5°C/min. The temperature decrease rate may be not less than 0.1°C/min from the perspective of workability.

The produced membrane composite may be subjected to ion exchange treatment, as necessary. In a case of using an organic template to synthesize the zeolite membrane, the ion exchange is preferably carried out after an organic template removal step such as calcination. Examples of ions to be subjected to ion exchange include: protons; alkali metal ions such as $Na^+$, $K^+$, and $Li^+$; alkaline earth metal ions such as $Ca^{2+}$, $Mg^{2+}$, $Sr^{2+}$, and $Ba^{2+}$; and transition metal ions such as Fe, Cu, and Zn. In particular, protons or alkali metal ions are preferable.

For example, the ion exchange can be carried out by: treating a membrane composite that has been calcined (e.g., in a case of using an organic template) with an aqueous solution that contains, for example, an ammonium salt such as $NH_4NO_3$ or ions to be exchanged such as $NaNO_3$ or with an acid such as hydrochloric acid in some cases, typically at a temperature from room temperature to 100°; and washing the water; and as necessary, carrying out calcination at 200 to 500°C.

[Purified component production method]

The membrane composite in accordance with the present embodiment can be applied to purified component production. In such purified component production, a mixture of a first component that permeates through the zeolite membrane of a membrane composite in accordance with the present embodiment and a second component that does not permeate through the said zeolite membrane is brought into contact with the membrane composite. In this method, a first purified component, which is the first component that has permeated through the zeolite membrane, can be obtained, a second purified component, which is the second component that has not permeated through the zeolite membrane, can be obtained, or both the first purified component and the second purified component can be obtained. In the present embodiment, a component resulting from the removal of the second component from the first component via the membrane composite is referred to as the first purified component, and a component resulting from the removal of the first component from the second component via the membrane composite is the second purified component.

The purified component production method in the present embodiment as above is applicable to both liquids and gases. That is, both the first component and the second component may be liquids, or both the first component and the second component may be gases.

Both the first component and the second component may be inorganic substances, or may be organic substances. The first component and the second component may each be a single component, or may each be a mixed component of two or more components. For example, one of the first component and the second component may be water, and the other may be an organic compound.

The membrane composite in accordance with the present embodiment described above has excellent acid resistance. Thus, in the purified component production method, one of the first component and the second component may be water, and the other may contain acid. It is possible to carry out such a purified component production method in a manner similar to the membrane composite-based separation or concentration disclosed in, for example, Patent Literature 1.

For example, the purified component production method in the present embodiment is the method of bringing an organic substance-containing mixture (a mixture of the first component and the second component) of gases or liquids into contact with one of the inorganic porous support side or the zeolite membrane side through the membrane composite and making the pressure on the other side lower than the pressure on the one side, thereby causing a substance which has the ability to permeate through the CHA-type zeolite membrane (a substance in the mixture that has high ability of permeation; one of the first component and the second component) to selectively permeate from the mixture. This makes it possible to separate, from the mixture, a substance that has high ability of permeation.

As a result, by increasing the concentration of a specific organic substance (a substance in the mixture that has low ability of permeation) in the organic substance-containing mixture, it is possible to recover the specific organic substance by separation, or concentrate the specific organic substance. More specifically, in the case of the mixture of water and an organic substance, typically, water has a higher ability to permeate through a zeolite membrane. Thus, from the mixture, the water permeates through the zeolite membrane. As a result, the water and the organic substance are separated from each other, and the organic substance is concentrated in the original mixture. The separation-concentration method, referred to as permeation pervaporation or vapor permeation, is one form of the purified component production method in the present embodiment.

In the purified component production method, as the membrane composite, a membrane composite in any shape, such as the shape of a tube, a hollow fiber, a monolith, or a honeycomb, can be adopted. Furthermore, the size of the membrane composite is not limited. From a practical perspective, in a case of having the shape of a tube, the membrane composite preferably has a length of not less than 2 cm and not more than 200 cm, an inner diameter of not less than 0.5 cm and not more than 2 cm, and a thickness of not less than 0.5 mm and not more than 4 mm.

One of the separation functions of the membrane composite is the function of a molecular sieve. The purified component production method in the present embodiment is applied to the separation of gas molecules or liquid molecules having sizes of not less than 3.8 Å from gas molecules or liquid molecules having sizes of not more than 3.8 Å, which is an effective pore size of CHA-type zeolite. Typically, the size of the molecules (the first component or the second component that does not permeate through the zeolite membrane) that are subjected to separation is approximately not more than 100 Å.

Another separation function of the membrane composite is the separation function in which the difference in hydrophilicity is used. Depending on the type of zeolite, in general, when a certain amount of Al in the zeolite framework is contained in the zeolite membrane, hydrophilicity is more exhibited. By controlling the crystallization conditions for the CHA-type zeolite membrane, it is possible to control the SAR in the crystals. With such a hydrophilic zeolite membrane, it is possible to cause water molecules to selectively permeate through the membrane from a mixed solution of an organic substance and water, and thereby separate the organic substance from the mixture and concentrate the organic substance.

Examples of the mixture include mixed aqueous solutions (organic substances/water) of organic substances and water. More specific examples of the mixture include: organic acids/water, alcohols/water, ketones such as acetone and methyl isobutyl ketone/water, aldehydes/water, ethers such as dioxane and tetrahydrofuran/water, organic compounds (N-containing organic substances) containing nitrogen of amides or the like such as dimethylformamide and N-methylpyrrolidone/water, and esters such as acetate ester/water.

The water content in the mixture of an organic substance and water is not limited. Even for a mixture having a water content of e.g., not less than 20% by mass, which is such a high water content that the structure of the A-type zeolite breaks down, with the purified component production method in accordance with the present embodiment in which the membrane composite in accordance with the present embodiment is used, it is possible to achieve high selectivity and a high permeation flux.

Since the membrane composite in accordance with the present embodiment has high acid resistance, the purified component production method in accordance with the present embodiment can be used even in a system other than the above-described organic acids/water, e.g., even if an organic acid or inorganic acid is present.

As above, in the purified component production method in accordance with the present embodiment, in the membrane composite in accordance with the present embodiment, high selectivity and a high permeation flux are achieved in the separation of water from a water/organic substance mixture having a high water content, and even in the separation of water in acidic conditions. It is therefore possible to use the purified component production method in the present embodiment to separate a specific component in a mixture that is typically separated by distillation. This makes it possible to reduce the energy required for the separation, as compared with distillation.

Further, with the purified component production method in the present embodiment, it is possible to separate the water from mixtures that have a wide range of water contents. For example, with type A zeolite membranes, separation from a water/organic substance mixture having a high water content has not been possible, and it has therefore been necessary to concentrate the organic substance by distillation to approximately 90% and then use a type A zeolite membrane. However, with the purified component production method in the present embodiment, even from a water/-organic substance mixture having a high water content, which is, for example, not less than 50%, it is possible to use the membrane composite of the present embodiment to separate the water and the organic substance from each other, and concentrate the organic substance.

In the purified component production method in the present embodiment, organic substances may be concentrated with use of the membrane composite to a desired concentration, or it is possible to suitably combine separation via the membrane composite with another separation method such as distillation, pressure swing adsorption (PSA), or temperature swing adsorption (TSA). By suitably adjusting conditions, it is possible to carry out separation from a mixture with optimal energy efficiency.

In the purified component production method in the present embodiment, examples of the organic substance separable via the membrane composite of the present embodiment include: carboxylic acids such as acetic acid, propionic acid, formic acid, lactic acid, oxalic acid, tartaric acid, and benzoic acid; and organic acids such as sulfonic acid, sulfinic acid, barbituric acid, uric acid, phenol, enol, diketone-type compounds, thiophenol, imides, oximes, aromatic sulfonamides, and primary and secondary nitro-compounds. Examples of the organic substances include: alcohols such as methanol, ethanol, and isopropanol; ketones such as acetone and methyl isobutyl ketone; aldehydes such as acetaldehyde; ethers such as dioxane and tetrahydrofuran; organic compounds (N-containing organic substances) containing nitrogen of amides or the like such as dimethylformamide and N-methylpyrrolidone; and esters such as acetate ester.

In particular, the purified component production method in the present embodiment exhibits remarkable effects in the aspect of separating an organic acid from a water/organic acid mixture, which is an aspect in which the characteristics of molecular sieving and hydrophilicity are both exploited. The mixture is preferably a mixture of a carboxylic acid and water, and the separation is particularly preferably separation such as separation of acetic acid from water. In case where from a mixture of water and an organic substance other than organic acids, the organic substance and the water are separated from each other, the organic substance has a carbon number which is preferably not less than 2, and more preferably not less than 3.

With the purified component production method in the present embodiment, by using the membrane composite of the present embodiment, it is possible to separate a specific compound from an organic substance-containing mixture of gases or liquids preferably via pervaporation separation, and further concentrate the specific compound, and processing capacity and separation performance that are practically sufficient can be exhibited. The "sufficient processing capacity" means that the permeation flux of a substance that permeates through the zeolite membrane is not less than $1 \text{ kg/(m}^2 \cdot \text{h)}$. Further, the "sufficient separation performance" means that the separation factor, which represents the performance of separation and which is commonly used in membrane separation, is not less than 100, or that the concentration of the principal component in a liquid (permeate liquid) having permeated through a membrane is not less than 95% by mass. The separation factor is expressed by the formula below. In the formula below, "P$\alpha$" represents the mass percent concentration of the principal component in the permeate liquid, "P$\beta$" represents the mass percent concentration of an auxiliary component in the permeate liquid, "F$\alpha$" represents the mass percent concentration, in a mixture subjected to separation, of the principal component of the permeate liquid, and "F$\beta$" represents the mass percent concentration, in the separation target mixture, of the auxiliary component of the permeate liquid.

$$[\text{Formula}] \quad \text{Separation factor} = (P\alpha \ / \ P\beta) \ / \ (F\alpha \ / \ F\beta)$$

[Main points of Embodiment 2]

With the above-described embodiment, in a molecular sieving-based separation and concentration technique, it is possible to achieve purified component production which requires separation characteristics and acid resistance. The present invention, which exhibits such an effect, is effective from the perspective of ensuring sustainable consumption and production patterns.

As understood from the above description, the present embodiment encompasses the following aspects.

Aspect 2-1: an inorganic porous support-zeolite membrane composite (porous support-zeolite membrane composite) having an inorganic porous support (porous support) and a zeolite membrane supported on a surface of the inorganic porous support, in which in an X-ray diffraction pattern obtained by irradiating a surface of the zeolite membrane with X-rays, a ratio A/B of an intensity A (peak intensity $I_{100}$) of a (1,0,0) orientation to an intensity B (peak intensity $I_{20\text{-}1}$) of a (2,0,-1) orientation is not less than 0.7 times, and an $SiO_2/Al_2O_3$ molar ratio in a surface portion of the zeolite membrane is not less than 25.

Aspect 2-2: the inorganic porous support-zeolite membrane composite of Aspect 2-1, in which the inorganic porous support-zeolite membrane composite has a $CF_4$ permeance of not more than $1 \times 10^{-9}$ mol/(m$^2$·s·Pa).

Aspect 2-3: the inorganic porous support-zeolite membrane composite of Aspect 2-1 or 2-2, in which a ratio C/D of an $SiO_2/Al_2O_3$ molar ratio C in the surface portion to an $SiO_2/Al_2O_3$ molar ratio D in a center portion of the zeolite membrane in a thickness direction is less than 1.5.

Aspect 2-4: the inorganic porous support-zeolite membrane composite of any one of Aspects 2-1 to 2-3, in which the zeolite membrane has a thickness which has a minimum value of not less than 5 $\mu$m.

Aspect 2-5: the inorganic porous support-zeolite membrane composite of any one of Aspects 2-1 to 2-4, in which the inorganic porous support-zeolite membrane composite has a $CO_2$ permeance of not more than $1 \times 10^{-6}$ mol/(m$^2$·s·Pa).

Aspect 2-6: the inorganic porous support-zeolite membrane composite of any one of Aspects 2-1 to 2-5, in which the zeolite membrane is a CHA-type zeolite crystal layer.

Aspect 2-7: a purified component production method, including: bringing a mixture of a first component and a second component into contact with the inorganic porous support-zeolite membrane composite described in any one of Aspects 2-1 to 2-6, to obtain a first purified component, a second purified component, or both, in which the first component permeates through the zeolite membrane of the inorganic porous support-zeolite membrane composite, the second component does not permeate through the zeolite membrane of the porous support-zeolite membrane composite, the first purified component is the first component that has permeated through the zeolite membrane, and the second purified component is the second component that has not permeated through the zeolite membrane.

Aspect 2-8: the purified component production method of Aspect 2-7, in which both the first component and the second component are liquids.

Aspect 2-9: the purified component production method of Aspect 2-7 or 2-8, in which both the first component and the second component are gases.

Aspect 2-10: the purified component production method of any one of Aspects 2-7 to 2-9, in which one of the first component and the second component is water, and the other is an organic compound.

Aspect 2-11: the purified component production method of any one of Aspects 2-7 to 2-10, in which one of the first component and the second component is water, and the other contains acid.

Embodiment 3

The following description will discuss Embodiment 3 of the present invention in detail.

[Porous support-zeolite membrane composite]

A porous support-zeolite membrane composite in accordance with the present embodiment has a porous support and a zeolite membrane formed on the porous support. The membrane composite can be achieved by combining, as appropriate, respective technical means described in Embodiment 1 and Embodiment 2 above, to the extent that the respective means are not mutually exclusive and the effects obtained by the respective means are not mutually contradictory. Examples of the technical means to be combined include, but are not limited to: characteristics regarding the zeolite membrane, such as the components of the zeolite membrane, the surface-side SAR, the SAR in the center portion, the surface SAR, the framework structure of the zeolite, the orientation characteristics of the zeolite membrane, the orientation characteristics of the zeolite membrane on the outer side of the support, the thickness of the zeolite membrane, and the grain size of the zeolite; characteristics regarding the porous support, such as the shape of the porous support, the wall thickness of the porous support, the average pore size of the porous support, and the porosity of the porous support; and characteristics regarding the membrane composite, such as the permeability characteristics of the membrane composite and the permeability of the membrane composite. Here are descriptions of examples of the characteristics of the membrane composite that do not limit the present embodiment.

<Framework structure>

From the perspective of adjusting the zeolite pore size such that in the membrane composite, carbon dioxide can easily diffuse into the zeolite pores and hydrocarbon does not easily enter the pores, the structure which has a 6 to 8-membered oxygen ring structure and in which the pores are three-dimensionally connected with each other is preferable. The most preferable structure of the principal zeolite forming the zeolite membrane is the CHA. In other words, the zeolite membrane is most preferably composed of CHA-type zeolite.

<SAR>

The $SiO_2/Al_2O_3$ molar ratio of the zeolite membrane is typically not less than 5, preferably not less than 10, more preferably not less than 15, even more preferably not less than 18, particularly preferably not less than 20, and even more particularly preferably not less than 25, and typically not more than 70, preferably not more than 60, and more preferably not more than 50. When the $SiO_2/Al_2O_3$ molar ratio is equal to or greater than the above-described lower limit, the zeolite membrane has good acid resistance. When the $SiO_2/Al_2O_3$ molar ratio of the zeolite membrane is equal to or smaller than the above-described upper limit, the zeolite membrane has good hydrophilicity, and exhibits a good permeation property with respect to water and carbon dioxide.

The $SiO_2/Al_2O_3$ molar ratio in the surface portion of the zeolite membrane is preferably not less than 25. The zeolite membrane having such an SAR exhibits high acid resistance. From the perspective of enhancing the acid resistance, the SAR in the surface portion of the zeolite membrane is typically not less than 25, preferably not less than 26, more preferably not less than 27, and even more preferably not less than 28. However, when the SAR of the zeolite membrane is excessively high, the permeation flux tends to be small. From this perspective, the SAR in the surface portion of the zeolite membrane is typically not more than 70, preferably not more than 60, and more preferably not more than 50.

Regarding the SAR of the zeolite membrane, when the uniformity is higher in the membrane thickness direction, the separation characteristic tends to be more excellent. From the perspective of increasing separation characteristic, the ratio (SAR ratio) C/D of the $SiO_2/Al_2O_3$ molar ratio C in the surface portion of the zeolite membrane to the $SiO_2/Al_2O_3$ molar ratio D in the center portion of the zeolite membrane in the thickness direction is preferably less than 1.5, more preferably not more than 1.4, and even more preferably not more than 1.3. The SAR ratio C/D is preferably as low as possible in a feasible range, and may be not less than 1.0 from the perspective of, for example, the feasibility in the production method described later.

The $SiO_2/Al_2O_3$ molar ratio measured from a surface of the zeolite membrane is preferably not less than 25. The zeolite membrane having such an SAR exhibits high acid resistance. From the perspective of enhancing the acid resistance, the SAR in the surface portion of the zeolite membrane is typically not less than 25, preferably not less than 26, more preferably not less than 27, and even more preferably not less than 28. However, when the SAR of the zeolite membrane is excessively high, the permeation flux tends to be small. From this perspective, the SAR in the surface portion of the zeolite membrane is typically not more than 70, preferably not more than 60, and more preferably not more than 50.

<Orientation characteristics>

In an X-ray diffraction pattern obtained by irradiating a surface of the zeolite membrane with X-rays, the ratio A/B ($I_{100}/I_{20-1}$) of the intensity A (peak intensity $I_{100}$ at around $2\theta=9.6°$) of a (1,0,0) orientation to the intensity B (peak intensity $I_{20-1}$ at around $2\theta=20.8°$) of a (2,0,-1) orientation is preferably not less than 0.7 times, more preferably not less than 0.9, and even more preferably not less than 1.0. From the perspective of forming a dense membrane having high permeation performance and high separation performance, the intensity ratio A/B is preferably not more than 100.

In an X-ray diffraction pattern obtained by irradiating a surface of the zeolite membrane with X-rays, the peak intensity $I_{111}$ at around $2\theta=17.9°$ may be typically not less than 0.3 times, preferably not less than 0.35 times, and more preferably not less than 0.4 times the peak intensity $I_{20-1}$ at around $2\theta=20.8°$, but typically less than 1.0 times, preferably less than 0.8 times, and more preferably less than 0.7 times the peak intensity $I_{20-1}$ at around $2\theta=20.8°$. When the peak intensity $I_{111}$ satisfies the above-described range, during the production of the membrane composite, defects generated in the zeolite membrane due to, for example, the thermal expansion during a hydrothermal synthesis step is more reduced, and the membrane composite exhibits more excellent separation performance, accordingly.

In the present embodiment, in a case where the zeolite membrane is composed of CHA-type zeolite, in an X-ray diffraction pattern obtained by irradiating a surface of the zeolite membrane with X-rays, the integrated intensity at around $2\theta=17.9°$ may be typically not less than 0.20 times, preferably not less than 0.30 times, and more preferably not less than 0.40 times the integrated intensity at around $2\theta=20.8°$, but typically less than 1.00 times, preferably less than 0.80 times, and more preferably less than 0.70 times the integrated intensity at around $2\theta=20.8°$.

In a case where the zeolite membrane is composed of CHA-type zeolite, in an X-ray diffraction pattern obtained by irradiating a surface of the zeolite membrane with X-rays, the integrated intensity at $2\theta=9.6°\pm0.6°$ may be typically not less than 1.50 times, preferably not less than 2.50 times, more preferably not less than 3.00 times, particularly preferably not less than 3.50 times, and most preferably not less than 5.00 times the integrated intensity at $2\theta=20.8°\pm0.6°$, and typically not more than 10.0 times, preferably not more than 9.00 times, more preferably not more than 8.00 times, and particularly preferably not more than 7.50 times the integrated intensity at $2\theta=20.8°\pm0.6°$.

In a case where the zeolite membrane is composed of CHA-type zeolite, when in an X-ray diffraction pattern obtained by irradiating a surface of the zeolite membrane with X-rays, the peak intensity of the peak at around $2\theta=17.9°$ is less than 0.50 times the peak intensity of the peak at around $2\theta=20.8°$ and the peak intensity of the peak at around $2\theta=9.6°$ is not less than 2.0 times but less than 4.00 times the peak intensity of the peak at around $2\theta=20.8°$, in the X-ray diffraction pattern obtained by the irradiation with X-rays that reach the support, the above-described ratio of the peak intensity of the peak at around $2\theta=17.9°$ to the peak intensity of the peak at around $2\theta=20.8°$ indicates that zeolite crystals in the zeolite membrane grow with a sufficient degree of orientation, and a dense zeolite membrane having high separation performance is formed. From the perspective of formation of a dense zeolite membrane having high separation performance, in the X-ray diffraction pattern obtained by irradiation with the X-rays that reach the support, the ratio of the peak intensity of the peak at around $2\theta=17.9°$ to the peak intensity of the peak at around $2\theta=20.8°$ is more preferably not more than 0.49. The lower limit of the said ratio can be determined, as appropriate, from the perspective of sufficiently achieving the effect in the above perspective, and may be, for example, not less than 0.001.

In a case where the zeolite membrane is composed of CHA-type zeolite, when in an X-ray diffraction pattern obtained by irradiating a surface of the zeolite membrane with X-rays, the peak intensity of a peak at around $2\theta=17.9°$ is less than 0.50 times the peak intensity of a peak at around $2\theta=20.8°$, and the peak intensity of a peak at around $2\theta=9.6°$ is not less than 2.0 times but less than 4.00 times the peak intensity of a peak at around $2\theta=20.8°$, in the X-ray diffraction pattern obtained by irradiation with the X-rays that reach the inorganic porous support, the ratio of the peak intensity of a peak at around $2\theta=9.6°$ to the peak intensity of a peak at around $2\theta=20.8°$ preferably has a higher lower limit and a lower upper limit, from the perspective of formation of a dense zeolite membrane having high separation performance. For example, from the above perspective, in the X-ray diffraction pattern obtained by the irradiation with the X-rays that reach the support, the ratio of the peak intensity of the peak at around $2\theta=9.6°$ to the peak intensity of the peak at around $2\theta=20.8°$ is more preferably not less than 2.10, even more preferably not less than 2.30, and still more preferably not less than 2.50. From the above perspective, the said ratio is more preferably not more than 3.90, even more preferably not more than 3.80, and still more preferably not more than 3.70.

In a case where the zeolite membrane is composed of CHA-type zeolite, when in an X-ray diffraction pattern obtained by irradiating a surface of the zeolite membrane with X-rays, the integrated intensity of a peak at around $2\theta=17.9°$ is less than 0.50 times the integrated intensity of a peak at around $2\theta=20.8°$, and the integrated intensity of a peak at around $2\theta=9.6°$ is not less than 2.00 times but less than 8.00 times the integrated intensity of a peak at around $2\theta=20.8°$, in a case where the zeolite membrane is composed of CHA-type zeolite, in the X-ray diffraction pattern obtained by irradiating a surface of the zeolite membrane with X-rays, the said ratio of the integrated intensity of a peak at around $2\theta=17.9°$ to the integrated intensity of a peak at around $2\theta=20.8°$ indicates zeolite crystals in the zeolite membrane grow with a sufficient degree of orientation, and a dense zeolite membrane having high separation performance is formed. From the perspective of formation of a dense zeolite membrane having high separation performance, in a case where the zeolite membrane is composed of CHA-type zeolite, in an X-ray diffraction pattern obtained by irradiating a surface of the zeolite membrane with X-rays, the ratio of the integrated intensity of a peak at around $2\theta=17.9°$ to the integrated intensity of a peak at around $2\theta=20.8°$ is more preferably not more than 0.49. The lower limit of the said ratio can be determined, as appropriate, from the perspective of sufficiently achieving the effect in the above perspective, and may be, for example, not less than 0.001.

In the present embodiment, in a case where the zeolite membrane is composed of CHA-type zeolite, when in an X-ray diffraction pattern obtained by irradiating a surface of the zeolite membrane with X-rays, the integrated intensity of a peak at around $2\theta=17.9°$ is less than 0.50 times the integrated intensity of a peak at around $2\theta=20.8°$, and the integrated intensity of a peak at around $2\theta=9.6°$ is not less than 2.00 times but less than 8.00 times the integrated intensity of a peak at around $2\theta=20.8°$, in a case where the zeolite membrane is composed of CHA-type zeolite, in an X-ray diffraction pattern obtained by irradiating a surface of the zeolite membrane with X-rays, the ratio of the integrated intensity of a peak at around $2\theta=9.6°$ to the integrated intensity of a peak at around $2\theta=20.8°$ preferably has a higher lower limit and a lower upper limit, from the perspective of formation of a dense zeolite membrane having high separation performance. For example, in a case where the zeolite membrane is composed of CHA-type zeolite, in an X-ray diffraction pattern obtained by irradiating a surface of the zeolite membrane with X-rays, the ratio of the integrated intensity of a peak at around $2\theta=9.6°$

to the integrated intensity of a peak at around $2\theta=20.8°$ is more preferably not less than 2.1, even more preferably not less than 2.3, and still more preferably not less than 2.5, from the above perspective. Furthermore, from the above perspective, the ratio is more preferably not more than 7.50, and even more preferably not more than 7.00.

<Orientation characteristics on outer side of support>

In the present embodiment, in an X-ray diffraction pattern obtained by irradiating a surface of the zeolite membrane with X-rays at the minimum incident angle that allows the X-rays to pass through the zeolite membrane, the integrated intensity of a peak at around $2\theta=9.6°$ may be not less than 6.0 times the integrated intensity of a peak at around $2\theta=20.8°$.

In the X-ray diffraction pattern obtained by the irradiation with the X-rays at the minimum incident angle, a high ratio of the integrated intensity of a peak at around $2\theta=9.6°$ to the integrated intensity of a peak at around $2\theta=20.8°$ is considered to mean that, for example, a larger number of zeolite crystals are oriented and grow such that when the CHA structure is in the rhombohedral setting, the (1,0,0) plane is oriented approximately parallel to a surface of the membrane composite. From the perspective of increasing separation performance of a zeolite membrane and obtaining a dense zeolite membrane, it is advantageous for zeolite crystals to be oriented and grow in the membrane composite. From such perspectives, the above ratio is preferably higher, typically not less than 6.0 times, preferably not less than 6.3 times, more preferably not less than 6.5 times, even more preferably not less than 6.7 times, and particularly preferably not less than 7.0 times. In particular, not less than 10 times is more preferable, not less than 12 times is even more preferable, not less than 15 times is particularly preferable, and not less than 20 is most preferable. The upper limit of the above ratio can be determined, as appropriate, from the perspective of sufficient achievement of the effects in the above perspectives, and may be, for example, not more than 100 times.

In the X-ray diffraction pattern obtained by the irradiation with the X-rays at the minimum incident angle, a high ratio of the integrated intensity of a peak at around $2\theta=9.6°$ to the integrated intensity of a peak at the $2\theta=16.2°$ is considered to mean that, for example, a larger number of zeolite crystals are oriented and grow such that when the CHA structure is in the rhombohedral setting, the (1,0,0) plane is oriented approximately parallel to a surface of the membrane composite. From the perspective of increasing separation performance of a zeolite membrane and obtaining a dense zeolite membrane, it is advantageous for zeolite crystals to be oriented and grow in the membrane composite. From such perspectives, the above ratio is preferably higher, typically not less than 6.0 times, preferably not less than 6.5 times, more preferably not less than 7.0 times, even more preferably not less than 7.5 times, particularly preferably not less than 8.0 times, and most preferably not less than 10.0 times. The upper limit of the above ratio can be determined, as appropriate, from the perspective of sufficient achievement of the effects in the above perspectives, and may be, for example, not more than 100 times.

<Membrane thickness>

The thickness of the zeolite membrane is typically not less than 2 $\mu$m, preferably not less than 3 $\mu$m, more preferably not less than 5 $\mu$m, even more preferably not less than 7 $\mu$m, and particularly preferably not less than 9 $\mu$m. When the thickness of the zeolite membrane falls within such a numerical range, the membrane composite has high strength and permeation selectivity, and can suitably be used for separation and concentration for a mixture. There is no particular upper limit for the thickness of the zeolite membrane, but the thickness of the zeolite membrane is typically not more than 30 $\mu$m, preferably not more than 25 $\mu$m, more preferably not more than 20 $\mu$m, and even more preferably not more than 15 $\mu$m. When the thickness of the zeolite membrane falls within such a numerical range, the membrane in the membrane composite is sufficiently formed so that high separation performance is exhibited, and in addition, the membrane composite exhibits high permeation flux. Thus, the membrane composite can suitably be used for separation and concentration for a mixture. In a case of use in the separation of gases in a mixture, the membrane thickness is preferably not more than 5.0 $\mu$m, more preferably not more than 4.0 $\mu$m, even more preferably not more than 3.5 $\mu$m, and particularly preferably not more than 3.0 $\mu$m.

When the thickness of the zeolite membrane is thick, a component of an aqueous reaction mixture that has a high reaction rate is preferentially consumed during the growth of the membrane. Thus, the composition of the aqueous reaction mixture changes over time, and the SAR in the thickness direction of the zeolite membrane can change. It is therefore necessary to select an appropriate membrane thickness based on the structure of a desired zeolite membrane.

From the perspective of accurately determining the uniformity of the SAR in the zeolite membrane, the minimum value of the thickness of the zeolite membrane is preferably not less than 5 $\mu$m. In the case of use in the separation for a mixture of gases, the minimum value of the thickness of the zeolite membrane is preferably not more than 5.0 $\mu$m, more preferably not more than 4.0 $\mu$m, even more preferably not more than 3.5 $\mu$m, and particularly preferably not more than 3.0 $\mu$m.

<Permeability characteristics of membrane composite>

When the measurement temperature is 50°C and the difference between pressures inside and outside the membrane of a membrane composite is 0.3 MPa, the $CF_4$ permeance or the $SF_6$ permeance of the membrane composite is typically not more than $5.0 \times 10^{-9}$ mol/(m²·s·Pa), preferably not more than $3.5 \times 10^{-9}$ mol/(m²·s·Pa), more preferably not more than $3.0 \times 10^{-9}$ mol/(m²·s·Pa), even more preferably not more than $1.5 \times 10^{-9}$ mol/(m²·s·Pa), particularly preferably not more than $1.0 \times 10^{-9}$ mol/(m²·s·Pa), and most preferably not more than $5.0 \times 10^{-10}$ mol/(m²·s·Pa). In particular, the $CF_4$ permeance or the $SF_6$ permeance is not more than $1 \times 10^{-10}$ mol/(m²·s·Pa), more preferably not more than $5.0 \times 10^{-11}$ mol/(m²·s·Pa), and more preferably not more than $3.0 \times 10^{-11}$ mol/(m²·s·Pa). When the $CF_4$ permeance or the $SF_6$ permeance of the membrane composite falls within such a numerical range, defects which are present in the membrane composite and through which organic compound molecules permeate are reduced. Thus, the membrane composite has more excellent separation performance.

When the measurement temperature is 50°C and the difference between pressures inside and outside the membrane is 0.1 MPa, the $CO_2$ permeance of the membrane composite may be typically not more than $3.0 \times 10^{-4}$ mol/(m²·s·Pa). Regarding the lower limit of the $CO_2$ permeance of the membrane composite, the said $CO_2$ permeance may be, for example, not less than $1.0 \times 10^{-9}$ mol/(m²·s·Pa), not less than $1.0 \times 10^{-8}$ mol/(m²·s·Pa), or not less than $1.0 \times 10^{-7}$ mol/(m²·s·Pa). When the $CO_2$ permeance of the membrane composite is between such upper and lower limits, the membrane composite exhibits a suitable permeation flux in gas separation.

<Permeability coefficient of membrane composite>

In a case where the type of zeolite forming the zeolite membrane is CHA-type zeolite (described later), when the measurement temperature is 50°C and the difference between pressures inside and outside the membrane is 0.3 MPa, the $CF_4$ permeability of the membrane composite may be typically not more than $4.5 \times 10^{-8}$ (mol·μm)/(m²·s·Pa), preferably not more than $3.5 \times 10^{-8}$ (mol·μm)/(m²·s·Pa), and more preferably not more than $3.0 \times 10^{-8}$ (mol·μm)/(m²·s·Pa), and may be even more preferably not more than $2.0 \times 10^{-8}$ (mol·μm)/(m²·s·Pa), particularly preferably not more than $1.0 \times 10^{-8}$ (mol·μm)/(m²·s·Pa), and most preferably $5.0 \times 10^{-9}$ (mol·μm)/(m²·s·Pa).

In a case where the type of zeolite forming the zeolite membrane is CHA-type zeolite (described later), when the measurement temperature is 50°C and the difference between pressures inside and outside the membrane is 0.3 MPa, the $SF_6$ permeability of the membrane composite may be typically not more than $4.5 \times 10^{-8}$ (mol·μm)/(m²·s·Pa), preferably not more than $3.5 \times 10^{-8}$ (mol·μm)/(m²·s·Pa), and more preferably not more than $3.0 \times 10^{-8}$ (mol·μm)/(m²·s·Pa), and may be even more preferably not more than $2.0 \times 10^{-8}$ (mol·μm)/(m²·s·Pa), particularly preferably not more than $1.0 \times 10^{-8}$ (mol·μm)/(m²·s·Pa), and most preferably $5.0 \times 10^{-9}$ (mol·μm)/(m²·s·Pa).

When the permeability of the membrane composite falls within such a numerical range, the defects present in the membrane composite are reduced. Thus, the membrane composite has more excellent separation performance. Note that the above values may be values with respect to the membrane composite before modifications to the membrane composite, such as ion exchange treatment and silylation treatment to the membrane composite, are carried out after the removal of an organic template in a case where the membrane composite was synthesized in the presence of the organic template, or after synthesis in a case where the membrane composite was synthesized in the absence of an organic template.

[Method for producing membrane composite]

It is possible to carry out a method for producing a membrane composite in accordance with the present embodiment, by combining the operations described above in relation to Embodiment 1 and Embodiment 2, as appropriate according to the desired membrane composite. As such, a detailed description of the method for producing a membrane composite in accordance with the present embodiment is not repeated.

[Purified component production method]

A purified component production method in accordance with the present embodiment is the method which includes bringing a mixture of a first component and a second component into contact with the porous support-zeolite membrane composite in accordance with the present embodiment, to obtain a first purified component, a second purified component, or both, in which the first component permeates through the zeolite membrane of the membrane composite, the second component does not permeate through the zeolite membrane, the first purified component is the first component that has permeated through the zeolite membrane, and the second purified component is the second component that has not permeated through the zeolite membrane composite. Since the operations of the purified component production method are as described above in relation to Embodiment 2, the descriptions thereof are not repeated.

The purified component production method is applicable to both liquids and gases. That is, both the first component and the second component may be liquids, or both the first component and the second component may be gases. Both the first component and the second component may be inorganic substances, or may be organic substances. The first component and the second component may each be a single component, or may each be a mixed component of two or more components. For example, one of the first component and the second component may be water, and the other may be an organic compound. The membrane composite can also have excellent acid resistance. Thus, in the purified component production method, one of the first component and the second component may be water, and the other may contain acid. It is possible to carry out such a purified component production method in a manner similar to the membrane composite-based separation or concentration disclosed in, for example, Patent Literature 1.

[Purified organic compound production method]

The purified organic compound production method in accordance with the present embodiment is the method of using the membrane composite in accordance with the present embodiment to obtain a purified organic compound from a mixture which contains an organic compound. Since the operations of the purified organic compound production method are as described above in relation to Embodiment 1, the descriptions thereof are not repeated.

[Additional remark]

The present invention is not limited to the embodiments described above, but may be altered in various ways within the scope of the claims. Any embodiment derived by appropriately combining technical means disclosed in differing embodiments is within the technical scope of the present invention.

Examples

Here are descriptions of Examples of the present invention. The present invention is further specifically described here through Examples. The present invention is not limited to Examples below, as long as it does not depart from the spirit thereof. In the following Examples, SEM-EDX measurement of a grain size distribution of seed crystals, X-ray diffraction (XRD) pattern measurement, grazing incidence X-ray diffraction (GIXD) measurement, gas permeability test, and measurement of membrane thickness, air permeation amount, and pervaporation performance were carried out by the methods described below.

[Measurement of grain size distribution]

In order to determine the average grain size (median diameter (D50)) of zeolite seed crystals used in the formation of the zeolite membrane, measurement of a grain size distribution of the zeolite seed crystals was carried out under the following conditions. The grain size (D50) corresponding to the cumulative 50% in a volume-based grain size distribution determined by the laser diffraction scattering method was used as the average grain size of the zeolite seed crystals.

· Device name: laser diffraction grain size distribution measurement device SALD-2100 (manufactured by Shimadzu Corporation)

· Measurement method: laser analysis and laser scattering
· Measurement range: 0.03 $\mu$m to 1,000 $\mu$m
Light source: semiconductor laser (wavelength: 680 nm, power: 3 mW)
· Detector: 76-element deformation concentric sensor, lateral sensor, posterior sensor (4-device)
· Sampler: SALD-BS2

· Dispersion solvent: water

[SEM-EDX measurement]

In order to determine the $SiO_2/Al_2O_3$ molar ratio of the zeolite seed crystals and the zeolite membrane, SEM-EDX measurement was carried out under the following conditions. A method for determining the measurement areas of the surface portion SAR and the center portion SAR is as described above in relation to Embodiment 2. Three surface images of the zeolite membrane at 5,000x magnification were used to measure the $SiO_2/Al_2O_3$ molar ratios of not less than 9 regions of (2±0.5 µm) × (2±0.5 µm), and the average of the molar ratios was used as the surface SAR of the zeolite membrane.

· Device name (SEM): JSM-7900F (manufactured by JEOL Ltd.)

· Acceleration voltage: 6 kV

· Detector: secondary electron detector

· Device name (EDX): Ultim Max 170 (manufactured by Oxford Instruments)
· Acceleration voltage: 6 kV
· Magnification: 5,000x

[Measurement of X-ray diffraction (XRD) pattern]

Measurement of an X-ray diffraction pattern of a surface of the zeolite membrane was carried out under the following conditions.

· Device name: RINT-UltimaIII, manufactured by Rigaku Corporation

Specifications of optical system, Incident side: 1.5 kW Cu X-ray tube (CuK$\alpha$)

Multi-layer membrane mirror
Soller Slit (aperture angle: 5°)
Light-receiving side: scintillation counter
Long parallel slit (aperture angle: 0.114°)

Measurement conditions, X-ray power (CuK$\alpha$): 40 kV, 30 mA

Scanning axis: $\theta/2\theta$
Scanning range ($2\theta$): 5.0° to 70.0°
Scanning rate: 1°/min (at 0.01° intervals)

In the measurement, the direction of the X-ray irradiation was parallel to the axial direction of the cylindrical sample.

[Grazing incidence X-ray diffraction (GIXD) measurement]

GIXD measurement was carried out by the same method as that for XRD, except for control of the incident angle of X-rays. In the GIXD measurement, the incident angle of the X-rays was controlled such that the incident-side angle of the X-rays was fixed during one measurement and measurement was carried out a plurality of times with a different incident angle for each time. The incident angle of the X-rays at the time when the all peaks originating from the zeolite membrane were no longer detected as the incident angle was gradually reduced was defined as 0°. The incident angle of the X-rays at the time when peaks originating from a support (alumina) began to be detected as the incident angle was gradually increased from 0° was defined as the minimum incident angle that allowed the X-rays to pass through the zeolite membrane, and was used as the angle for measuring the zeolite membrane.
An obtained diffraction pattern was smoothed with use of analysis software, a K$\alpha$2 profile was removed, and then peaks were detected by the second derivative method. The obtained peaks were visually checked whether the detection was accurately carried out, and the error in integrated intensity between actual peaks and peaks for detection was kept within 5%. In changing the irradiation angle, the height of a surface of the membrane was fixed such that the membrane was irradiated with the X-rays at the same position. As the values of integrated intensities, values calculated by software regarding the peaks for detection were employed. As the values of peak intensities, values calculated by software regarding the peaks for detection were employed.

[Gas permeability test]

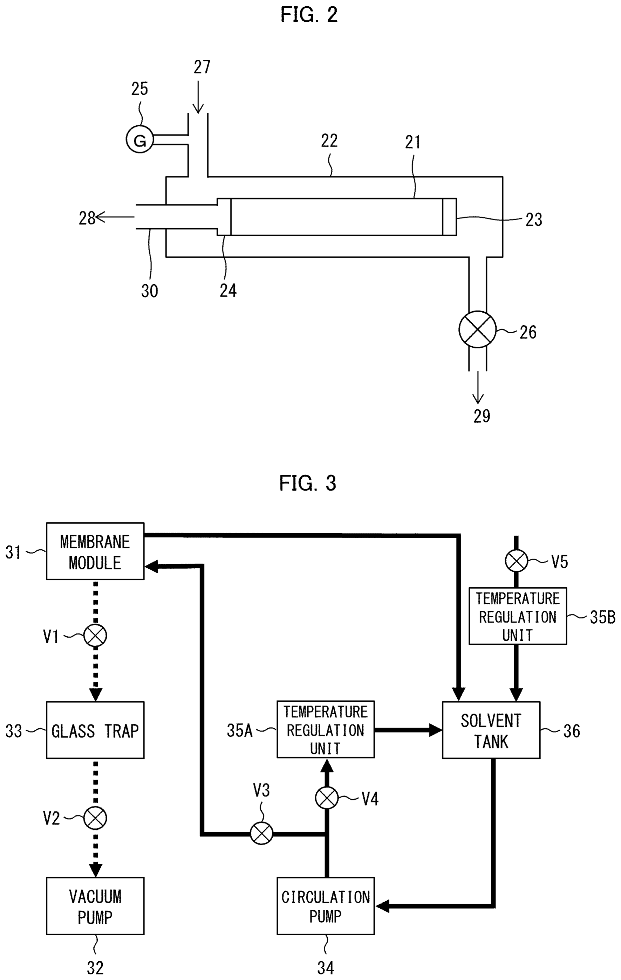

A gas permeability test was carried out to evaluate the permeance of the membrane composite. Fig. 2 is a schematic view of the configuration of a device used in the gas permeability test in Examples. In the device in Fig. 2, a membrane composite 21 in the shape of a cylindrical tube is installed in a constant temperature oven (not illustrated) in the state of being housed in a pressure-resistant container 22 made of stainless steel. A temperature regulation unit is provided to the constant temperature oven so that the temperature of a sample gas can be adjusted. One end of the membrane composite 21 in the shape of a cylindrical tube is sealed with a circular end pin 23. The other end is connected to one end of a connection part 24, and the other end of the connection part 24 is connected to the pressure-resistant container 22. The inner side (permeation side) of the membrane composite 21 in the shape of a cylindrical tube and a pipe 30 through which a permeate gas 28 is discharged are connected together via the connection part 24. The pipe 30 extends to the outside of the pressure-resistant container 22. A pressure gauge 25 for measuring the pressure on a supply side on which a supply gas 27 is suppled, and a back-pressure valve 26 for adjusting the pressure on the supply side, are connected to any locations that are in communication with the pressure-resistant container 22. The portions where the respective members are connected are sealed.

In the separation and concentration with respect to mixed gas, the mixed gas (supply gas 27) is supplied between the pressure-resistant container 22 and the membrane composite 21 at a fixed supply gas pressure, and the permeate gas 28 that has permeated through the membrane composite 21 is measured via a flowmeter (not illustrated) connected to the pipe 30. In order to remove components such as water and air, drying at a temperature equal to or higher than measurement temperature, and an exhaust operation which is for exhausting exhaust gas 29 or a purging operation which is performed via the supply gas in use are carried out. After the temperature of the sample and the difference in pressure between the supply gas 27 side and the permeate gas 28 side of the membrane composite 21 are set to be constant, and the flow rate of the permeate gas is then stabilized, the flow rate of the sample gas (permeate gas 28) which has permeated through the membrane composite 21 is measured, and a gas permeance [mol/(m²·s·Pa)] is thereby calculated. As the pressure when the permeance is calculated, the difference in pressure (pressure difference) between the supply side and the permeation side is used. Numerical values as the results are indicated as, for example, 3.71E-08 for $3.71 \times 10^{-8}$.

[Pervaporation]

To evaluate the separation performance of the membrane composite with respect to mixtures containing water and organic compounds, measurement was carried out by the pervaporation method. Fig. 3 is a schematic view of the configuration of a device used in the pervaporation method. As illustrated in Fig. 3, the device includes: a membrane module 31 which houses a porous support-zeolite membrane composite; a vacuum pump 32 which is connected to the membrane module 31; a glass trap 33 which is installed between the membrane module 31 and the vacuum pump 32; a circulation pump 34 which delivers a mixture to the membrane module 31; temperature regulation units 35A and 35B which are located along the flow path of the mixture and which adjust the temperature of the mixture; and a solvent tank 36 which houses the mixture. The device is provided with valves V1 to V5, as appropriate. In Fig. 3, the solid line represents the flow of the mixture or water which merges into the mixture, and the dotted line represents the flow of a permeate, which has permeated through the membrane module, or the flow of evacuation.

In pervaporation, the mixture first circulates through the circulation pump 34, the temperature regulation unit 35A, and the solvent tank 36, and is adjusted at 70°C. The adjusted mixture then circulates through the membrane module 31, the solvent tank 36 and the circulation pump 34, and is subjected to separation and concentration. The pressure of the inner side (permeation side) of the membrane composite installed in the membrane module 31 is reduced by the vacuum pump 32, and the difference in pressure between the inner side and the outer side (supply side), with which the mixture comes into contact, is 0.4 MPaG. With this difference in pressure, from the mixture delivered to the membrane module 31, a permeate substance (mainly water) permeates into the membrane composite and vaporizes, and is separated accordingly. The permeate substance is collected in glass trap 33. Meanwhile, from the mixture, a non-permeate substance (mainly organic compound) is returned to the solvent tank 36 and is concentrated, and then circulates in the system. Due to the separation, the mixture that returns from the membrane module 31 to the solvent tank 36 has a reduced amount of water, but is compensated for the reduction by water added in a defined amount at defined periods of time through the temperature regulation unit 35B. After a certain period of time, the mass and the component concentrations of the permeate collected in glass trap 33 were measured. In the present Example, a mixture of isopropanol (IPA)/water = 95/5 (mass basis) was used as the mixture. The flow rate of the mixture delivered from the circulation pump 34 to the membrane module 31 was 10 L/min, and the time from the start of circulation to the measurement was set to 30 minutes for Examples and 60 minutes for Comparative Example.

The configuration of the device used in the pervaporation method for evaluating acid resistance will be described later with reference to another drawing.

[Measurement of membrane thickness]

To determine the thickness of the zeolite membrane, scanning electron microscopy (SEM) observations on a cross section of the membrane composite were carried out under the following conditions. A cross section was exposed by cutting through an arbitrary portion of the zeolite membrane composite, and a smooth surface was prepared with use of a cross section polisher. The smooth surface was observed via an SEM at a magnification of 2,000x to obtain an image of one field of view. With use of the image, the arithmetic average value of the distances from the surface of the zeolite membrane to the surface of the porous support was measured. The tilt of the obtained image was set such that the interface between the porous support and the zeolite membrane was visually horizontal at a low magnification. In the image, a line segment was drawn from the surface of the zeolite membrane in the direction perpendicular to the surface, and the length from the surface of the zeolite membrane to the point at which grains of the support were reached for the first time was measured. The measurement sites were three sites, which were the center position, and the one-fourth and three-fourth positions from the left when the image was divided into four sections in width. The arithmetic average of the three measured lengths was used as the membrane thickness. In order to clarify the interface between the porous support and the zeolite membrane, a secondary electron image and an EDX image were superimposed and displayed, and then used for the above calculation of the membrane thickness.

The measurement conditions of the membrane thickness are as follows.

· Device name (SEM): JSM-7900F (manufactured by JEOL Ltd.)

· Acceleration voltage: 6 kV
· Detector: secondary electron detector
· Magnification: 2,000x

· Device name (EDX): Ultim Max 170 (manufactured by Oxford Instruments)

· Acceleration voltage: 6 kV

Analysis software for image generation: AZtec Live (manufactured by Oxford Instruments)
· Image processing software: ImageJ

[Production and characteristics of membrane composite 1]

A membrane composite 1 was produced as indicated below.

(Support step)

A porous alumina tube (outer diameter: 12 mm, inner diameter: 9 mm, average pore size: 1.45 $\mu$m) was used as the porous support. Used as the zeolite seed crystals were CHA-type zeolite seed crystals which were obtained by (i) adding, to a gel composition of $SiO_2/Al_2O_3/NaOH/KOH/H_2O/N,N,N$-trimethyl-1-adamantanammonium hydroxide (TMADAOH) = 1.00/0.0165/0.120/0.0550/19.897/0.07, CHA-type zeolite as seed crystals in an amount of 2% by weight relative to the $SiO_2$ and (ii) carrying out crystallization through hydrothermal synthesis carried out at 160°C for 2 days. The average grain size of the zeolite seed crystals was 0.98 $\mu$m.

The zeolite seed crystals in an amount of 0.1% by mass were dispersed in water. In a dispersion thus obtained, the porous support was immersed for 1 second, and then dried at 120°C for not less than 2 hours so that the zeolite seed crystals were supported on the porous support. When the masses of the porous support before and after the support were measured, the support amount of the zeolite seed crystals was 0.67 g/m$^2$.

(Hydrothermal synthesis step)

To desalted water, a 25% aqueous KOH solution and a 1N aqueous NaOH solution were added, and aluminum hydroxide (containing 54% by mass of $Al_2O_3$, manufactured by Kyowa Chemical) was added and dissolved to prepare a transparent solution. Furthermore, an aqueous N,N,N-trimethyl-1-adamantanammonium hydroxide (hereinafter referred to as "TMADAOH") solution (containing 20% by mass of TMADAOH, manufactured by SACHEM, Inc.) was added as an organic template. Thereafter, colloidal silica (SNOWTEX ST-S, manufactured by Nissan Chemical Corporation) was added, and stirring was carried out for not less than 120 minutes to prepare an aqueous reaction mixture. The composition (molar ratio) of this aqueous reaction mixture was such that $SiO_2/Al_2O_3/NaOH/KOH/H_2O/TMADAOH$ = 1.0/0.064/0.075/0.15/100/0.044 and $SiO_2/Al_2O_3$ = 15.7.

The support having the seed crystals adhered thereto was vertically immersed in a reaction vessel containing the above aqueous reaction mixture, and then the reaction vessel was sealed. The reaction vessel was heated at 180°C for 18 hours, in a static state, under autogenous pressure. In doing so, the ratio between the aqueous reaction mixture and the support was such that the amount of the aqueous reaction mixture was approximately 2,050 g per meter of the support, and the entire support was brought into the state of being in contact with the aqueous reaction mixture. After a predetermined period of time elapsed, the support was allowed to cool before a zeolite membrane composite was taken out from the aqueous reaction mixture and washed, and the zeolite membrane composite was then dried at 120°C for not less than 2 hours.

(Removal step)

After the drying, the membrane composite was calcined in an electric furnace at 500°C for 10 hours so that the organic template remaining in the porous support was removed, and a porous support-zeolite membrane composite 1 (membrane composite 1, other samples are represented in the same manner below) of Example 1 was obtained. The temperature increase rate and the temperature decrease rate during the calcination were both 0.5°C/min.
From the difference between the mass of the membrane composite 1 and the mass of the porous support, the mass of the zeolite that crystallized to form a membrane on the porous support was found to be 82 $g/m^2$.

(Characteristics of membrane composite)

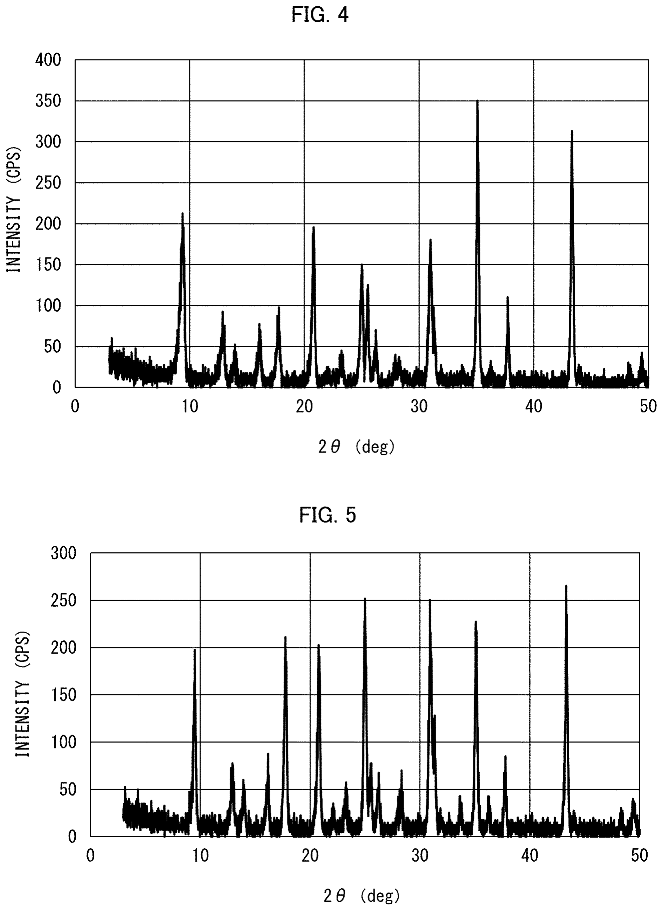

The thickness of the zeolite membrane of the obtained membrane composite 1 was approximately 9.4 $\mu$m. It was also confirmed that zeolite crystals were generated densely on the surface.
An XRD pattern of the zeolite membrane of the membrane composite 1 is illustrated in Fig. 4. From the XRD pattern, it was found that the zeolite membrane of CHA-type zeolite was formed. Furthermore, from the intensity A (peak intensity $I_{100}$) of a peak at around $2\theta=9.6°$ and the intensity B (peak intensity $I_{20-1}$) of a peak at around $2\theta=20.8°$ in the zeolite membrane, the intensity ratio A/B ($I_{100} / I_{20-1}$) was found to be 1.52. The ratio (integrated peak intensity $I_{111}$ at around $2\theta=17.9°$) / (integrated peak intensity $I_{20-1}$ at around $2\theta=20.8°$) was 0.50, and the ratio (integrated peak intensity $I_{100}$ at around $2\theta=9.6°$) / (integrated peak intensity $I_{20-1}$ at around $2\theta=20.8°$) was 2.84.
The $SiO_2/Al_2O_3$ molar ratios (SAR) of the surface portion and the center portion of the zeolite membrane of the membrane composite 1 were found to be 30.8 for the surface portion SAR(C) and 30.1 for the center portion SAR (D). Furthermore, the ratio C/D of these SARs was 1.02. The surface SAR was 28.7.
The incident angle of the X-rays with respect to the surface incident angle in the GIXD was set to 0.5°. The results are indicated in Table 2.
Under a supply gas pressure of 0.3 MPaG, the membrane composite 1 had a $CF_4$ permeance of $1.5 \times 10^{-11}$ mol/($m^2$·s·Pa), a $CO_2$ permeance of $3.7 \times 10^{-7}$ mol/($m^2$·s·Pa), and an $SF_6$ permeance of $1.5 \times 10^{-11}$ mol/($m^2$·s·Pa). The permeances of the membrane composite 1 with respect to $CO_2$, $CH_4$, $N_2$, He, $H_2$, $SF_6$, and $CF_4$ under supply gas pressures of 0.1 MPaG and 0.3 MPaG are indicated in Table 1. The result of pervaporation revealed that the permeation amount $Q_w$ of water was 2,575 g/($m^2$·h), and the permeation amount $Q_a$ of IPA was 2 g/($m^2$·h). The product of Qa and the membrane thickness was 18.8 g·$\mu$m/($m^2$·h).

[Production and characteristics of membrane composite 2]

A membrane composite 2 was produced as indicated below.

(Support step)

A porous alumina tube (outer diameter: 12 mm, inner diameter: 9 mm, average pore size: 1.45 $\mu$m) was used as the porous support. Used as the zeolite seed crystals were CHA-type zeolite seed crystals which were obtained by (i) adding, to a gel composition of $SiO_2/Al_2O_3/NaOH/KOH/H_2O/N,N,N$-trimethyl-1-adamantanammonium hydroxide (TMADAOH) = 1.00/0.033/0.120/0.0550/22.317/0.07, CHA-type zeolite as seed crystals in an amount of 2% by weight relative to the $SiO_2$ and (ii) carrying out crystallization through hydrothermal synthesis carried out at 160°C for 2 days. The average grain size of the zeolite seed crystals was 1.02 $\mu$m.
The zeolite seed crystals in an amount of 0.5% by mass were dispersed in water. In a dispersion thus obtained, the porous support was immersed for 3 minutes, and then dried at 120°C for not less than 2 hours so that the zeolite seed crystals were supported on the porous support. When the masses of the porous support before and after the support were measured, the support amount of the zeolite seed crystals was 1.70 $g/m^2$.

(Hydrothermal synthesis step)

To desalted water, a 25% aqueous KOH solution and a 1N aqueous NaOH solution were added, and aluminum hydroxide (containing 53.5% by mass of $Al_2O_3$, manufactured by Aldrich) was added and dissolved to prepare a transparent solution. Furthermore, an aqueous N,N,N-trimethyl-1-adamantanammonium hydroxide (hereinafter referred to as "TMADAOH") solution (containing 20% by mass of TMADAOH, manufactured by SACHEM, Inc.) was added as an organic template. Thereafter, colloidal silica (SNOWTEX ST-S, manufactured by Nissan Chemical Corporation) was added, and stirring was carried out for not less than 120 minutes to prepare an aqueous reaction mixture. The composition (molar ratio) of this aqueous reaction mixture was such that $SiO_2/Al_2O_3/NaOH/KOH/H_2O/TMADAOH$ = 1.0/0.064/0.075/0.15/100/0.044 and $SiO_2/Al_2O_3$ = 15.7.

The support having the seed crystals adhered thereto was vertically immersed in a reaction vessel containing the above aqueous reaction mixture, and then the reaction vessel was sealed. The period of time in which the reaction vessel was heated to 180°C was set to 5 hours, and the reaction vessel was heated at 180°C for 24 hours, in a static state, under autogenous pressure. In doing so, the ratio between the aqueous reaction mixture and the support was such that the amount of the aqueous reaction mixture was approximately 2,050 g per meter of the support, and the entire support was brought into the state of being in contact with the aqueous reaction mixture. After a predetermined period of time elapsed, the support was allowed to cool before a zeolite membrane composite was taken out from the aqueous reaction mixture and washed, and the zeolite membrane composite was then dried at 120°C for not less than 2 hours. The air permeation flux of a yet-to-be-calcined membrane composite during the production process of the membrane composite 2 was 0 mL/(m²·min).

(Removal step)

After the hydrothermal synthesis, the support was allowed to cool, and then taken out from an inner cylinder and washed. Thereafter, the membrane composite was dried at 120°C for not less than 5 hours. After the drying, the membrane composite was calcined in an electric furnace at 500°C for 10 hours so that the organic template remaining in the porous support was removed, and a porous support-zeolite membrane composite 2 of Comparative Example 1 was obtained. The temperature increase rate and the temperature decrease rate during the calcination were both 0.5°C/min.

(Characteristics of membrane composite)

The mass of the zeolite forming the membrane in the obtained membrane composite 2 was 98 g/m². The thickness of the zeolite membrane was 17.1 μm. In the XRD pattern, ratio (peak intensity $I_{111}$ at around $2\theta$=17.9°) / (peak intensity $I_{20-1}$ at around $2\theta$=20.8°) was 2.43, and ratio (peak intensity $I_{100}$ at around $2\theta$=9.6°) / (peak intensity $I_{20-1}$ at around $2\theta$=20.8°) was 1.46. The ratio (integrated peak intensity $I_{111}$ at around $2\theta$=17.9°) / (integrated peak intensity $I_{20-1}$ at around $2\theta$=20.8°) was 1.04, and the ratio (integrated peak intensity $I_{100}$ at around $2\theta$=9.6°) / (integrated peak intensity $I_{20-1}$ at around $2\theta$=20.8°) was 3.29. From the XRD pattern, it was confirmed that the zeolite membrane was composed of CHA-type zeolite.

The incident angle of the X-rays with respect to the surface incident angle in the GIXD was set to 0.6°. The results are indicated in Table 2.

The $SiO_2/Al_2O_3$ molar ratios (SAR) of the surface portion and the center portion of the zeolite membrane of the membrane composite 2 were found to be 19.3 for the surface portion SAR(C) and 29.5 for the center portion SAR (D). Furthermore, the ratio C/D of these SARs was 0.65. The surface SAR was 20.8.

Under a supply gas pressure of 0.3 MPaG, the membrane composite 2 had a $CF_4$ permeance of $1.1 \times 10^{-9}$ mol/(m²·s·Pa), a $CO_2$ permeance of $2.8 \times 10^{-7}$ mol/(m²·s·Pa), and an $SF_6$ permeance of $8.4 \times 10^{-10}$ mol/(m²·s·Pa). The permeances of the membrane composite with respect to $CO_2$, $CH_4$, $N_2$, He, $H_2$, $SF_6$, and $CF_4$ under a supply gas pressure of 0.1 MPaG are indicated in Table 1. The result of pervaporation revealed that the permeation amount $Q_w$ of water was 3,471 g/(m²·h), and the permeation amount $Q_a$ of IPA was 33 g/(m²·h). The product of Qa and the membrane thickness was 564.3 g·μm/(m²·h).

[Production and characteristics of membrane composite 3]

As indicated below, a membrane composite 3 was produced in the same manner as in Example 1 of Patent Literature 2.

(1) Preparation of reaction mixture for hydrothermal synthesis

To 2.15 g of aluminum hydroxide (containing 53.5% by mass of $Al_2O_3$, manufactured by Aldrich, Inc.), 63.0 g of an aqueous 1 mol/L-KOH solution and 61.8 g of water were added. Mixing and stirring were carried out for dissolution and a solution was prepared accordingly. To the obtained solution, 13.5 g of colloidal silica (SNOWTEX-40, manufactured by Nissan Chemical Corporation) was added, and stirring was carried out for 2 hours. A reaction mixture for hydrothermal synthesis was thus prepared. The composition (molar ratio) of the reaction mixture was such that $SiO_2/Al_2O_3/KOH/H_2O$ =

1/0.125/0.7/80. The SAR of the reaction mixture was 8.

(2) Preparation of inorganic porous support

A porous alumina tube (outer diameter: 12 mm, inner diameter: 9 mm) was cut to a length of 80 mm, washed with an ultrasonic washer, and dried. An inorganic porous support was thus prepared.

(3) Preparation of seed crystals

With 10.0 g of Y-type zeolite of a proton type (HY (SAR = 5), manufactured by JGC Catalysts and Chamicals Ltd.), 5.00 g of NaOH and 100 g of water was mixed, and a mixture thus obtained was heated at 100°C for 7 days. The mixture was then filtered, washed and dried so that grains of FAU-type zeolite were obtained. When the grain size distribution of the grains was measured, the D50 was 1.73 $\mu$m, and the local maximum values were 1.32 $\mu$m and 2.98 $\mu$m. The grain diameter of the grains was therefore approximately 2 $\mu$m. In this manner, grains of FAU-type zeolite were prepared as the seed crystals.

(4) Hydrothermal synthesis

The above seed crystals were dispersed in water to prepare a 2% by mass aqueous seed crystal dispersion, and the above-described inorganic porous support was immersed in the aqueous dispersion for a predetermined period of time. The inorganic porous support was then dried at 100°C for not less than 5 hours. The seed crystals were thus adhered to the outer circumferential surface of the inorganic porous support. The seed crystals were adhered. The mass of the seed crystals adhered to the inorganic porous support was 3 g/m$^2$.

The inorganic porous support having the seed crystals adhered thereto was inserted, along the vertical direction, into an inner cylinder (200 ml) made of Teflon (registered trademark) in which the above reaction mixture was housed, and then was immersed in the reaction mixture. The autoclave was then sealed, heated from room temperature to 180°C over 5 hours, and heated at 180°C for 24 hours, in a static state and under the autogenous pressure, so that a zeolite membrane was formed on the outer circumferential surface of the inorganic porous support. In this manner, a membrane-formed composite, which is an inorganic porous support on which a zeolite membrane was formed, was obtained by hydrothermal synthesis.

Subsequently, the membrane-formed composite was allowed to cool, taken out from the reaction mixture, washed, and dried at 100°C for 4 hours. A membrane composite 3 including the zeolite membrane and the inorganic porous support was thus obtained.

The air permeation amount of the membrane composite 3 was 9 L/(m$^2$·h) (150 ml/(m$^2$·min)).

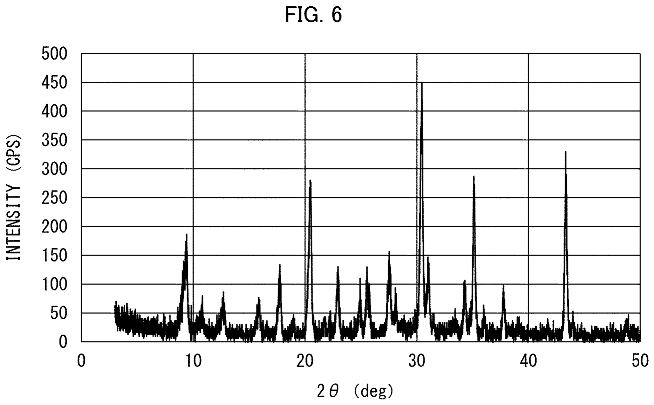

Furthermore, in the same manner as in Example 1, an XRD pattern of the zeolite membrane of the membrane composite 3 was obtained. The XRD pattern of the zeolite membrane of the membrane composite 3 is illustrated in Fig. 6. The membrane composite 3 had a ratio (peek intensity $I_{100}$ at around 2θ=9.6°)/(peak intensity $I_{20-1}$ at around 2θ=20.8°) (intensity ratio A/B) of 0.67.

The above intensity ratio A/B of the membrane composite 3 was assessed as being sufficiently low compared with that of the membrane composite 1 or 2 described above. Thus, the SAR(C), SAR(D) of the surface portion and the center portion of the membrane composite 3, and the ratio C/D between these SARs were not determined.

[Production and evaluation of membrane composite 4]

A membrane composite 4 was produced as indicated below.

(Support step)

A porous alumina tube (outer diameter: 12 mm, inner diameter: 9 mm, average pore size: 1.45 $\mu$m) was used as the porous support. Used as the zeolite seed crystals were CHA-type zeolite seed crystals which were obtained by (i) adding, to a gel composition of $SiO_2$/$Al_2O_3$/NaOH/KOH/$H_2O$/N,N,N-trimethyl-1-adamantanammonium hydroxide (TMADAOH) = 1.00/0.0165/0.120/0.0550/19.897/0.07, CHA-type zeolite as seed crystals in an amount of 2% by weight relative to the $SiO_2$ and (ii) carrying out crystallization through hydrothermal synthesis carried out at 160°C for 2 days. The average grain size of the zeolite seed crystals was 0.98 $\mu$m.

The zeolite seed crystals in an amount of 0.1% by mass were dispersed in water. In a dispersion thus obtained, the porous support was immersed for 1 second, and then dried at 120°C for not less than 2 hours so that the zeolite seed crystals were supported on the porous support. When the masses of the porous support before and after the support were measured, the support amount of the zeolite seed crystals was 0.40 g/m$^2$.

(Hydrothermal synthesis step)

To desalted water, a 25% aqueous KOH solution and a 1N aqueous NaOH solution were added, and aluminum hydroxide (containing 54% by mass of $Al_2O_3$, manufactured by Kyowa Chemical) was added and dissolved to prepare a transparent solution. Furthermore, an aqueous N,N,N-trimethyl-1-adamantanammonium hydroxide (hereinafter referred to as "TMADAOH") solution (containing 20% by mass of TMADAOH, manufactured by SACHEM, Inc.) was added as an organic template. Thereafter, colloidal silica (SNOWTEX ST-40, manufactured by Nissan Chemical Corporation) was added, and stirring was carried out for not less than 120 minutes to prepare an aqueous reaction mixture. The composition (molar ratio) of this aqueous reaction mixture was such that $SiO_2/Al_2O_3/NaOH/KOH/H_2O/TMADAOH = 1.0/0.048/0.075/0.15/100/0.044$ and $SiO_2/Al_2O_3 = 21.0$.

The support having the seed crystals adhered thereto was vertically immersed in a reaction vessel containing the above aqueous reaction mixture, and then the reaction vessel was sealed. The reaction vessel was heated at 180°C for 18 hours, in a static state, under autogenous pressure. In doing so, the ratio between the aqueous reaction mixture and the support was such that the amount of the aqueous reaction mixture was approximately 2,050 g per meter of the support, and the entire support was brought into the state of being in contact with the aqueous reaction mixture. After a predetermined period of time elapsed, the support was allowed to cool before a zeolite membrane composite was taken out from the aqueous reaction mixture and washed, and the zeolite membrane composite was then dried at 120°C for not less than 2 hours.

(Removal step)

After the drying, the membrane composite was calcined in an electric furnace at 500°C for 10 hours so that the organic template remaining in the porous support was removed, and a porous support-zeolite membrane composite 4 of Example 1 was obtained. The temperature increase rate and the temperature decrease rate during the calcination were both 0.5°C/min.

(Characteristics of membrane composite)

From the difference between the mass of the membrane composite 4 and the mass of the porous support, the mass of the zeolite that crystallized to form a membrane on the porous support was found to be 121 $g/m^2$.

The thickness of the zeolite membrane of the obtained membrane composite 4 was approximately 8.9 $\mu$m. In the XRD pattern, ratio (peak intensity $I_{111}$ at around $2\theta=17.9°$) / (peak intensity $I_{20-1}$ at around $20=20.8°$) was 0.49, and ratio (peak intensity $I_{100}$ at around $2\theta=9.6°$) / (peak intensity $I_{20-1}$ at around $2\theta=20.8°$) was 1.63. The ratio (integrated peak intensity $I_{111}$ at around $2\theta=17.9°$) / (integrated peak intensity $I_{20-1}$ at around $2\theta=20.8°$) was 0.49, and the ratio (integrated peak intensity $I_{100}$ at around $2\theta=9.6°$) / (integrated peak intensity $I_{20-1}$ at around $20=20.8°$) was 1.92. From the XRD pattern, it was confirmed that the zeolite membrane was composed of CHA-type zeolite.

The $SiO_2/Al_2O_3$ molar ratios (SAR) of the surface portion and the center portion of the zeolite membrane of the membrane composite 4 were found to be 36.2 for the surface portion SAR(C) and 38.3 for the center portion SAR (D). Furthermore, the ratio C/D of these SARs was 0.95. The surface SAR was 34.7.

Under a supply gas pressure of 0.3 MPaG, the membrane composite 4 had a $CF_4$ permeance of $3.0 \times 10^{-9}$ mol/($m^2 \cdot s \cdot Pa$) and an $SF_6$ permeance of $3.4 \times 10^{-9}$ mol/($m^2 \cdot s \cdot Pa$). The result of pervaporation revealed that the permeation amount $Q_w$ of water was 2,604 g/($m^2 \cdot h$), and the permeation amount $Q_a$ of IPA was 2 g/($m^2 \cdot h$). The product of Qa and the membrane thickness was 17.8 $g \cdot \mu m/(m^2 \cdot h)$.

[Production and evaluation of membrane composite 5]

(1) Preparation of reaction mixture for hydrothermal synthesis

To a solution obtained by mixing 189.5 g of a 1 mol/L aqueous NaOH solution, 170.1 g of a 25 wt% aqueous KOH solution, and 14,709 g of water, 25.6 g of aluminum hydroxide (containing 53.9% by mass of $Al_2O_3$, manufactured by Kyowa Chemical Industry Co., Ltd.) was added and dissolved by stirring to prepare a transparent solution.

To the obtained transparent solution, 401.7 g of an aqueous N,N,N-trimethyl-1-adamantanammonium hydroxide (hereinafter referred to as "TMADAOH") solution (containing 20% by mass of TMADAOH, manufactured by SACHEM, Inc.) was added as an organic template. Furthermore, 1,421.1 g of colloidal silica (manufactured by Nissan Chemical Corporation, SNOWTEX-40) was added, and then an obtained mixed solution was stirred for 2 hours. An aqueous reaction mixture was thus obtained. The composition (molar ratio) of this reaction mixture was such that $SiO_2/Al_2O_3/NaOH/KOH/H_2O/TMADAOH = 1/0.014/0.02/0.08/95/0.04$ and $SiO_2/Al_2O_3 = 70$.

(2) Preparation of inorganic porous support

A porous alumina tube (outer diameter: 12 mm, inner diameter: 9 mm, length: 1,002 mm) was washed with water flowing in the porous alumina tube, and then dried. An inorganic porous support was thus obtained.

(3) Preparation of seed crystals

Hydrothermal synthesis was carried out at 160°C for 2 days at a gel composition (molar ratio) of $SiO_2/Al_2O_3/NaOH/KOH/H_2O/TMADAOH = 1/0.017/0.12/0.055/20/0.07$. A generated precipitate was filtered, washed with water, and dried. CHA-type zeolite grains were thus obtained, and were used as seed crystals. The grain diameter of the seed crystals was approximately 1 $\mu$m.

(4) Support step)

The seed crystals were dispersed in water. In a dispersion thus obtained, the above support was immersed for a predetermined period of time, and then dried at 120°C for not less than 2 hours, so that the seed crystals were adhered to the support. The amount of increase in mass after the drying with respect to the mass of the support was determined, and the amount of seed crystals adhered was determined from the surface area of the support that were in contact with the above dispersion. The amount of seed crystals adhered was 1 $g/m^2$.

(4) Hydrothermal synthesis

The support having the seed crystals adhered thereto was housed in a PFA inner cylinder (length: 1,200 mm) in the autoclave, and the above-described reaction mixture was put in the inner cylinder so that the support was immersed in the reaction mixture. The autoclave was then sealed, and the support was heated at 180°C for 18 hours, in a static state, under the autogenous pressure. After a predetermined period of time elapsed, the support was allowed to cool, taken out from the reaction mixture, washed, and dried at 120°C for not less than 2 hours. The support was then calcined in air in an electric furnace at 500°C for 5 hours. The temperature increase rate and the temperature decrease rate during this calcination were both set to 0.5°C/min. A membrane composite 5 having a zeolite membrane of CHA-type zeolite formed on the outer circumferential surface of the support was thus obtained.

From the difference between the mass of the membrane composite 5 and the mass of the support, the mass of CHA-type zeolite crystallized on the support was determined. The mass of the CHA-type zeolite in the membrane composite 5 was 32 $g/m^2$.

(Characteristics of membrane composite)

From XRD measurement with respect to the membrane composite 5, it was confirmed that the CHA-type zeolite was formed. The ratio of the integrated intensity $I_{111}$ of a peak at around $2\theta=17.9°$ to the integrated intensity $I_{20-1}$ of a peak at around $2\theta=20.8°$ in the XRD was 0.4. The ratio of the integrated intensity $I_{100}$ of a peak at around $2\theta=9.6°$ to the integrated intensity $I_{20-1}$ of a peak at around $2\theta=20.8°$ in the XRD was 5.4.

The incident angle of the X-rays with respect to the surface incident angle in the GIXD of the membrane composite 5 was set to 0.5°. The ratio of the integrated intensity $I_{100}$ of a peak at around $2\theta=9.6°$ to the integrated intensity $I_{20-1}$ of a peak at around $2\theta=20.8°$ in GIXD was 7.8. The ratio of the integrated intensity $I_{100}$ of a peak at around $2\theta=9.6°$ to the integrated intensity $I_{1-11}$ of a peak at around $2\theta=16.2°$ in GIXD was 14.1. The results are indicated in Table 2.

The surface SAR of the zeolite membrane of the membrane composite 5 was 54. The thickness of the zeolite membrane of the membrane composite 5 was 2.8 $\mu$m on average.

At a supply gas pressure of 0.1 MPaG and a temperature of 50°C, the $CO_2$ permeance of the membrane composite 5 was $1.58 \times 10^{-6}$ [$mol \cdot (m^2 \cdot s \cdot Pa)^{-1}$]. The permeances of the membrane composites with respect to $CO_2$, $CH_4$, $N_2$, He, and $H_2$ under a supply gas pressure of 0.3 MPaG are indicated in Table 1. The ideal separation factor $\alpha$ for carbon dioxide and methane at 50°C was 159.

[Production and evaluation of membrane composite 6]

(Support step)

A porous alumina tube (outer diameter: 12 mm, inner diameter: 9 mm, average pore size: 0.86 $\mu$m) was used as the porous support. Used as the zeolite seed crystals were CHA-type zeolite seed crystals which were obtained by (i) adding, to a gel composition of $SiO_2/Al_2O_3/NaOH/KOH/H_2O/N,N,N$-trimethyl-1-adamantanammonium hydroxide (TMADAOH) = 1.00/0.0165/0.120/0.0550/19.897/0.07, CHA-type zeolite as seed crystals in an amount of 2% by weight relative to the $SiO_2$ and (ii) carrying out crystallization through hydrothermal synthesis carried out at 160°C for 2 days. The average grain size of the zeolite seed crystals was 0.98 $\mu$m.

The zeolite seed crystals in an amount of 0.1% by mass were dispersed in water. In a dispersion thus obtained, the porous support was immersed for 10 seconds, and then dried at 120°C for not less than 2 hours so that the zeolite seed crystals were supported on the porous support. When the masses of the porous support before and after the support were measured, the support amount of the zeolite seed crystals was 1.25 $g/m^2$.

(Hydrothermal synthesis step)

To desalted water, a 25% aqueous KOH solution and a 1N aqueous NaOH solution were added, and aluminum hydroxide (containing 54% by mass of $Al_2O_3$, manufactured by Kyowa Chemical) was added and dissolved to prepare a transparent solution. Furthermore, an aqueous N,N,N-trimethyl-1-adamantanammonium hydroxide (hereinafter referred to as "TMADAOH") solution (containing 20% by mass of TMADAOH, manufactured by SACHEM, Inc.) was added as an organic template. Thereafter, colloidal silica (SNOWTEX ST-S, manufactured by Nissan Chemical Corporation) was added, and stirring was carried out for not less than 120 minutes to prepare an aqueous reaction mixture. The composition (molar ratio) of this aqueous reaction mixture was such that $SiO_2/Al_2O_3/NaOH/KOH/H_2O/TMADAOH$ = 1.0/0.014/0.02/0.08/95/0.04 and $SiO_2/Al_2O_3$ = 70.0.

The support having the seed crystals adhered thereto was vertically immersed in a reaction vessel containing the above aqueous reaction mixture, and then the reaction vessel was sealed. The reaction vessel was heated at 180°C for 18 hours, in a static state, under autogenous pressure. In doing so, the ratio between the aqueous reaction mixture and the support was such that the amount of the aqueous reaction mixture was approximately 1,680 g per meter of the support, and the entire support was brought into the state of being in contact with the aqueous reaction mixture. After a predetermined period of time elapsed, the support was allowed to cool before a zeolite membrane composite was taken out from the aqueous reaction mixture and washed, and the zeolite membrane composite was then dried at 120°C for not less than 2 hours.

(Removal step)

After the drying, the membrane composite was calcined in an electric furnace at 500°C for 10 hours so that the organic template remaining in the porous support was removed, and a porous support-zeolite membrane composite 6 was obtained. The temperature increase rate and the temperature decrease rate during the calcination were both 0.5°C/min.

(Pressure treatment step)

As the pressure treatment, an operation in which, using desalted water as a solvent, water pressure of 10 MPaG was applied to the outer side of a membrane for several seconds and then released was repeated 30 times.

Specifically, the membrane composite was set in a water-sealed module, and then pressurized by supplying water via a water hydraulic pump (T-100K, manufactured by Kyowa). Note that one end of the zeolite membrane composite was sealed with a plug, and the other end was sealed with a top insert having a hole. The zeolite membrane composite had a structure (leak) such that the inside of the zeolite membrane composite was in communication with the outside of the autoclave through the hole in the top insert. During pressurization, the inside of a support was kept at atmospheric pressure.

(Characteristics of membrane composite)

From the difference between the mass of the membrane composite 6 and the mass of the porous support, the mass of the zeolite that crystallized to form a membrane on the porous support was found to be 32.2 $g/m^2$.

The thickness of the zeolite membrane of the obtained membrane composite 6 was approximately 2.5 $\mu$m. In the XRD pattern, ratio (peak intensity $I_{111}$ at around $2\theta$=17.9°) / (peak intensity $I_{20-1}$ at around $2\theta$=20.8°) was 0.44, and ratio (peak intensity $I_{100}$ at around $2\theta$=9.6°) / (peak intensity $I_{20-1}$ at around $2\theta$=20.8°) was 3.05. The ratio (integrated peak intensity $I_{111}$ at around $2\theta$=17.9°) / (integrated peak intensity $I_{20-1}$ at around $2\theta$=20.8°) was 0.50, and the ratio (integrated peak intensity $I_{100}$ at around $2\theta$=9.6°) / (integrated peak intensity $I_{20-1}$ around $2\theta$=20.8°) was 6.35. From the XRD pattern, it was confirmed that the zeolite membrane was composed of CHA-type zeolite.

The incident angle of the X-rays with respect to the surface incident angle in the GIXD was set to 0.5°. The results are indicated in Table 2.

The SAR of the surface of the membrane composite 6 was 54.1.

Under a supply gas pressure of 0.1 MPaG, the membrane composite 6 had a $CF_4$ permeance of 2.3 $\times$ 10$^{-9}$

mol/(m$^2$·s·Pa), a $CO_2$ permeance of 1.4 × 10$^{-6}$ mol/(m$^2$·s·Pa), and an $SF_6$ permeance of 1.6 × 10$^{-9}$ mol/(m$^2$·s·Pa). The permeances of the membrane composite 1 with respect to $CO_2$, $CH_4$, $N_2$, He, $H_2$, $SF_6$, and $CF_4$ under a supply gas pressure of 0.3 MPaG are indicated in Table 1. The result of pervaporation revealed that the permeation amount $Q_w$ of water was 2,356 g/(m$^2$·h), and the permeation amount $Q_a$ of IPA was 64 g/(m$^2$·h). The product of Qa and the membrane thickness was 160 g·μm/(m$^2$·h).

[Production and evaluation of membrane composite 7]

A membrane composite 7 was produced in the same manner as the membrane composite 5, except that the $SiO_2/Al_2O_3$ molar ratio was set to 1:0.0077, and $SiO_2/Al_2O_3$ = 130 in the hydrothermal synthesis step.

(Characteristics of membrane composite)

From the difference between the mass of the membrane composite 7 and the mass of the porous support, the mass of the zeolite that crystallized to form a membrane on the porous support was found to be 31.9 g/m$^2$.
The thickness of the zeolite membrane of the obtained membrane composite 7 was approximately 3.0 μm. In the XRD pattern, ratio (peak intensity $I_{111}$ at around 2θ=17.9°) / (peak intensity $I_{20-1}$ at around 2θ=20.8°) was 0.47, and ratio (peak intensity $I_{100}$ at around 2θ=9.6°) / (peak intensity $I_{20-1}$ at around 2θ=20.8°) was 3.56. The ratio (integrated peak intensity $I_{111}$ at around 2θ=17.9°) / (integrated peak intensity $I_{20-1}$ at around 2θ=20.8°) was 0.41, and the ratio (integrated peak intensity $I_{100}$ at around 2θ=9.6°) / (integrated peak intensity $I_{20-1}$ around 2θ=20.8°) was 6.08. From the XRD pattern, it was confirmed that the zeolite membrane was composed of CHA-type zeolite.
The surface SAR of the membrane composite 7 was 51.5.
The incident angle of the X-rays with respect to the surface incident angle in the GIXD was set to 0.3°. The results are indicated in Table 2.
Under a supply gas pressure of 0.1 MPaG, the membrane composite 7 had a $CF_4$ permeance of 9.2 × 10$^{-9}$ mol/(m$^2$·s·Pa), a $CO_2$ permeance of 2.2 × 10$^{-6}$ mol/(m$^2$·s·Pa), and an $SF_6$ permeance of 8.2 × 10$^{-9}$ mol/(m$^2$·s·Pa). The permeances of the membrane composite 1 with respect to $CO_2$, $CH_4$, $N_2$, He, $H_2$, $SF_6$, and $CF_4$ under a supply gas pressure of 0.3 MPaG are indicated in Table 1. The result of pervaporation revealed that the permeation amount $Q_w$ of water was 3,053 g/(m$^2$·h), and the permeation amount $Q_a$ of IPA was 121 g/(m$^2$·h). The product of Qa and the membrane thickness was 363 g·μm/(m$^2$·h).

[Production and characteristics of membrane composite 8]

(Support step)

A porous alumina tube (outer diameter: 12 mm, inner diameter: 9 mm) was used as the porous support. Used as the zeolite seed crystals were CHA-type zeolite seed crystals which were obtained by (i) adding, to a gel composition of $SiO_2/Al_2O_3$/NaOH/KOH/$H_2O$/N,N,N-trimethyl-1-adamantanammonium hydroxide (TMADAOH) = 1.00/0.033/0.1/0.06/40/0.07, CHA-type zeolite as seed crystals in an amount of 2% by weight relative to the $SiO_2$ and (ii) carrying out crystallization through hydrothermal synthesis carried out at 160°C for 2 days. The average grain size of the zeolite seed crystals was 0.5 μm.
The porous support was immersed in a zeolite seed crystal dispersion, and then dried at 120°C for not less than 2 hours so that the zeolite seed crystals were supported on the porous support. When the masses of the porous support before and after the support were measured, the support amount of the zeolite seed crystals was 9.9 g/m$^2$.

(Hydrothermal synthesis step)

To desalted water, a 1N aqueous KOH solution and a 1N aqueous NaOH solution were added, and aluminum hydroxide (containing 54% by mass of $Al_2O_3$, manufactured by Aldrich, Inc.) was added and dissolved to prepare a transparent solution. Furthermore, an aqueous N,N,N-trimethyl-1-adamantanammonium hydroxide (hereinafter referred to as "TMADAOH") solution (containing 20% by mass of TMADAOH, manufactured by SACHEM, Inc.) was added as an organic template. Thereafter, colloidal silica (SNOWTEX ST-40, manufactured by Nissan Chemical Corporation) was added, and stirring was carried out for not less than 120 minutes to prepare an aqueous reaction mixture. The composition (molar ratio) of this aqueous reaction mixture was such that $SiO_2/Al_2O_3$/NaOH/KOH/$H_2O$/TMADAOH O/TMADAOH O/TMADAOH = 1.0/0.01/0.15/0.1/100/0.04 and $SiO_2/Al_2O_3$ = 100.
The support having the seed crystals adhered thereto was vertically immersed in a reaction vessel containing the above aqueous reaction mixture, and then the reaction vessel was sealed. The reaction vessel was heated at 180°C for 18 hours, in a static state, under autogenous pressure. In doing so, the ratio between the aqueous reaction mixture and the support was such that the amount of the aqueous reaction mixture was approximately 1,680 g per meter of the support, and the entire support was brought into the state of being in contact with the aqueous reaction mixture. After a predetermined period of time elapsed, the support was allowed to cool before a zeolite membrane composite was taken out from the aqueous reaction mixture and washed, and the zeolite membrane composite was then dried at 120°C for not less than 2 hours.

(Removal step)

After the drying, the membrane composite was calcined in an electric furnace at 500°C for 10 hours so that the organic template remaining in the porous support was removed, and a porous support-zeolite membrane composite 1 of Example 1 was obtained. The temperature increase rate and the temperature decrease rate during the calcination were both 0.5°C/min.

(Characteristics of membrane composite)

From the difference between the mass of the membrane composite 8 and the mass of the porous support, the mass of the zeolite that crystallized to form a membrane on the porous support was found to be 122 g/m$^2$.

The thickness of the zeolite membrane of the obtained membrane composite 8 was approximately 8.0 $\mu$m. In the XRD pattern, ratio (peak intensity $I_{111}$ at around $2\theta=17.9°$) / (peak intensity $I_{20-1}$ at around $2\theta=20.8°$) was 0.30, and ratio (peak intensity $I_{100}$ at around $2\theta=9.6°$) / (peak intensity $I_{20-1}$ at around $2\theta=20.8°$) was 1.99. The ratio (integrated peak intensity $I_{111}$ at around $2\theta=17.9°$) / (integrated peak intensity $I_{20-1}$ at around $2\theta=20.8°$) was 0.50, and the ratio (integrated peak intensity $I_{100}$ at around $2\theta=9.6°$) / (integrated peak intensity $I_{20-1}$ around $2\theta=20.8°$) was 3.10. From the XRD pattern, it was confirmed that the zeolite membrane was composed of CHA-type zeolite.

The SAR of the surface portion of the membrane composite 8 was 40.2.

The incident angle of the X-rays with respect to the surface incident angle in the GIXD was set to 0.4°. The results are indicated in Table 2.

At a supply gas pressure of 0.1 MPaG, the $CO_2$ permeance of the membrane composite 8 was $2.4 \times 10^{-6}$ mol/(m$^2$·s·Pa). The permeances of the membrane composite 8 with respect to $CO_2$, $CH_4$, $N_2$, He, and $H_2$ under a supply gas pressure of 0.1 MPaG are indicated in Table 1.

The evaluation results of the membrane composites 1 to 8 are indicated in Table 1 and Table 2.

Table 1

| Gases | Supply gas pressure (MPaG) | Permeance (mol/(m$^2$·s·Pa)) | | | | | | |
|-------|------|--------------------------|--------------------------|--------------------------|--------------------------|--------------------------|--------------------------|--------------------------|
| | | Membrane composite 1 | Membrane composite 2 | Membrane composite 4 | Membrane composite 5 | Membrane composite 6 | Membrane composite 7 | Membrane composite 8 |
| $CO_2$ | 0.3 | 3.7E-07 | 2.8E-07 | | | | | |
| $CH_4$ | 0.3 | 2.1E-09 | 5.4E-09 | | | | | |
| $N_2$ | 0.3 | 2.4E-08 | 2.7E-08 | | | | | |
| He | 0.3 | 4.8E-08 | 7.1E-08 | | | | | |
| $H_2$ | 0.3 | 1.4E-07 | 1.6E-07 | | | | | |
| $SF_6$ | 0.3 | 1.5E-11 | 8.4E-10 | 3.4E-09 | | | | |
| $CF_4$ | 0.3 | 1.5E-11 | 1.1E-09 | 3.0E-09 | | | | |
| $CO_2$ | 0.1 | 4.5E-07 | 3.6E-07 | | 1.6E-06 | 1.4E-06 | 2.2E-06 | 2.4E-06 |
| $CH_4$ | 0.1 | 2.2E-09 | 5.5E-09 | | 1.0E-08 | 6.9E-09 | 2.4E-08 | 3.9E-08 |
| $N_2$ | 0.1 | 1.3E-07 | 1.6E-07 | | 5.4E-07 | 5.1E-07 | 8.3E-07 | 1.0E-06 |
| He | 0.1 | 2.4E-08 | 2.7E-08 | | 9.7E-08 | 8.2E-08 | 1.3E-07 | 1.8E-07 |
| $H_2$ | 0.1 | 4.8E-08 | 7.1E-08 | | 1.9E-07 | 1.8E-07 | 3.0E-07 | 4.3E-07 |
| $SF_6$ | 0.1 | | 8.4E-10 | | | 1.6E-09 | 8.2E-09 | |
| $CF_4$ | 0.1 | | 1.1E-09 | | | 2.3E-09 | 9.2E-09 | |

# EP 4 691 614 A1

Table 2

| | | Membrane composite No. | | | | | | |
|---|---|---|---|---|---|---|---|---|
| | | 1 | 2 | 4 | 5 | 6 | 7 | 8 |
| Support amount of seed crystals (g/m$^2$) | | 0.67 | 1.70 | 0.40 | 1.00 | 1.25 | 1.22 | 9.90 |
| Thickness of zeolite membrane ($\mu$m) | | 9.4 | 17.1 | 8.9 | 2.8 | 2.5 | 3.0 | 8 |
| Center portion $SiO_2/Al_2O_3$ | | 30.1 | 29.5 | 38.3 | | | | |
| Surface portion $SiO_2/Al_2O_3$ | | 30.8 | 19.3 | 36.2 | | | | |
| Surface portion/center portion SiO2/Al2O3 | | 1.02 | 0.65 | 0.95 | | | | |
| Surface $SiO_2/Al_2O_3$ (area) | | | | | | | | 40.2 |
| Surface $SiO_2/Al_2O_3$ (point) | | 28.7 | 20.8 | 34.7 | 54.0 | 54.1 | 51.5 | |
| XRD peak intensity ratio | $I_{111}/I_{20-1}$ | 0.65 | 2.43 | 0.49 | 0.44 | 0.44 | 0.47 | 0.30 |
| | $I_{100}/I_{20-1}$ | 1.52 | 1.46 | 1.63 | 3.05 | 3.05 | 3.56 | 2.15 |
| | $I_{100}/I_{111}$ | 2.34 | 0.60 | 3.30 | 6.86 | 6.86 | 7.58 | 7.26 |
| XRD integrated intensity ratio | $I_{111}/I_{20-1}$ | 0.50 | 1.04 | 0.49 | 0.40 | 0.50 | 0.41 | 0.30 |
| | $I_{100}/I_{20-1}$ | 2.84 | 3.29 | 1.92 | 5.35 | 6.35 | 6.08 | 3.13 |
| | $I_{100}/I_{111}$ | 5.66 | 3.15 | 3.94 | 13.54 | 12.75 | 14.74 | 10.36 |
| GIXD integrated intensity ratio | $I_{1-11}/I_{20-1}$ | 0.64 | 0.70 | | 1.15 | 1.15 | 0.76 | 0.51 |
| | $I_{100}/I_{20-1}$ | 32.67 | 4.62 | | 7.80 | 45.94 | 11.46 | 2.90 |
| | $I_{100}/I_{1-11}$ | 50.97 | 6.57 | | 14.10 | 39.86 | 15.02 | 5.70 |
| Pervaporation | Water permeation amount $Q_w$ (g) | 2575 | 3471 | 2604 | | 2356 | 3053 | |
| | IPA permeation amount $Q_a$ (g) | 2 | 33 | 2 | | 64 | 121 | |
| | $Q_w/Q_a$ | 1288 | 105 | 1302 | | 37 | 25 | |
| | Qa $\times$ thickness | 18.8 | 564.3 | 17.8 | | 160 | 363 | |

As indicated in Table 1, the membrane composite 1 exhibited lower $CF_4$ permeance, lower $SF_6$ permeance, and lower $CH_4$ permeance than the membrane composite 2. From this, it is considered that the membrane composite 1 had fewer defects in the zeolite membrane than conventional membrane composites. The membrane composite 1 exhibited $CO_2$ permeance, $N_2$ permeance, He permeance, and $H_2$ permeance that were comparable to those of the membrane composite 2. From this, it is considered that the membrane composite 1 allows small molecules, such as water, to permeate therethrough to a degree comparable to those for conventional membrane composites. From the above, it is considered that the membrane composite 1, which has fewer defects, is less permeable to relatively large molecules, such as organic compounds, than conventional membrane composites, while being almost as permeable to relatively small molecules as conventional membrane composites, and therefore has excellent separation performance.

A low permeability to $SF_6$ indicates being less defective. That is, Qa is considered to decrease accordingly. When the effect of the thickness is considered, the product of Qa and the thickness is supposed to decrease. As can be seen from the above results, when the permeability to $SF_6$ is lower, the product of Qa and the thickness is smaller, and the supposition is therefore proved. It is therefore understood that when the permeability to $SF_6$ is lower, the selectivity is more improved.

Comparisons between the membrane composite 1 and the membrane composite 2 and between the membrane composite 5 and the membrane composite 8 show that the peak intensity $I_{111}$ at around $2\theta=17.9°$ / $I_{20-1}$ of the XRD varies, and the (1,1,1) orientation is increased.

As indicated in Table 2, the membrane composite 1 exhibited a higher ratio ($Q_w/Q_a$) of water permeation amount $Q_w$ relative to the IPA permeation amount $Q_a$ ($Q_w/Q_a$) than the membrane composite 2, and provided purified IPA of high purity. The membrane composite 1 has therefore been proved to have excellent separation performance. In the prior art, when the content, in fluid subjected to separation, of a substance having a high ability of permeation (water in Examples and Comparative Example) is reduced, the partial pressure difference, which serves as the driving force for separation, decreases, and the permeation amount of a substance having a low ability of permeation (IPA in Examples and Comparative Example) therefore tends to increase. In contrast, for the membrane composite 1, even in a region where the content of the substance having a low ability of permeation was not more than 5%, the permeation amount of the substance having a high ability of permeation is less likely to increase, high separation performance was exhibited.

[Evaluation of acid resistance]

For each of the membrane composite 1 and the membrane composite 2, acid resistance was evaluated by determining the permeability characteristics before and after acid immersion.

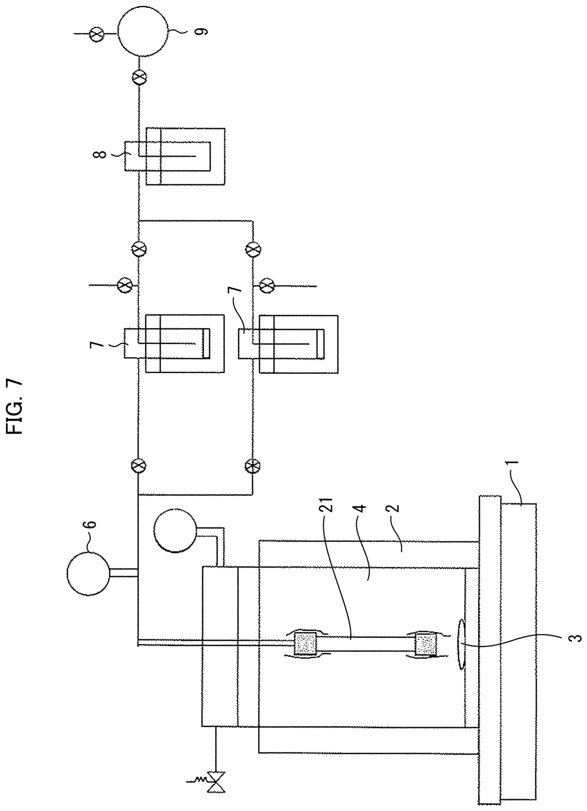

The configuration of a device used in the pervaporation method is schematically illustrated in Fig. 7. The membrane composite 5 is disposed in a separation target liquid 4 in a container. The container includes a stirrer 3, and the container is disposed in a hot water bath 2. Thus, the device is configured to keep the separation target liquid 4 at a constant temperature. The membrane composite 5 is connected to a vacuum pump 9 via a Pirani gauge 6, a permeate liquid collection trap 7, and a cold trap 8. Thus, the device is configured to be capable of reducing the pressure of the inner side of the membrane composite 5 to any degree of vacuum.

(1) Immersion into acid

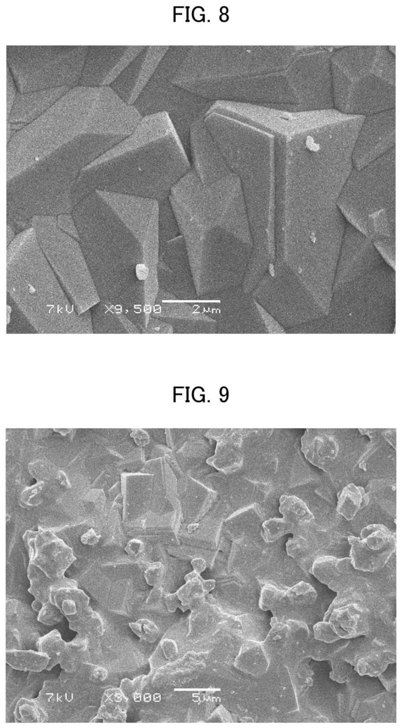

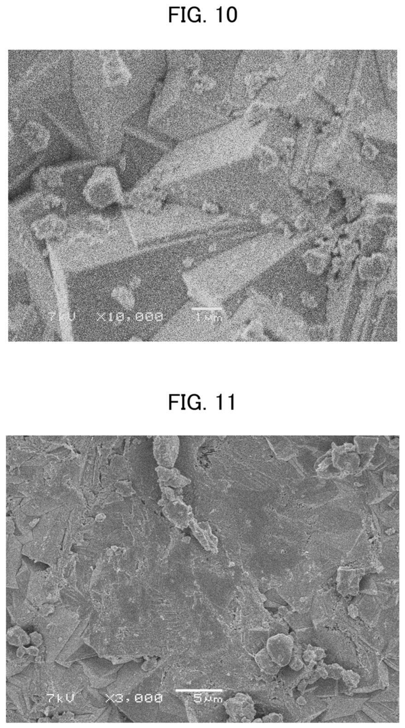

The membrane composite 1 and the membrane composite 2 were each immersed in an approximately 2.5% by mass aqueous acetic acid solution at 150°C for 2 days. An SEM photograph of the zeolite membrane surface of the membrane composite 1 before the acid immersion is illustrated in Fig. 8, and an SEM photograph of the zeolite membrane surface of the membrane composite 1 before the acid immersion is illustrated in Fig. 9. An SEM photograph of the zeolite membrane surface of the membrane composite 2 before the acid immersion is illustrated in Fig. 10, and an SEM photograph of the zeolite membrane surface of the membrane composite 2 before the acid immersion is illustrated in Fig. 11.

(2) Permeation property test

For each of the membrane composite 1 and the membrane composite 2, before and after the above-described acid immersion, separation was carried out to selectively allow the permeation of water from an aqueous solution of water/2-propanol (IPA) (10/90% by mass) at 70°C via the pervaporation method.

In the device of Fig. 7, the difference in pressure between the outer side of the membrane composite 5, with which the separation target liquid 4 was in contact, and the inner side of the composite 5, the pressure of which was reduced via the vacuum pump 9, was set at approximately 1 atm pressure ($1.01 \times 10^5$ Pa), and the permeate substance (water) in the separation target liquid 4 was subjected to pervaporation to permeate through the membrane composite 5. The permeability characteristics of the membrane composite 5 were determined on the basis on the amount of permeate substance collected by the permeate liquid collection trap 7. The results are indicated in Table 1.

In Table 3, "Q" is the permeation flux of the entire permeate liquid, "Qw" is the permeation flux of water in the permeate liquid, and "Qa" is the permeation flux of IPA in the permeate liquid. Cw is the concentration of water in the permeate liquid. In these symbols, the index "1" of these symbols refers to those before the acid immersion, and the index "2" refers to those after the acid immersion.

Table 3

| Membrane composite No. | Before acid immersion | | | | After acid immersion | | | |
|---|---|---|---|---|---|---|---|---|
| | Q1 | Qw1 | Qa1 | Cw1 (% by mass) | Q2 | Qw2 | Qa2 | Cw2 (% by mass) |
| 1 | 1.38 | 1.38 | 0 | 99.8 | 1.19 | 1.07 | 0.12 | 89.9 |
| 2 | 1.85 | 1.79 | 0.06 | 96.8 | 1.1 | 0.90 | 0.2 | 82.0 |

[Discussion]

As is clear from Table 3, the decrease in the permeability characteristics of the membrane composite 1 after the acid immersion is smaller, and the decrease in the permeability characteristics of the membrane composite 2 after the acid immersion is greater. Furthermore, as is clear from Fig. 8 to Fig. 11, in the membrane composite 1, the edge portions due to the zeolite crystal orientation remain even after the acid immersion, whereas in the membrane composite 2 after the acid immersion, such edge portions have almost been lost. It is understood that the membrane composite 1 has a high SAR even in the surface portion of the zeolite membrane, and therefore exhibits more excellent acid resistance than the membrane composite 2.

Industrial Applicability

For example, the present invention can be used to separate water from a water-containing organic mixture, which is a mixture of water and an organic compound such as an organic solvent, and to concentrate the organic compound. Further, the present invention can be suitably used in the production of a purified component obtained by removing water from a water-containing component that may contain acid.

Reference Signs List

1 Stirrer
2 Hot water bath
3 Stirrer
4 Separation target liquid
5 Zeolite membrane composite
6 Pirani gauge
7 Permeate liquid collection trap
8 Cold trap
9 Vacuum pump
10, 21 Membrane composite
11 Zeolite membrane
11A Surface portion
11B Center portion
11C Bottom portion
12 Porous support (inorganic porous support)
22 Pressure-resistant container
23 End pin
24 Connection part
25 Pressure gauge
26 Back-pressure valve
27 Supply gas
28 Permeate gas
29 Exhaust gas
30 Pipe
31 Membrane module
32 Vacuum pump
33 Glass trap
34 Circulation pump
35A, 35B Temperature regulation unit
36 Solvent tank
V1, V2, V3, V4, V5 Valve

**Claims**

1. A porous support-zeolite membrane composite, the porous support-zeolite membrane composite having a $CF_4$ permeance of not more than $5.0 \times 10^{-9}$ mol/(m²·s·Pa),
the zeolite membrane having a thickness of not more than 15 $\mu$m.

2. A porous support-zeolite membrane composite, comprising

a porous support and a zeolite membrane formed on the porous support,
the porous support-zeolite membrane composite having an $SF_6$ permeability of not more than $4.5 \times 10^{-8}$ mol·$\mu$m/(m²·s·Pa),
the zeolite membrane having a surface $SiO_2/Al_2O_3$ molar ratio being not less than 25.

3. A porous support-zeolite membrane composite, comprising

a porous support and a zeolite membrane formed on the porous support,
the porous support-zeolite membrane composite having a $CF_4$ permeance of not more than $1.0 \times 10^{-9}$ mol/(m$^2$·s·Pa).

4. The porous support-zeolite membrane composite according to any one of claims 1 to 3, wherein
in an X-ray diffraction pattern obtained by irradiating a surface of the zeolite membrane with X-rays at a minimum incident angle that allows the X-rays to pass through the zeolite membrane, an integrated intensity of a peak at around 2θ=9.6° is not less than 6.0 times an integrated intensity of a peak at around 2θ=20.8°.

5. The porous support-zeolite membrane composite according to claim 1 or 3, wherein
a surface $SiO_2/Al_2O_3$ molar ratio in a surface portion of the zeolite membrane is not less than 25.

6. The porous support-zeolite membrane according to claim 2, wherein
the zeolite membrane has a thickness of not more than 15 μm.

7. The porous support-zeolite membrane composite according to claim 4, wherein
in an X-ray diffraction pattern obtained by irradiating a surface of the zeolite membrane with X-rays, a peak intensity $I_{111}$ at around 2θ=17.9° is not less than 0.3 times but less than 1.0 times a peak intensity $I_{20-1}$ at around 2θ=20.8°.

8. The porous support-zeolite membrane composite according to claim 4, wherein
in an X-ray diffraction pattern obtained by irradiating a surface of the zeolite membrane with X-rays, a ratio $I_{100}/I_{20-1}$ of a peak intensity $I_{100}$ at around 2θ=9.6° to a peak intensity $I_{20-1}$ at around 2θ=20.8° is not less than 0.7.

9. The porous support-zeolite membrane composite according to any one of claims 1 to 3, wherein
a ratio C/D of an $SiO_2/Al_2O_3$ molar ratio C in a surface portion of the zeolite membrane to an $SiO_2/Al_2O_3$ molar ratio D in a center portion of the zeolite membrane in a membrane thickness direction is less than 1.5.

10. The porous support-zeolite membrane composite according to any one of claims 1 to 3, wherein
the zeolite membrane has a thickness of not less than 3 μm.

11. The porous support-zeolite membrane composite according to any one of claims 1 to 3, wherein
a minimum value of the thickness of the zeolite membrane is not less than 5 μm.

12. The porous support-zeolite membrane composite according to any one of claims 1 to 3, wherein
the zeolite membrane is composed of CHA-type zeolite.

13. A purified component production method, comprising

bringing a mixture of a first component and a second component into contact with the porous support-zeolite membrane composite according to any one of claims 1 to 3, to obtain a first purified component, a second purified component, or both, wherein
the first component permeates through the zeolite membrane of the porous support-zeolite membrane composite, the second component does not permeate through the zeolite membrane of the porous support-zeolite membrane composite, the first purified component is the first component that has permeated through the zeolite membrane, and the second purified component is the second component that has not permeated through the zeolite membrane.

14. The purified component production method according to claim 13, wherein
both the first component and the second component are liquids that are miscible with each other.

15. The purified component production method according to claim 13, wherein
both the first component and the second component are gases.

16. The purified component production method according to claim 13, wherein
one of the first component and the second component is water, and the other is a water-soluble organic compound.

17. The purified component production method according to claim 13, wherein
one of the first component and the second component is water, and the other contains acid.

**18.** A purified organic compound production method, comprising

using a porous support-zeolite membrane composite which has a porous support and a zeolite membrane formed on the porous support, to obtain a purified organic compound from a mixture that contains an organic compound, wherein

said porous support-zeolite membrane composite is the porous support-zeolite membrane composite according to any one of claims 1 to 3.

FIG. 1

FIG. 2

FIG. 3

FIG. 4

FIG. 5

## FIG. 6

FIG. 7

EP 4 691 614 A1

FIG. 8

FIG. 9

FIG. 10

FIG. 11

## INTERNATIONAL SEARCH REPORT

| International application No. |
|---|
| **PCT/JP2024/013530** |

**A. CLASSIFICATION OF SUBJECT MATTER**

*B01D 71/02*(2006.01)i; *B01D 69/00*(2006.01)i; *B01D 69/02*(2006.01)i; *B01D 69/10*(2006.01)i; *B01D 69/12*(2006.01)i; *C01B 39/04*(2006.01)i; *C01B 39/48*(2006.01)i
FI: B01D71/02; B01D69/00; B01D69/02; B01D69/10; B01D69/12; C01B39/04; B01D71/02 500; C01B39/48

According to International Patent Classification (IPC) or to both national classification and IPC

**B. FIELDS SEARCHED**

Minimum documentation searched (classification system followed by classification symbols)
B01D71/02; B01D69/00; B01D69/02; B01D69/10; B01D69/12; C01B39/04; C01B39/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/195369 A1 (NGK INSULATORS LTD.) 01 October 2020 (2020-10-01) paragraphs [0025], [0026], [0029], [0032], [0043]-[0048] | 1-3, 5-6, 9-11, 13-18 |
| A | JP 2020-196008 A (JAPAN OIL, GAS AND METALS NATIONAL CORPORATION) 10 December 2020 (2020-12-10) paragraphs [0037], [0097], [0099], each example | 1-18 |
| A | WO 2022/190793 A1 (NGK INSULATORS LTD.) 15 September 2022 (2022-09-15) entire text, all drawings | 1-18 |
| A | WO 2014/157701 A1 (NGK INSULATORS LTD.) 02 October 2014 (2014-10-02) entire text, all drawings | 1-18 |
| A | WO 2017/081841 A1 (RESEARCH INSTITUTE OF INNOVATIVE TECHNOLOGY FOR THE EARTH) 18 May 2017 (2017-05-18) entire text, all drawings | 1-18 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

International application No.

**PCT/JP2024/013530**

### C.    DOCUMENTS CONSIDERED TO BE RELEVANT

| Category* | Citation of document, with indication, where appropriate, of the relevant passages | Relevant to claim No. |
|---|---|---|
| A | JP 2018-30130 A (MITSUBISHI CHEMICAL CORPORATION) 01 March 2018 (2018-03-01)<br>entire text, all drawings | 1-18 |
| A | JP 2013-226535 A (MITSUBISHI CHEMICAL CORPORATION) 07 November 2013 (2013-11-07)<br>entire text, all drawings | 1-18 |

Form PCT/ISA/210 (second sheet) (July 2022)

## INTERNATIONAL SEARCH REPORT
### Information on patent family members

International application No.

**PCT/JP2024/013530**

| Patent document cited in search report | Publication date (day/month/year) | Patent family member(s) | Publication date (day/month/year) |
|---|---|---|---|
| WO 2020/195369 A1 | 01 October 2020 | US 2021/0370236 A1 paragraphs [0030], [0031], [0034], [0037], [0048]-[0053] CN 113574017 A | |
| JP 2020-196008 A | 10 December 2020 | (Family: none) | |
| WO 2022/190793 A1 | 15 September 2022 | US 2023/0373799 A1 entire text, all drawings CN 116847924 A | |
| WO 2014/157701 A1 | 02 October 2014 | US 2016/0008771 A1 entire text, all drawings EP 2980020 A1 CN 105121346 A | |
| WO 2017/081841 A1 | 18 May 2017 | (Family: none) | |
| JP 2018-30130 A | 01 March 2018 | (Family: none) | |
| JP 2013-226535 A | 07 November 2013 | (Family: none) | |

Form PCT/ISA/210 (patent family annex) (July 2022)

**EP 4 691 614 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010098473 A
- WO 2015159986 A
- US 4544538 A
- US 20080075656 A1

**Non-patent literature cited in the description**

- COLLECTION OF SIMULATED XRD POWDER PATTERNS FOR ZEOLITE. 2001
- ATLAS OF ZEOLITE FRAMEWORK TYPES. ELSE-VIER, 2001
- COLLECTION OF SIMULATED XRD POWDER PATTERNS FOR ZEOLITE. ELSEVIER, 2001